(19)

Europäisches
Patentamt
European
Patent Office
Office européen
des brevets

(11)     **EP 2 544 455 A1**

(12)     # EUROPEAN PATENT APPLICATION
published in accordance with Art. 153(4) EPC

(43) Date of publication:
**09.01.2013 Bulletin 2013/02**

(51) Int Cl.:
***H04N 13/00*** *(2006.01)*

(21) Application number: **11750855.6**

(22) Date of filing: **07.03.2011**

(86) International application number:
**PCT/JP2011/055278**

(87) International publication number:
**WO 2011/108747 (09.09.2011 Gazette 2011/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2010 JP 2010049871**

(71) Applicant: **Yoshida, Kenji
Bunkyo-ku, Tokyo 112-0002 (JP)**

(72) Inventor: **Yoshida, Kenji
Bunkyo-ku, Tokyo 112-0002 (JP)**

(74) Representative: **Klunker . Schmitt-Nilson . Hirsch
Destouchesstraße 68
80796 München (DE)**

(54)     **INTERMEDIATE IMAGE GENERATION METHOD, INTERMEDIATE IMAGE FILE, INTERMEDIATE IMAGE GENERATION DEVICE, STEREOSCOPIC IMAGE GENERATION METHOD, STEREOSCOPIC IMAGE GENERATION DEVICE, AUTOSTEREOSCOPIC IMAGE DISPLAY DEVICE, AND STEREOSCOPIC IMAGE GENERATION SYSTEM**

(57)     In conventional multi-view stereoscopic image generation syst ems, stereoscopic images should be generated by performing co mplicated interpolation calculations using original images of a plurality of viewpoints in real time, consuming a large amo unt of resources and requiring a highly specialised and expen sive computer or the like. Furthermore, the inability to outp ut or transmit the original images of a plurality of viewpoint s in a standard format is a major challenge for the diffusion of the stereoscopic technology. By generating in advance int ermediate images which have the same resolution as a stereosc opic image that is the final output image, and which integrate pixels for respective viewpoints, generation of a stereoscop ic image is possible only by converting the pixel arrangement without using a high-speed and specialised computer or the li ke. Furthermore, using intermediate images in which images f or respective viewpoints are arranged in a shape of tiles, a c ompletely new stereoscopic image generation system can be rea lised in which a simple and low-cost stereoscopic image gener ation device generates stereoscopic images from intermediate images output or transmitted in a more standard format by a st andard image output device such as a Blu-ray player, an STB, o r an image distribution server.

FIG. 1A

FIG. 1B

61

STEREOSCOPIC IMAGE
GENERATION DEVICE

33

CENTRAL
PROCESSING UNIT

35

STORAGE DEVICE

FIG. 1C

41

FIRST INFORMATION
PROCESSING DEVICE

33

CENTRAL
PROCESSING UNIT

45

TRANSMITTING
DEVICE

35

STORAGE DEVICE

43

COMPRESSION
DEVICE

47

SECOND
INFORMATION
PROCESSING DEVICE

33

CENTRAL
PROCESSING UNIT

51

RECEIVING
DEVICE

35

STORAGE DEVICE

49

EXTRACTION
DEVICE

65

STEREOSCOPIC
IMAGE DISPLAY
DEVICE

## Description

Technical Field

The present invention relates to a method and a device that convert images of a plurality of viewpoints that are captured from a plurality of viewpoints for generating intermediate images and stereoscopic images, a system that generates stereoscopic images utilizing those method and device, and a device that displays the stereoscopic images.

Background Art

Conventionally, there has been widely utilized a technique that causes the eyes to see stereoscopic images by configuring a display screen by arraying images captured from a plurality of viewpoints for respective pixels or subpixels in a diagonal direction, and disposing a barrier therebefore to provide parallax (for example, Japanese Unexamined Patent Application Publication No. 2004-191570).

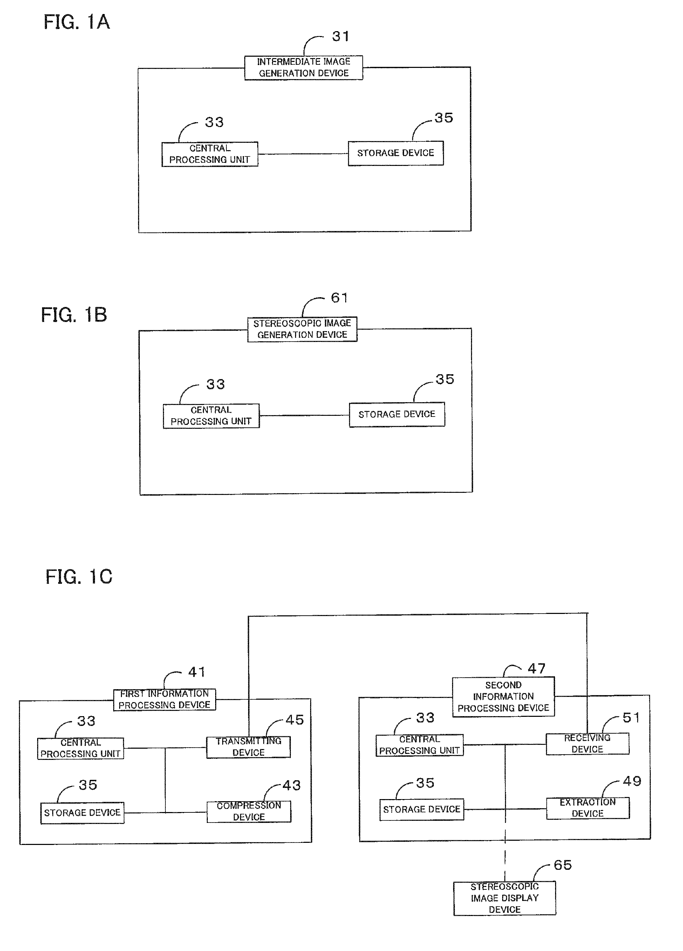

Also, as an existing technique that converts a pixel arrangement of an image to a pixel arrangement appropriate to a stereoscopic image display device, Japanese Unexamined Patent Application Publication No. 2004-179806 discloses a technique that converts a pixel arrangement of an image into a pixel arrangement appropriate to a stereoscopic image display device of a parallax barrier method in Paragraph 0088 and FIG. 1. These Paragraph 0088 and FIG. 1 disclose a stereoscopic image display device that comprises an image synthesis circuit therein as a technical solution for converting the pixel arrangement of an image to the one for stereoscopic display.

Also, the manuals of software "Display Configurator" and "3D Movie Center" provided by VisuMotion GmbH, disclose software that runs on a personal computer and is used for converting a pixel arrangement of a video image to the one for stereoscopic display.

Such a process for generating a stereoscopic image, generally, requires, as an indispensable element, a large-scale stereoscopic image display system, that is, a computer or the like that mounts a special and expensive graphic board that can execute complicated arithmetic processing at high speed for generating a stereoscopic image from captured images.

Summary of the Invention

Problems that the Invention is to Solve

However, as described above, large resources, such as a high speed CPU, a large volume memory, and a high performance graphic board, are consumed to provide a stereoscopic image, requiring a highly specialized and expensive computer or the like, which has been a major problem to popularize the stereoscopic image display technology.

In addition, there is a problem that, if an image file that can be already viewed stereoscopically is compressed, as the images that are captured from respective viewpoints are repeatedly arranged for respective pixels or subpixels, the images interfere one another, and, when the image file is extracted and reproduced, the image is too skewed that the image cannot be viewed stereoscopically any more. For this reason, stereoscopic images cannot be compressed. Thus, it is necessary to compress images of respective viewpoints and transmit or store the images in a storage medium, extract the images of respective viewpoints when generating a stereoscopic image, and perform complicated interpolating calculation at high speed to generate a stereoscopic image.

Further, the image formed by arranging images of respective viewpoints in a tile pattern often has different resolution and aspect ratio than those of a stereoscopic image, that is, a resolution of an autostereoscopic display. Particularly, as a resolution of certain extent or more is required for images of respective viewpoints to keep image quality of the generated stereoscopic image as high quality as possible, images that are arranged in a tile pattern become extremely larger than the resolution of an autostereoscopic display. For this reason, to compress and transmit such images, a high speed transmission network and a storage medium of larger volume are required. It will be appreciated that, even if the images of respective viewpoints are not arranged in a tile pattern but are independent images, the same problem occurs from a comprehensive standpoint.

For this reason, the largest problem is that images of respective viewpoints for generating a stereoscopic image cannot be provided in a general format for storing and transmitting video images using a Blu-ray player, STB (Set Top Box) and the like.

Therefore, to solve the above described problems, the present invention has a technical subject to realize a stereoscopic image generation system that: enables generation of a stereoscopic image only by converting arrangement of pixels without using a high speed and special computer or the like by generating, in advance, intermediate images that have the same resolution as the stereoscopic image of the final output image and integrate images of respective viewpoints; further, by using the intermediate images in which images of respective viewpoints are arranged in a tile pattern, generates a stereoscopic image using a simple and inexpensive stereoscopic image generation device (a converter) from the intermediate images output and transmitted in a standard format by a standard image output device or image distribution server, such as a Blu-ray player and STB.

Means to Solve the Problems

To solve the above problems, in the intermediate image generation method of the invention that generates a plurality of intermediate images that are used for generating a stereoscopic image that is converted from images of a plurality of viewpoints that are imaged and/or drawn from a plurality of viewpoints from a first to an Nth viewpoint, in order to generate the stereoscopic image by repeatedly arranging staircase patterned RGB pixel blocks that are made by continuously arraying staircase patterned RGB pixel units from the first viewpoint to Nth viewpoint in a horizontal direction, in which the staircase patterned RGB pixel units are made by arraying subpixels in a diagonal direction over three rows in a manner in which the subpixels mutually contact at their corners, the intermediate image generation method comprises the steps of: calculating R values, G values, and B values of the subpixels constituting the staircase patterned RGB pixel units by interpolating from R, G, B values of subpixels constituting at least one pixel unit arranged, in the images of the plurality of viewpoints, around a location corresponding to a location where the subpixels constituting the staircase patterned RGB pixel units are arranged; and generating the intermediate images for respective plurality of viewpoints by arranging parallel patterned RGB pixel units that are made by arranging the subpixels constituting the staircase patterned RGB pixel units in a horizontal direction in an order from R, G, to B in accordance with an arrangement rule that integrates and arranges the parallel patterned RGB pixel units for each of the plurality of viewpoints, thereby, equalizing a total number of the staircase patterned RGB pixel units of the stereoscopic image to a total number of the parallel patterned RGB pixel units of the plurality of intermediate images, or equalizing a total number of subpixels constituting the staircase patterned RGB pixel units to a total number of subpixels constituting the parallel patterned RGB pixel units.

According to the above feature, it is possible to generate intermediate images that can be compressed with a minimum resolution required to make the total number of the resolution that constitute the images for respective viewpoints the same as the number of the resolution of the stereoscopic image and to generate a stereoscopic image that can be stereoscopically viewed only by changing the arrangement (mapping) of the subpixels constituting such intermediate images without using a high-speed and special computer.

Also, it is preferable that: the staircase patterned RGB pixel units each has one subpixel column per row and comprises three of the subpixels having R value, G value, and B value; and the parallel patterned RGB pixel units each comprises the three subpixels by arraying three subpixel columns in a row in an order from R, G to B.

In this way, in a case in which subpixels are vertically-long rectangles with a ratio of one to three, it is possible to generate a plurality of intermediate images that can be converted to a stereoscopic image that has subpixels arranged so that three subpixels are arrayed over three rows and one column in a diagonal direction in a manner in which the subpixels mutually contact at their corners and that can be most appropriately stereoscopically viewed.

Also, in the intermediate image generation method according to the first aspect, it is preferable that the staircase patterned RGB pixel units each has two subpixel columns per row and each of the two columns comprises three of the subpixels having R value, G value, and B value; and in the parallel patterned RGB pixel units, three subpixels arrayed over three rows in a first column of the staircase patterned RGB pixel units are arrayed over three columns in an order from R, G, to B, and, by horizontally abutting the array, three subpixels arrayed over three rows in a second column of the staircase patterned RGB pixel units are arrayed over three columns in an order from R, G, to B.

Also, in the intermediate image generation method according to the first aspect, it is preferable that the staircase patterned RGB pixel units each has three subpixel columns per row and each column of the three columns comprises three of the subpixels having R value, G value, and B value; and in the parallel patterned RGB pixel units, three subpixels arrayed over three rows in a first column of the staircase patterned RGB pixel units are arrayed in one row in an order from R, G, to B, three subpixels arrayed over three rows in a second column of the staircase patterned RGB pixel units are arrayed in an order from R, G, to B by horizontally abutting said array, and, by further abutting the array, three subpixels arrayed in a third column of the staircase patterned RGB pixel units are arrayed in an order from R, G, to B.

Also, in the intermediate image generation method according to the first aspect, it is preferable that, by arranging the plurality of intermediate images in a manner in which the intermediate images are vertically equally divided at least in three into first to third rows and arranged in a pattern of a plurality of tiles as an image frame, the subpixels constituting the staircase patterned RGB pixel units and the subpixels constituting the parallel patterned RGB pixel units become the same number in both horizontal and vertical directions in the stereoscopic image and in the image frame where the plurality of intermediate images are arranged.

By arranging the images of respective viewpoints in a tile pattern, the resolution and aspect ratio of the intermediate images and those of the autostereoscopic display (a stereoscopic image) become the same. In this way, it is possible to provide a highly practical stereoscopic image display system, with extremely low price, that can easily generate stereoscopic images using a stereoscopic image generation system (a converter) from intermediate images that are output or transmitted in a standard format through a standard image output device or image distribution server such as a Blu-ray player or a STB (Set-Top Box).

Also, in the intermediate image generation method according to the fifth aspect, it is preferable that, in a case in which the plurality of viewpoints are two viewpoints, two-third of the intermediate image of a first viewpoint are arranged in a tile of the first row, one-third of the intermediate image of the first viewpoint are arranged in a first tile of the second row, one-third of the intermediate image of a second viewpoint are arranged in a second tile of the second row abutting the one-third of the intermediate image of the first viewpoint, and two-third of the intermediate image of the second viewpoint are arranged in a tile of the third row; in a case in which the plurality of viewpoints are three viewpoints, the intermediate image of each viewpoint is arranged in a tile of each row; in a case in which the plurality of viewpoints are four to six viewpoints, the intermediate images of first to third viewpoints are arranged in first tiles of respective rows, and the intermediate images of the rest of the viewpoints are arranged in tiles of first to third rows abutting the intermediate images of the first to third viewpoints; in a case in which the plurality of viewpoints are seven to nine viewpoints, the intermediate images of first to third viewpoints are arranged in first tiles of respective rows, the intermediate images of fourth to sixth viewpoints are arranged in tiles of the first to third rows abutting the intermediate images of the first to third viewpoints, and the intermediate images of the rest of the viewpoints are arranged in tiles of the first to third rows abutting the intermediate images of the fourth to sixth viewpoints; and even in a case in which the plurality of viewpoints are ten viewpoints or more, part of or whole intermediate images are sequentially arranged from a first viewpoint in tiles of respective rows in a similar way.

Also, in the intermediate image generation method according to the first aspect, it is preferable that the parallel patterned RGB pixel units are generated by arraying subpixels constituting the staircase patterned RGB pixel units by, instead of the arrangement rule, referring to an intermediate image generation table that is created in advance and associates positions of the subpixels constituting the staircase patterned RGB pixel units of the stereoscopic image with positions of subpixels constituting the parallel patterned RGB pixel units of the intermediate image for each of the plurality of viewpoints.

Also, in the intermediate image generation method according to the first aspect, it is preferable that, in a case in which each of the images of the plurality of viewpoints and the stereoscopic image have the same aspect ratio, among the staircase patterned RGB pixel units from the first to Nth viewpoints constituting the staircase patterned RGB pixel blocks, R values, G values, and B values of the subpixels constituting the staircase patterned RGB pixel units of a predefined reference viewpoint are calculated by interpolating from R, G, B values of subpixels constituting a pixel unit arranged, in a viewpoint image of the reference viewpoint, around a location corresponding to a location where the subpixels constituting the staircase patterned RGB pixel units are arranged, and R values, G values, and B values of the subpixels constituting the staircase patterned RGB pixel units of other than the reference viewpoint are calculated by interpolating from R, G, B values of subpixels of viewpoint images constituting at least one pixel unit arranged, in the viewpoint images of viewpoints other than the reference viewpoint, around a location corresponding to a location where the subpixels constituting the staircase patterned RGB pixel units of the reference viewpoint are arranged.

In this way, reality-based sharp stereoscopic images can be expressed by calculating R, G, B values of other subpixels with reference to any of the subpixels constituting the staircase patterned RGB pixel units.

Also, in the intermediate image generation device of the invention for generating a plurality of intermediate images by the method according to the first aspect, the intermediate image generation device comprises at least: a central processing unit; and a storage device, wherein, in order to generate the stereoscopic image by repeatedly arranging staircase patterned RGB pixel blocks that are created by continuously arraying staircase patterned RGB pixel units from the first viewpoint to Nth viewpoint in a horizontal direction, in which the staircase patterned RGB pixel units are made by arraying subpixels in a diagonal direction over three rows in a manner in which the subpixels mutually contact at their corners, the central processing unit calculates R values, G values, and B values of the subpixels constituting the staircase patterned RGB pixel units by interpolating from R, G, B values of subpixels constituting at least one pixel unit arranged, in the images of the plurality of viewpoints stored in the storage device, around a location corresponding to a location where the subpixels constituting the staircase patterned RGB pixel units are arranged; arranges the parallel patterned RGB pixel units, in which subpixels constituting the staircase patterned RGB pixel units are arrayed in a horizontal direction in an order from R, G, to B, in accordance with an arrangement rule for integrating and arranging the parallel patterned RGB pixel units for each of the plurality of viewpoints; and generates intermediate images of the plurality of viewpoints that are constituted by the parallel patterned RGB pixel units, a total number of which is the same as the staircase patterned RGB pixel units of the stereoscopic image, or a total number of subpixels constituting each of which is the same as the one of the staircase patterned RGB pixel units.

Also, in the stereoscopic image generation method of the invention that is a method for generating a stereoscopic image from a plurality of intermediate images generated by the method of the first aspect, the stereoscopic image is generated from the intermediate images of the plurality of viewpoints by arranging subpixels constituting the parallel patterned RGB pixel units as the staircase patterned RGB pixel units according to a reverse order of the arrangement rule.

Also, in the stereoscopic image generation method of the eleventh aspect, it is preferable that subpixels constituting the parallel patterned RGB pixel units are arrayed in the staircase patterned RGB pixel units by, instead of the arrangement rule, referring to a stereoscopic image generation table that is created in advance and associates positions of the subpixels constituting the parallel patterned RGB pixel units of the intermediate images of the respective plurality of viewpoints with positions of the subpixels constituting the staircase patterned RGB pixel units of the stereoscopic image.

Also, the intermediate image generation device of the invention is a stereoscopic image generation device for generating a stereoscopic image from a plurality of intermediate images by the method of the eleventh aspect, and the stereoscopic image generation device comprises at least: a central processing unit; and a storage device, wherein the central processing unit stores the intermediate images of the respective plurality of viewpoints in the storage device, and generates the stereoscopic image from the intermediate images of the respective plurality of viewpoints by arranging subpixels constituting the parallel patterned RGB pixel units as the staircase patterned RGB pixel units in accordance with a reverse order of the arrangement rule.

Also, the stereoscopic image generation system of the invention comprises: a first information processing device that comprises at least a central processing unit, a storage device, a compression device, and a transmitting device, and generates a plurality of intermediate images that are used for generating a stereoscopic image that is converted from images of a plurality of viewpoints that are imaged and/or drawn from a plurality of viewpoints from a first viewpoint to an Nth viewpoint; and a second information processing device that comprises at least a central processing unit, a storage device, an extraction device, and a receiving device, and generates a stereoscopic image from the plurality of intermediate images, wherein, in order to generate the stereoscopic image by repeatedly arranging staircase patterned RGB pixel blocks that are created by continuously arraying staircase patterned RGB pixel units from the first viewpoint to Nth viewpoint in a horizontal direction, in which the staircase patterned RGB pixel units are made by arraying subpixels in a diagonal direction over three rows in a manner in which the subpixels mutually contact at their corners, the central processing unit of the first information processing device: calculates R values, G values, and B values of the subpixels constituting the staircase patterned RGB pixel units by interpolating from R, G, B values of subpixels constituting at least one pixel unit arranged, in the images of the plurality of viewpoints stored in the storage device of the first information processing device, around a location corresponding to a location where the subpixels constituting the staircase patterned RGB pixel units are arranged; arranges the subpixels constituting the staircase patterned RGB pixel units in a horizontal direction in an order from R, G, to B in accordance with an arrangement rule that integrates and arranges the parallel patterned RGB pixel units for each of the plurality of viewpoints; generates intermediate images of the plurality of viewpoints that are constituted by the parallel patterned RGB pixel units, a total number of which are the same as the staircase patterned RGB pixel units of the stereoscopic image, or a total number of subpixels constituting each of which are the same as the one of the staircase patterned RGB pixel units; compresses the intermediate images of the plurality of viewpoints by the compression device; and transmits to the second information processing device through the transmitting device, and the central processing unit of the second information processing device: receives the intermediate images of the plurality of viewpoints transmitted from the first information processing device by the receiving device; extracts the intermediate images of the plurality of viewpoints by the extraction device; and generates the stereoscopic image from the intermediate images of the plurality of viewpoints extracted by the extraction device by arranging subpixels constituting the parallel patterned RGB pixel units as the staircase patterned RGB pixel units in accordance with a reverse order of the arrangement rule.

Advantageous Effects of the Invention

According to the invention, it is possible to generate intermediate images that can be compressed with a minimum resolution required to make the total number of the resolution that constitutes an image for each viewpoint the same as the number of the resolution of the stereoscopic image and to generate a stereoscopic image that can be stereoscopically viewed only by changing arrangement (mapping) of the subpixels constituting such intermediate images without using a high-speed special computer. Further, by arranging the images of respective viewpoints in a tile pattern according to the invention, the resolution and aspect ratio of the intermediate images and those of the autostereoscopic display (a stereoscopic image) become the same. Thus, it is possible to provide a highly practical stereoscopic image display system, with extremely low price, that can easily generate a stereoscopic image using a stereoscopic image generation device (a converter) from intermediate images that are output or transmitted in a standard format through a standard image output device or image distribution server such as a Blu-ray player or a STB.

Detailed Description of the Drawings

FIGS. 1A to 1C are block diagrams schematically showing configurations of an intermediate image generation device, a stereoscopic image generation device, and a stereoscopic image generation system.

FIGS. 2A to 2C are diagrams showing flowcharts of information processing that is executed by the intermediate image generation device and the stereoscopic image generation system.

FIG. 3 is a diagram illustrating an embodiment of a method for generating intermediate images.

FIG. 4 is a diagram illustrating an embodiment of a method for generating intermediate images.

FIGS. 5A to 5C are diagrams illustrating an embodiment of a method for generating intermediate images.

FIG. 6 is a diagram illustrating an embodiment of a method for generating intermediate images.

FIGS. 7A and 7B are diagrams illustrating an intermediate image generation table.

FIG. 8 is a diagram showing an example of the arrangement of image frames of intermediate images.

FIGS. 9A and 9B are diagrams illustrating a difference in image frames.

FIG. 10 is a diagram showing examples of image frames comprising a plurality of intermediate images.

FIGS. 11A to 11C are diagrams showing arrangement examples of the staircase patterned RGB pixel units.

FIG. 12 is an external view showing an example of an embodiment of the stereoscopic image generation device.

FIG. 13 is an external view showing an example of another embodiment of the stereoscopic image generation device.

FIGS. 14A and 14B are diagrams showing an example of images of a plurality of viewpoints.

FIG. 15 is a diagram showing an example of motion pictures of a plurality of viewpoints.

FIG. 16 is a diagram showing an example of motion pictures of a plurality of viewpoints.

FIGS. 17A and 17B are diagrams showing a first example of intermediate images of a plurality of viewpoints.

FIGS. 18A to 18C are diagrams showing a second example of intermediate images of a plurality of viewpoints.

FIGS. 19A to 19C are diagrams showing a third example of intermediate images of a plurality of viewpoints.

FIGS. 20A to 20C are diagrams showing a fourth example of intermediate images of a plurality of viewpoints.

FIG. 21 is a diagram illustrating what kind of information the image information actually means.

FIG. 22 is a diagram illustrating what kind of information the image information actually means.

FIG. 23 is a flowchart showing a method of distinguishing whether an image is a planar image or an intermediate image of a plurality of viewpoints.

FIG. 24 is a diagram illustrating an appropriate value of width Sh of a visible light transmitting section.

FIG. 25 is a diagram illustrating an appropriate value of width Sh of a visible light transmitting section.

FIG. 26 is a diagram illustrating an example of calculating height Sv of a visible light transmitting section.

FIG. 27 is a diagram illustrating an example of calculating height Sv of a visible light transmitting section.

FIG. 28 is a diagram illustrating an example of calculating an interval Hh of a plurality of visible light transmitting sections.

FIG. 29 is a diagram illustrating an example of calculating an interval Hh of a plurality of visible light transmitting sections.

FIG. 30 is a diagram showing an example of calculating an interval Hh of a plurality of visible light transmitting sections.

FIG. 31 is a diagram showing an example of calculating an interval Hh of a plurality of visible light transmitting sections.

FIG. 32 is a diagram illustrating moiré.

FIG. 33 is a diagram illustrating a relative relationship of L2, L2n, and L2f.

FIG. 34 is a diagram illustrating a method of calculating a value of an interval Hv of visible light sections.

FIGS. 35A to 35F are diagrams illustrating a relationship between visible light transmitting sections and pixels.

FIG. 36 is a diagram illustrating a relationship between a distance between focal points of both eyes K and L3.

FIG. 37 is a diagram illustrating a method of calculating a value of an interval Hv between the visible light transmitting sections.

FIG. 38 is a diagram illustrating a method of calculating a value of an interval Hv between the visible light transmitting sections.

FIGS. 39A and 39B are diagrams illustrating the number of visible light transmitting sections.

FIG. 40 is a diagram illustrating a relationship between $[Hv \times (Mv - 1)]$ and $[(Jr - i/\beta) \times Pv]$.

FIG. 41 is a diagram showing an example of calculating the values of L3n and L3f.

FIG. 42 is a diagram showing an example of calculating the values of L3n and L3f.

FIG. 43 is a diagram showing an example of calculating the values of L3n and L3f.

FIGS. 44A and 44B are diagrams illustrating an example of the shape of a slit of a parallax barrier.

FIGS. 45A and 45B are diagrams illustrating an example of the shape of a slit of a parallax barrier.

FIGS. 46A and 46B are diagrams illustrating an example of the shape of a slit of a parallax barrier.

FIGS. 47A to 47E are diagrams illustrating an example of the shape of a slit of a parallax barrier.

FIGS. 48A to 48G are diagrams illustrating an example of the shape of a slit of a parallax barrier.

FIGS. 49A to 49E are diagrams illustrating an example of the shape of a slit of a parallax barrier.

FIG. 50 is a diagram illustrating an appropriate moire canceling range.

FIG. 51 is a diagram showing an example of the shape of subpixels in an autostereoscopic image display device.

Modes for Carrying Out the Invention

The following describes details of the embodiments of the invention with reference to the drawings.

FIGS. 1A to 1C are block diagrams that schematically show configurations of an intermediate image generation device, a stereoscopic image generation device, and information processing devices used in the stereoscopic image generation system of the invention.

The intermediate image generation device 31 of FIG. 1A comprises a central processing unit 33 and a storage device 35.

The storage device 35 stores images of a plurality of viewpoints that are captured and/or drawn from a plurality of viewpoints from the first viewpoint to the Nth viewpoint. The viewpoint images are generated not only by imaging an object from different viewpoints using a plurality of cameras but also by drawing using computer graphics. The central processing unit 33 generates intermediate images by executing a plurality of arithmetic processing based on the images of a plurality of viewpoints stored in the storage device 35.

The stereoscopic image generation device 61 of FIG. 1B comprises a central processing unit 33 and a storage device 35.

The central processing unit 35 causes the storage device 35 (a frame buffer) to store a plurality of input intermediate images and converts the pixel arrangement to generate a stereoscopic image.

The stereoscopic image generation system of FIG. 1C comprises a first information processing device 41 and a second information processing device 47. The first information processing device 41 comprises a central processing unit 33, a storage device 35, a compression device 43, and a transmitting device 45. The second information processing device 47 comprises a central processing unit 33, a storage device 35, an extraction device 49, and a receiving device 51.

The compression device 43 performs lossy compression of a plurality of intermediate images by a predetermined method. Typical methods are used for the compression method, such as, JPEG is used for still images, and MPEG-2, MPEG-4 are used for motion pictures. The transmitting device 45 transmits a plurality of intermediate images that are compressed by the compression device 43 to the second information processing device 47. As a transmission method, there can be considered a wired transmission through a USB port as well as a wireless transmission, such as an optical communication, BLUETOOTH (registered trademark), and wireless LAN. The receiving device 51 receives the plurality of intermediate images transmitted from the transmitting device 45. The extraction device 49 extracts the plurality of intermediate images compressed by the compression device 43.

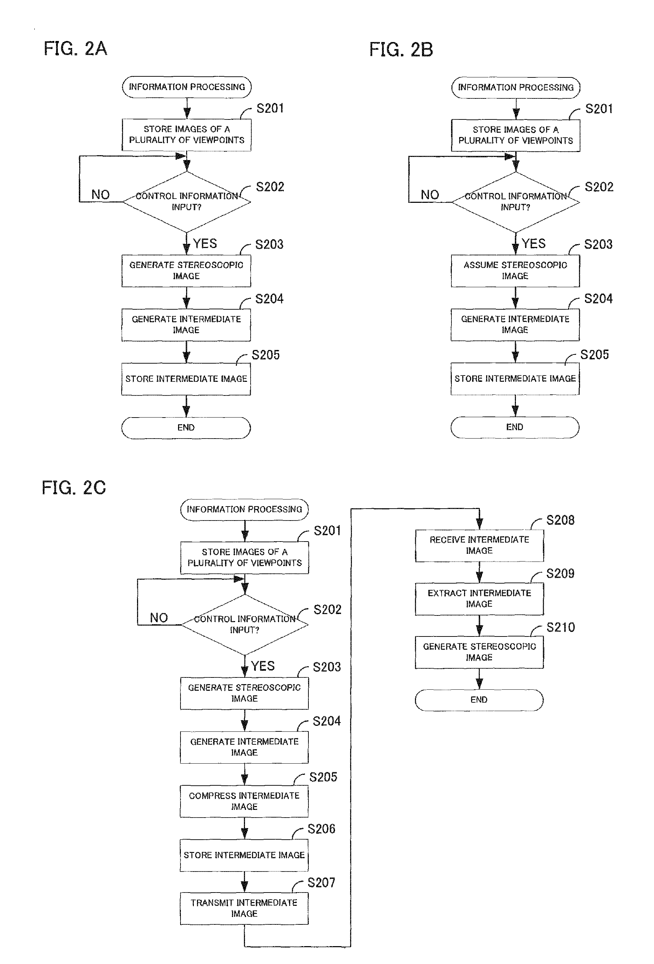

FIG. 2A is a flowchart of information processing that is executed by the intermediate image generation device 31.

In FIG. 2A, the central processing unit 33 incorporated in the intermediate image generation device 31 stores images of a plurality of viewpoints that are input according to a user operation (imaging of an object by cameras of a plurality of viewpoints from the first viewpoint to the Nth viewpoint or drawing by computer graphics from a plurality of viewpoints from the first viewpoint to the Nth viewpoint) in the storage device 35 incorporated in the intermediate image generation device 31 (step S201).

Next, the central processing unit 33 determines whether there is input of control information (step S202). The control information refers to a scanning method, such as NTSC and PAL, a transmission method, such as interlaced and progressive, and an image arrangement method, such as the number of viewpoints and resolutions. The control information is input by a user operation using a keyboard, a mouse, and the like further equipped on the intermediate image generation device 31. In this way, the format is determined.

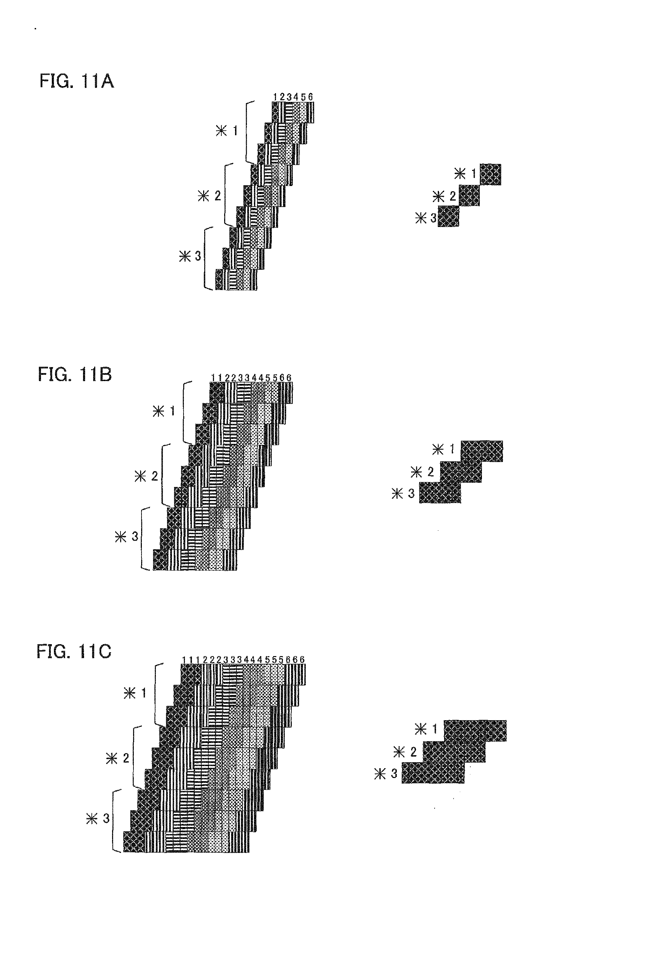

As a result of the determination at step S202, if control information is input, the central processing unit 33 generates a stereoscopic image based on the control information (step S203). Here, the stereoscopic image refers to an image having subpixel arrangement that can be viewed stereoscopically to be finally displayed to users. If a parallax barrier or the like is used for autostereoscopic viewing, it is preferable to configure a stereoscopic image by repeatedly arranging staircase patterned RGB pixel blocks in which staircase patterned RGB pixel units, in each of which subpixels are arrayed in a diagonal direction over three rows in a manner in which the subpixels mutually contact at their corners, are continuously arrayed from the first viewpoint to Nth viewpoint in a horizontal direction. As a representative arrangement of subpixels constituting the staircase patterned RGB pixel units, for example, those as shown in FIGS. 11A to 11C can be considered. To generate a stereoscopic image based on the control information, for example, if the resolution of the display that is to display a stereoscopic image is 1980 × 1080, a stereoscopic image of a resolution appropriate for outputting, that is, a stereoscopic image having a resolution of 1980 × 1080, is generated. It should be noted that generation of a stereoscopic image performed at step S203 will be described later.

Next, the central processing unit 33 generates a plurality of intermediate images from the generated stereoscopic image (step S204). The intermediate images are images used for generating a stereoscopic image, and, in each of the plurality of intermediate images, parallel patterned RGB pixel units in which subpixels constituting staircase patterned RGB pixel units are arrayed in a horizontal direction in an order from R, G to B are integratedly arranged for each of the plurality of viewpoints. In the present invention, a stereoscopic image is generated or assumed in advance from images of a plurality of viewpoints that are captured or drawn from the plurality of viewpoints, and intermediate images are generated based on the stereoscopic image. Similarly to step S203, generation of the intermediate images performed at step S204 will be described below.

Next, the central processing unit 33 stores the intermediate images generated at step S204 in the storage device 35 (step S205).

When the intermediate images are stored at step S205, this processing ends.

After the processing ends, the processing may return to step S203 again. For example, when stereoscopic images or intermediate images are repeatedly generated based on the same control information (when viewpoint images are input to the intermediate image generation device one after another), the control information is not necessarily input each time, whereby usability can be expected to be improved. In such a case, a mode may be changed by a specific operation of a keyboard or the like and the mode may be associated with processing of repeatedly generating stereoscopic images and intermediate images so that the intermediate image generation device 31 recognizes that stereoscopic images and intermediate images are continuously generated.

It should be noted that, as shown in the example of FIG. 2B, the following processing may be performed by assuming a stereoscopic image without actually generating a stereoscopic image.

FIG. 2C is a flowchart of information processing that is executed by the stereoscopic image generation system of FIG. 1B.

As FIG. 2C besically has the same processing structure until step S204 of FIG. 2A, the overlapping description is eliminated for the same components and the following describes only the different parts.

The first information processing device 41 and the second information processing device 47 are information processing devices that further comprise a compression device 43, a transmitting device 45, and, respectively, an extraction device 49 and a receiving device 51 in addition to the intermediate image generation device 31 used in FIG. 2A.

First, the central processing unit 33 of the first information processing device 41 compresses a plurality of intermediate images generated at step S204 by the compression device 43 (step S205).

Next, the plurality of intermediate images compressed at step S205 are stored in the storage device 35 (step S206).

Next, the central processing unit 33 transmits the plurality of compressed and stored intermediate images from the transmitting device 45 to the second information processing device 47 (step S207).

The central processing unit 33 of the second information processing device 47 receives the plurality of intermediate images that are transmitted from the first information processing device 41 at step S207 by the receiving device 51 (step S208).

Next, the central processing unit 33 extracts the received plurality of intermediate images by the extraction device 49 (step S209).

Next, the central processing unit 33 generates a stereoscopic image that is to be finally output to users from the plurality of extracted intermediate images (step S210). The stereoscopic image at step S210 and the stereoscopic image at step S203 are the same. Similarly to step S203 and step S204, generation of intermediate images performed at step S210 is described below.

This processing ends when a stereoscopic image is generated at step S210.

After ending the processing, the generated intermediate images may be output to the stereoscopic image display device 65. Also, to continuously transmit intermediate images from the first information processing device 41, processing from step S208 to step S210 may be continuously performed. According to the system shown in FIG. 2C, it is possible that a plurality of cameras installed at any points are used to continuously image, and intermediate images in which images of a plurality of respective viewpoints generated by the first information processing device 41 one after another are arranged in a tile pattern are distributed in an existing format to many users all over the world to be simultaneously viewed by the users in real time.

That is, by mounting an expensive graphic board or high speed CPU on the first information processing device 41 to perform generation processing of a plurality of intermediate images in real time, and mounting relatively low speed CPUs on a plurality of information processing devices 47 that are used by users, it is possible to realize an innovative stereoscopic image viewing environment in an existing format, utilizing the characteristics of the plurality of intermediate images that can generate stereoscopic images only by changing the arrangement of pixels. That is, there can be generated intermediate images that can be compressed with a minimum resolution required to make the number of pixels constituting images of respective viewpoints the same as the number of pixels of a stereoscopic image, and a stereoscopic image that can be viewed stereoscopically only by changing arrangement (mapping) of subpixels constituting such intermediate images without using a high speed and special computer.

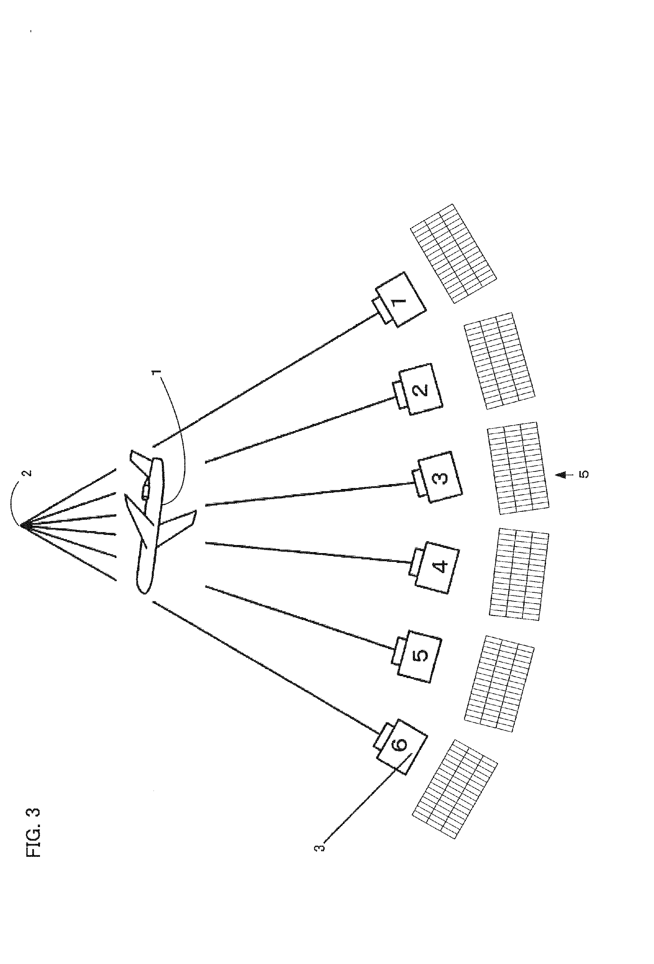

The following describes an embodiment of a method of generating a plurality of intermediate images according to the invention with reference to FIGS. 3 to 6.

FIG. 3 shows an example in which a certain object 1 is imaged by cameras 3 of a plurality of different viewpoints and viewpoint images 5 for respective viewpoints are generated. As cameras 3 are used to image a focal point 2 from six viewpoints, six viewpoint images 5 can be obtained. It should be noted that the resolution of viewpoint images at this point is arbitrary. It should be noted that cameras 3 may be arranged on the level so that optical axises of respective cameras 3 may be converged on the focal point 2.

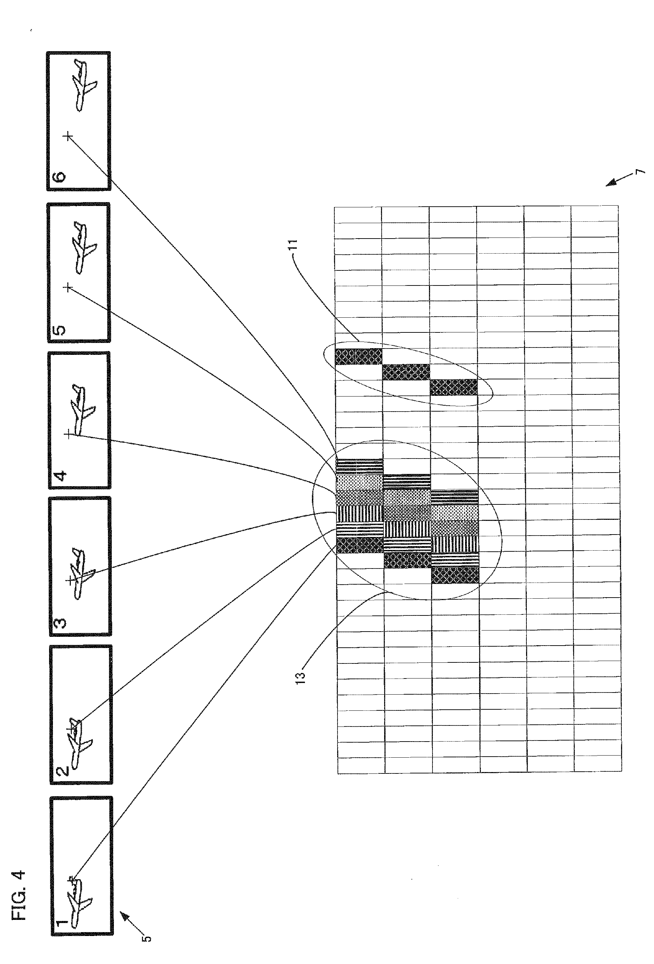

FIG. 4 shows an example of generating a stereoscopic image 7 that has subpixel arrangement to be finally output on a display from a plurality of viewpoint images 5 captured in FIG. 3. FIG. 4 shows an example in which R, G, B values of the staircase patterned RGB pixel units 11 are calculated by interpolating from R, G, B values of subpixels constituting at least one pixel unit arranged around the corresponding location.

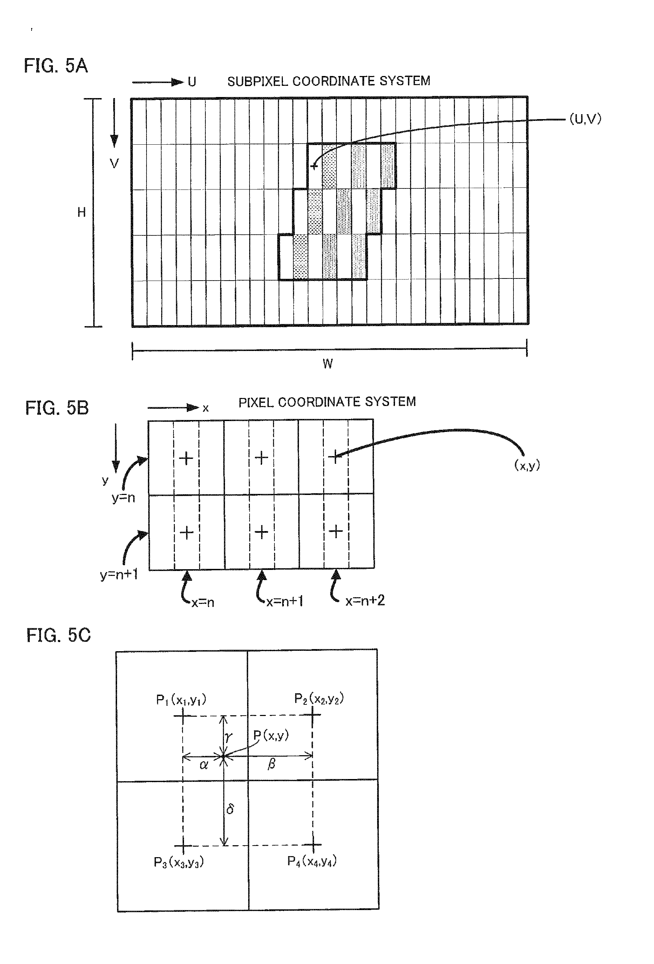

The following elaborates generation of a stereoscopic image performed at step S203 of FIGS. 2A to 2C with reference to FIGS. 5A to 5C.

When generating a stereoscopic image 7, the above described central processing unit 33, first, determines subpixel arrangement of the stereoscopic image 7 in accordance with the resolution of a display for performing an final output that is input at step S202 of FIGS. 2A to 2C. For the subpixel arrangement of the stereoscopic image, for example, those illustrated in FIGS. 11A to 11C are used. FIGS. 11A to 11C assume a stereoscopic image 7 that has subpixel arrangement that can be most appropriately viewed stereoscopically when the subpixels are vertically long rectangles with a ratio of 1 to 3, in which three subpixels are arrayed over three rows and one column in a manner in which the subpixels mutually contact at their corners.

Next, staircase patterned RGB pixel blocks based on the number of viewpoints as shown in the example of FIG. 5A are assumed. The staircase patterned RGB pixel block refers to the one in which staircase patterned RGB pixel units in which subpixels are arrayed in a diagonal direction over three rows in a manner in which the subpixels mutually contact at their corners are continuously arrayed from the first viewpoint to the Nth viewpoint in a horizontal direction. In the example of FIG. 5A, as an object 1 is imaged from six viewpoints in FIG. 3, a set of pixels constituted by 18 subpixels is defined as a staircase patterned RGB pixel block.

Next, by configuring a stereoscopic image 7 by repeatedly arranging staircase patterned RGB pixel blocks, respective R, G, B values of subpixels constituting the staircase patterned RGB pixel units are obtained. The R, G, B values are preferably obtained by using any one of the staircase patterned RGB pixel units in the staircase patterned RGB pixel blocks as reference, and are obtained from R, G, B values of subpixels arranged in coordinate values on viewpoint images corresponding to coordinate values on the stereoscopic image 7 of subpixels constituting the staircase patterned RGB pixel unit. As shown in FIG. 5A, the coordinate values on the stereoscopic image 7 have a horizontal axis U and a vertical axis V in a subpixel coordinate system on the stereoscopic image 7. The subpixels arranged at the first line of the first viewpoint, which is a reference in this embodiment, can be expressed as (U, V) as shown in FIG. 5A.

Next, coordinate values corresponding to the viewpoint image captured from the first viewpoint are calculated.

The coordinate values on the viewpoint image have a horizontal axis $\times$ and a vertical axis y in the pixel coordinate system. The coordinate values of a pixel on the viewpoint image of the first viewpoint, which is a reference in this embodiment, can be expressed as (x, y) as shown in FIG. 5A.

Generally, as the numbers of subpixels constituting the stereoscopic image and the plurality of viewpoint images are different, and a subpixel coordinate system is used on the stereoscopic image and a pixel coordinate system is used on the viewpoint image, a predetermined conversion formula is required.

Thus, when the total number of subpixels in a horizontal direction constituting the stereoscopic image is defined as W, the total number thereof in a vertical direction is defined as H, the total number of pixels in a horizontal direction constituting a viewpoint image from the first viewpoint is defined as a, and the total number thereof in a vertical direction is defined as b, conversion from the subpixel coordinate system to the pixel coordinate system can be obtained by the following formula:

$$\left[ x = \frac{U}{W} \times a, y = \frac{V}{H} \times b \right]$$

By expressing the coordinate values on the stereoscopic image in a subpixel coordinate system, R, G, B values can be calculated in each subpixel unit. In this way, more precise stereoscopic images can be generated rather than calculating R, G, B values in pixel units.

Here, a and b are preferably set so that W : H = a : b becomes true, which, of course, does not apply when viewpoint images are desired to be displayed as much as possible even though the images are deformed.

However, as shown in FIG. 5C, as only the central point of each pixel is defined in the pixel coordinate system, for example, if (x, y) is at a position as shown in FIG. 5C, R, G, B values of subpixels on the stereoscopic image cannot be directly calculated. Therefore, the R, G, B values are calculated by interpolating from the pixel units arranged around the pixel to which the (x, y) belongs.

First, if $\alpha = x - x1$, $\beta = x2 - x$, $\gamma = y - y1$, $\delta = y3 - y$, and R, G, B values of P1 to P4 that are the central points of the pixels of the viewpoint image are C1 to C4 respectively, R, G, B values of P are expressed by linear interporation by the following formula:

$$C = \frac{\gamma \left( \dfrac{\beta C1 + \alpha C2}{\alpha + \beta} \right) + \delta \left( \dfrac{\beta C3 + \alpha C4}{\alpha + \beta} \right)}{\gamma + \delta}$$

Here, R, G, B values of only any one of R, G, B indicated by subpixels of the subject stereoscopic image may be calculated. It should be noted that if $\alpha + \beta = \gamma + \delta = 1$, the following formula can be obtained:

$$C = \gamma(\beta C1 + \alpha C2) + \delta(\beta C3 + \alpha C4)$$

Next, R, G, B values of other subpixels constituting the same staircase patterned RGB pixel unit are calculated similarly by interpolating from neighboring pixel units. It should be noted that there are a variety of interpolating methods and any interpolating method can be used as long as the interpolating method is appropriate.

Next, R, G, B values of subpixels constituting staircase patterned RGB pixel units other than the reference staircase patterned RGB pixel unit of the first viewpoint are calculated. In this case, it is preferable to calculate the R, G, B values with reference to the coordinate values of subpixels constituting the reference staircase patterned RGB pixel unit. That is, when generating a stereoscopic image of six viewpoints using a parallax barrier, as corresponding images of a plurality of viewpoints should be seen through the same slits or holes by a subject person of image presentation, R, G, B values are calculated from pixels of other viewpoint images at the same position as the coordinate values on the viewpoint image corresponding to the coordinate values of subpixels constituting the reference staircase patterned RGB pixel unit. Correspondence relationship between a plurality of viewpoint images and a stereoscopic image is, for example, as shown in the example of FIG. 4.

As described above, a stereoscopic image is generated or assumed by obtaining R, G, B values of subpixels constituting the stereoscopic image by interpolation. When assuming a stereoscopic image, as intermediate images are directly generated (step S204) without generating a stereoscopic image from images of a plurality of viewpoints, it is necessary to calculate parallel patterned RGB pixel units of a plurality of intermediate images by interpolation to obtain the R, G, B values and by rearranging subpixels constituting the staircase patterned RGB pixel units of the stereoscopic image obtained by the interpolation.

In this way, by calculating R, G, B values of other subpixels by setting any one of the subpixels constituting a staircase patterned RGB pixel unit as reference, a sharp and realistic stereoscopic image can be expressed. Alternatively, if R, G, B values of all subpixels are respectively calculated without defining a representative point, a stereoscopic image that realizes smooth viewpoint transition can be obtained. It is preferable that these may be changed as necessary according to the situation and purpose of presenting the stereoscopic image.

Next, generation of intermediate images performed at step S204 is elaborated.

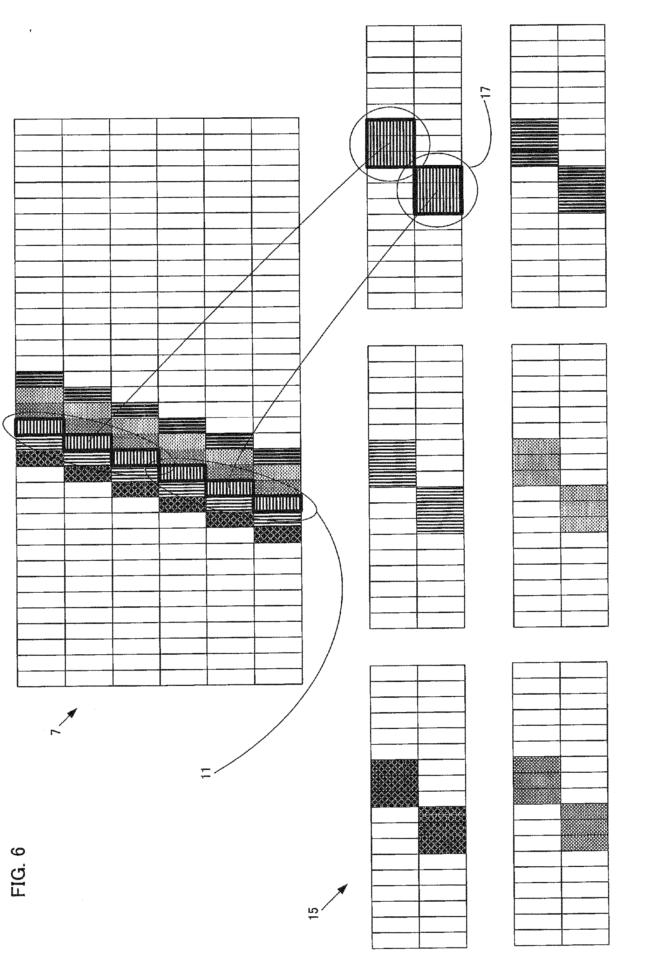

FIG. 6 is a diagram showing an example of generating a plurality of intermediate images from a stereoscopic image.

In FIG. 6, six intermediate images 15 are generated by integratedly arranging parallel patterned RGB pixel units 17, in which subpixels constituting the staircase patterned RGB pixel units 11 of the stereoscopic image generated in FIG. 4 are horizontally arrayed in an order from R, G to B, for respective plurality of viewpoints.

In the parallel patterned RGB pixel units 17, subpixels to be viewed through slits arranged in a staircase pattern or holes arranged in a staircase pattern are collectively arrayed as shown in FIG. 6. This is performed for all the staircase patterned RGB pixel units 11. It should be noted that generation of a plurality of intermediate images 15 from a stereoscopic image 7 is preferably performed using an intermediate image generation table.

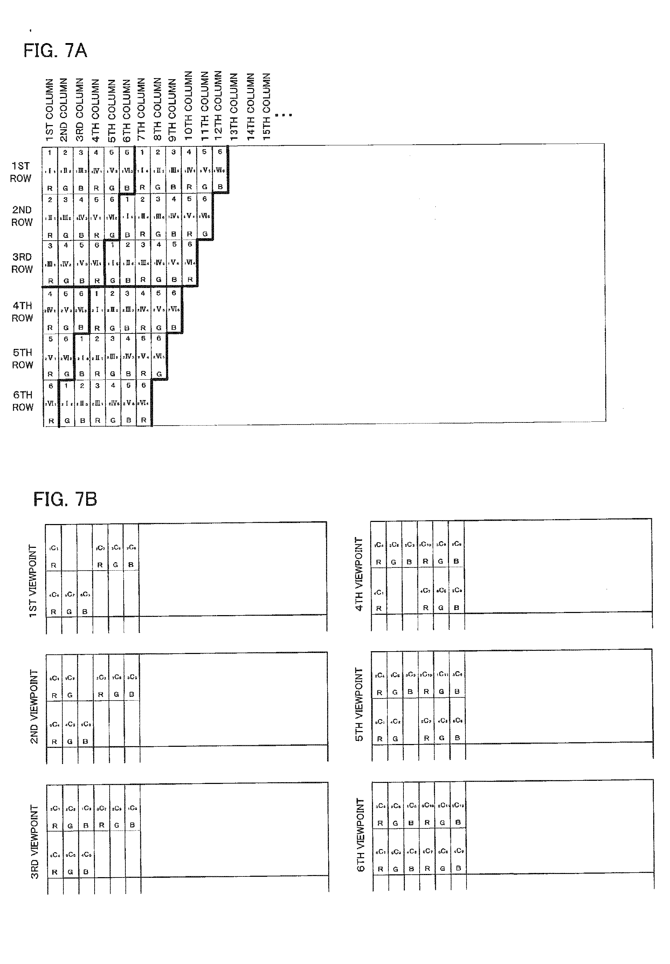

FIGS. 7A and 7B are diagrams illustrating an intermediate image generation table.

FIG. 7A is a table indicating: viewpoint images that the subpixels on a stereoscopic image express; R, G, B that the subpixels on the stereoscopic image express; and coordinate values in the subpixel coordinate system on the stereoscopic image. For example, as a subpixel at the upper left corner is located at the first row and the first column counted from the upper left end, the subpixel is (1I1).

FIG. 7B indicates correspondence relationships between subpixels constituting intermediate images and subpixels arranged at certain positions in the subpixel coordinate system on a stereoscopic image. For example, a subpixel at the upper left corner of the first viewpoint corresponds to 1, (1I1), R subpixel located at the upper left corner of the stereoscopic image, and the subpixel is arranged on the intermediate image. Similarly, a subpixel at the upper left corner of the intermediate image of the second viewpoint corresponds to a subpixel located at a position (2C1) on the stereoscopic image, and, thus, the subpixel arranged at the first column of the second row on the stereoscopic image is arranged on the intermediate image. It should be noted that, as the staircase patterned RGB pixel unit having this subpixel does not have a subpixel having B value, the parallel patterned RGB pixel unit constituting the intermediate image arranged at the upper left corner of the second viewpoint, similarly, does not have a subpixel having B value.

In this way, the parallel patterned RGB pixel units are configured by rearranging the staircase patterned RGB pixel units of the first to sixth viewpoints in a horizontal direction, and, when rearrangement of the staircase patterned RGB pixel block located at the upper left corner ends, subpixels constituting the neighbouring staircase patterned RGB pixel block are subsequently rearranged as shown in FIG. 7B.

In this way, by preparing in advance an intermediate image generation table that relates the positions of subpixels constituting the staircase patterned RGB pixel units of a stereoscopic image to the positions of subpixels constituting the parallel patterned RGB pixel units of intermediate images of a plurality of respective viewpoints, intermediate images of respective viewpoints can be generated only by changing the arrangement of subpixels constituting the stereoscopic image without requiring arithmetic processing for complicated interpolation.

It should be noted that the intermediate image generation table is preferably stored in the storage device of the intermediate image generation device. In this way, when generating a stereoscopic image using the intermediate image generation device, the table can be used as the stereoscopic image generation table without creating another table again.

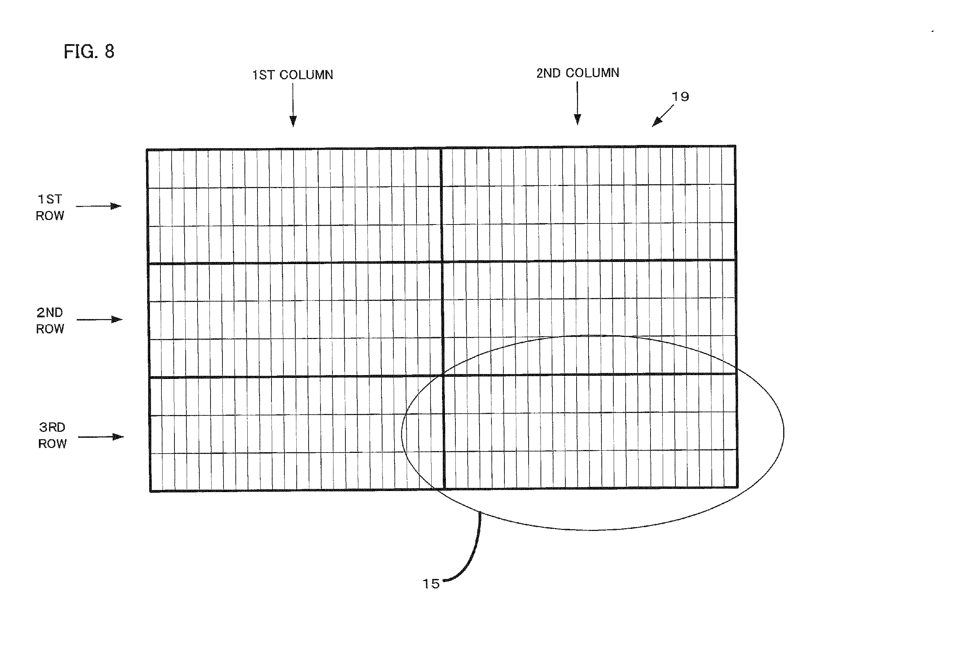

FIG. 8 is a diagram showing an example of especially preferable arrangement of an image frame of intermediate images in an embodiment of the invention. In the image frame 19, intermediate images 15 for respective viewpoints are arranged in a tile pattern, that is, for example, the first viewpoint image is arranged at the first row of the first column, the second viewpoint image is arranged at the second row of the first column, the third viewpoint image is arranged at the third row of the first column, the fourth viewpoint image is arranged at the first row of the second column, the fifth viewpoint image is arranged at the second row of the second column, the sixth viewpoint image is arranged at the third row of the second column.

In this way, the total number of subpixels constituting the stereoscopic image and the total number of subpixels on the image frame where the intermediate images are arranged in a tile pattern become the same in both vertical and horizontal directions. As there is no ineffectual pixel, and pixels for respective viewpoints are integratedly arranged, there is no interference between different viewpoints, and irreversible compression can be used. Thus, as the resolutions and aspect ratios of an image frame where intermediate images are arranged in a tile pattern and an autostereoscopic display (a stereoscopic image) become the same, a highly practical stereoscopic image display system can be provided with very low cost, which can easily generate stereoscopic images using a stereoscopic image generation device (a converter) from intermediate images output or transmitted in a standard format by a standard video image reproducing device or a video image distribution server, such as a Blu-ray player and STB.

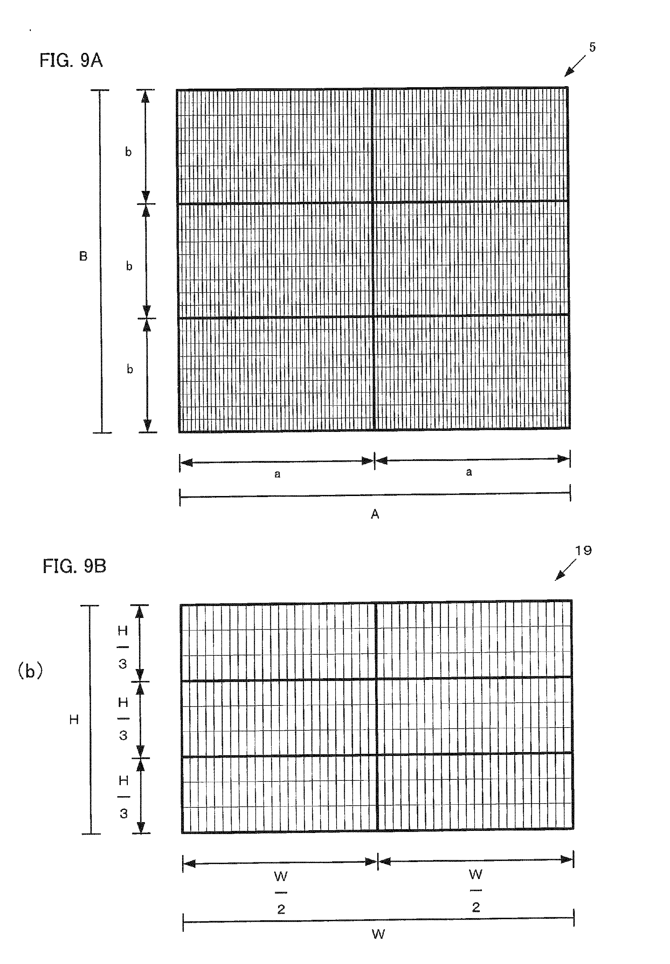

FIGS. 9A and 9B are diagrams showing an example of arranging images of a plurality of viewpoints as is in an image frame of a tile pattern, and a comparison with the above described image frame of the intermediate images.

If the resolution of a display that is to finally output is 16:9, the horizontal to vertical ratio of a viewpoint image for one viewpoint in FIG. 9A also becomes 16:9, and the ratio for the whole image frame becomes 32:27.

On the other hand, if a plurality of intermediate images are arranged in a tiled image frame (FIG. 9B), as subpixels over three rows constituting a staircase patterned RGB pixel unit are horizontally arranged to configure a parallel patterned RGB pixel unit in a stereoscopic image, the total number of pixels in a vertical direction becomes one third. Further, if the number of viewpoints is six, the total number of pixels in a horizontal direction becomes as follows:

$$\frac{W}{6} \times 3 = \frac{W}{2}$$

Suppose hight and width of the stereoscopic image are respectively defined as H, W, when an intermediate image is arranged in an image frame having tiles of three rows x two columns as shown in the example of FIG. 8, the height becomes as follows:

$$\frac{1}{3}H + \frac{1}{3}H + \frac{1}{3}H = H$$

and the width becomes as follows:
$$\frac{1}{2}W + \frac{1}{2}W = W$$

As the result, an image frame having the same resolution as the stereoscopic image in both vertical and horizontal directions can be generated. If images of a plurality of viewpoints are arranged in the unchanged tiled image frame so that the horizontal to vertical ratio and the resolution thereof become the same as those of the stereoscopic image, it is required to add margins on both sides of the images of respective viewpoints to make the vertical to horizontal ratio the same as the one of the stereoscopic image, and, further, decrease the resolutions of the images of respective viewpoints to make the resolution thereof the same as the one of the stereoscopic image when the resolutions of the images of respective viewpoints are arranged in a tile pattern. As the result, the viewpoint images for generating a stereoscopic image become low resolutions, which significantly degrades image quality of the stereoscopic image. On the other hand, in this invention, as intermediate images are generated from respective high quality viewpoint images, the resolution required for generating a stereoscopic image can be perfectly retained.

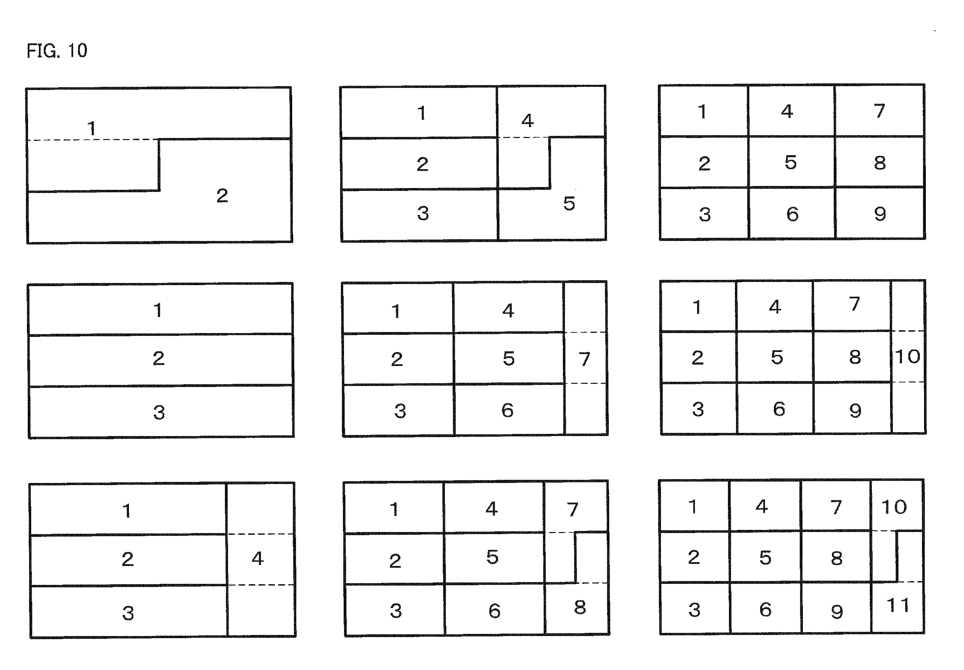

FIG. 10 is a diagram showing examples of image frames comprising a plurality of intermediate images. FIG. 10 shows image frames when stereoscopic images are generated with two viewpoints to five viewpoints and seven viewpoints to eleven viewpoints, respectively. If pixels of respective viewpoints are arranged in a tile pattern in the frames, an image file of the same aspect ratio as the one of the stereoscopic image can be created.

That is, if a stereoscopic image is configured by two viewpoints, two third of the intermediate image of the first viewpoint are arranged in the tile of the first row, one third of the intermediate image of the first viewpoint are arranged in the first tile of the second row, one third of the intermediate image of the second viewpoint are arranged in the second tile of the second row abutting the one third of the intermediate image of the first viewpoint, and two third of the intermediate image of the second viewpoint are arranged in a tile of the third row. If a stereoscopic image is configured by three viewpoints, an intermediate image of each viewpoint is arranged in a tile of each row. Also, if a stereoscopic image is configured by four to six viewpoints, intermediate images of the first to third viewpoints are arranged in the first tile of respective rows, and intermediate images of the rest of viewpoints are arranged in tiles of the first to third rows abutting the intermediate images of the first to third viewpoints. If a stereoscopic image is configured by seven to nine viewpoints, intermediate images of the first to third viewpoints are arranged in the first tiles of respective rows, intermediate images of the fourth to sixth viewpoints are arranged in tiles of the first to third rows abutting the intermediate images of the first to third viewpoints, and intermediate images of the rest of the viewpoints are arranged in the tiles of the first to third rows abutting the intermediate images of the fourth to sixth viewpoints. Similarly, even when a stereoscopic image is configured by 10 or more viewpoints, part of or whole intermediate images are sequentially arranged in tiles of respective rows starting from the first viewpoint.

In this way, an image frame having the same resolution as the stereoscopic image in both vertical and horizontal directions can be generated.

FIGS. 11A to 11C are diagrams showing arrangement examples of staircase patterned RGB pixel units.

FIG. 11A is a diagram showing an example of staircase patterned RGB pixel units in which subpixels constituting pixel units of viewpoint images from the first viewpoint to the sixth viewpoint are diagonally arrayed in a staircase pattern in a manner in which the subpixels mutually contact at their corners, and the staircase patterned RGB pixel units are each configured by three subpixels over three rows and one column. To convert a stereoscopic image having such staircase patterned RGB pixel units into intermediate images, subpixels constituting a staircase patterned RGB pixel unit are arrayed in a horizontal direction to form a parallel patterned RGB pixel unit. Next, for a staircase patterned RGB pixel unit of the same viewpoint arrayed in a staircase pattern by abutting the above staircase patterned RGB pixel unit at the corners, as shown in FIG. 11A, the subpixels are arrayed in a horizontal direction to form a parallel patterned RGB pixel unit, and the parallel patterned RGB pixel unit is diagonally arrayed in a staircase pattern by abutting the above staircase patterned RGB pixel unit at the corners to form an intermediate image.

FIG. 11B is a diagram showing an example of staircase patterned RGB pixel units each of which comprises six subpixels over three rows and two columns. To convert a stereoscopic image having such staircase patterned RGB pixel units into intermediate images, a parallel patterned RGB pixel unit is, first, configured by arraying a set of subpixels of the first column constituting a staircase patterned RGB pixel unit in a horizontal direction, and, then, arraying a set of subpixels of the second column thereof by further abutting the parallel patterned RGB pixel unit in a horizontal direction. Next, for a staircase patterned RGB pixel unit of the same viewpoint arrayed in a staircase pattern by abutting the above staircase patterned RGB pixel unit at the corners, as shown in FIG. 11B, a set of subpixels of the first column are arrayed in a horizontal direction to form a parallel patterned RGB pixel unit, and a set of subpixels of the second column thereof are arrayed by further abutting the parallel patterned RGB pixel unit in a horizontal direction.

FIG. 11C is a diagram showing an example of staircase patterned RGB pixel units each of which comprises nine subpixels over three rows and three columns. When converting a stereoscopic image having the staircase patterned RGB pixel units into intermediate images, similarly, a parallel patterned RGB pixel unit is, first, configured by arraying a set of subpixels of the first column constituting a staircase patterned RGB pixel unit in a horizontal direction, then, arraying a set of subpixels constituting the staircase patterned RGB pixel unit in the second column by abutting the parallel patterned RGB pixel unit in a horizontal direction, and, further, arraying a set of subpixels constituting the staircase patterned RGB pixel unit in the third column by abutting the parallel patterned RGB pixel unit in the second column in a horizontal direction.

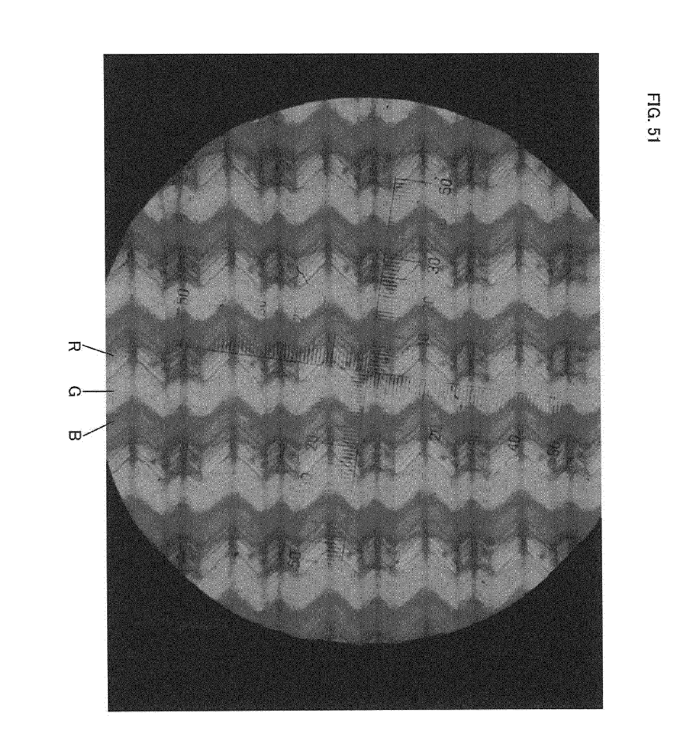

In the arrangement examples of the staircase patterned RGB pixel units shown in FIGS. 11A to 11C, it is preferable to obtain R, G, B values from a plurality of viewpoint images for each subpixel as shown in FIGS. 5A to 5C. In this way, degradation of resolution caused by calculating and obtaining R, G, B values for each pixel (for example, the horizontal resolution of FIG. 11B becomes half the one of FIG. 11A) can be prevented, and clear stereoscopic images can be provided to users. Generally, while subpixels are often vertically long rectangles with a ratio of 1 : 3, the shape of the subpixel may be a variety of shapes including a circle, dogleg, V shape, and 90-degree rotated W shape (refer to the illustration of FIG. 51) and, depending on the shape, the stereoscopic image may not be viewed properly with the staircase patterned RGB pixel units in which three subpixels are arrayed in a row. In such a case, it is preferable to prepare a mask in which the width of slits or holes of a parallax barrier through which the stereoscopic image is viewed and the arrangement interval thereof are widened, and, accordingly, to create staircase patterned RGB pixel units in which three subpixels are arrayed over two rows as in FIG. 11B or three rows as in FIG. 11C to appropriately display the stereoscopic image.

Next, generation of a stereoscopic image that is finally output from intermediate images for respective plurality of viewpoints performed at step S210 of FIGS. 2A to 2C is elaborated.

Generation of a stereoscopic image is performed by changing the arrangement of the subpixels constituting the parallel patterned RGB pixel units of intermediate images transmitted from an optical disc, such as a Blu-ray disc (registered trademark), a server, or the above-described first information processing device, into the arrangement for stereoscopic viewing. That is, the subpixels constituting the parallel patterned RGB pixel units are arrayed back into a staircase pattern to configure staircase patterned RGB pixel units. In such a case, it is preferable to use a stereoscopic image generation table that relates the positions of those subpixels. As the intermediate image generation table shown in FIGS. 7A and 7B relates the positions of subpixels constituting the parallel patterned RGB pixel units and the positions of subpixels constituting the staircase patterned RGB pixel units, the table can be used as a stereoscopic image generation table.

The staircase patterned RGB pixel units are generated again according to the reverse order of the arrangement rule indicated in the intermediate image generation table to generate a stereoscopic image.

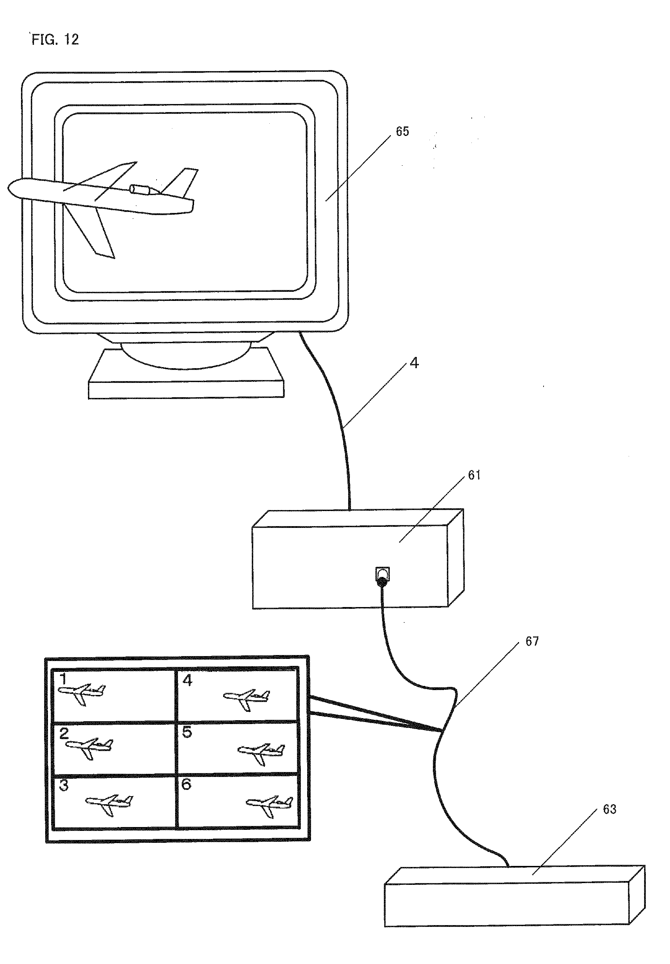

FIG. 12 is an external view showing an example of the embodiment of the stereoscopic image generation device 61 of the invention.

As shown in FIG. 12, the stereoscopic image generation device 61 of this embodiment is used by electrically connecting between a general image output device 63 and a general stereoscopic image display device 65 (a display) via a video cable 67, receives images of a plurality of viewpoints transmitted as image signals (image input signals) from the image output device 63, converts the images into a pixel arrangement for displaying a stereoscopic image based on a preset control information (information including a scanning method, a viewpoint number, a resolution, a pixel arrangement method, and the like), and transmits the images after converting the pixel arrangement as image signals (image output signals) to the stereoscopic image display device 65.

Here, as for the video cable 67 that electrically connects the stereoscopic image generation device 61, the image output device 63, and the stereoscopic image display device 65, specifically, those that are conventionally available, such as VDI, HMVI and other standards, can be used as a cable that transmits image signals by electrically connecting the image output device 63 and the stereoscopic image display device 65.

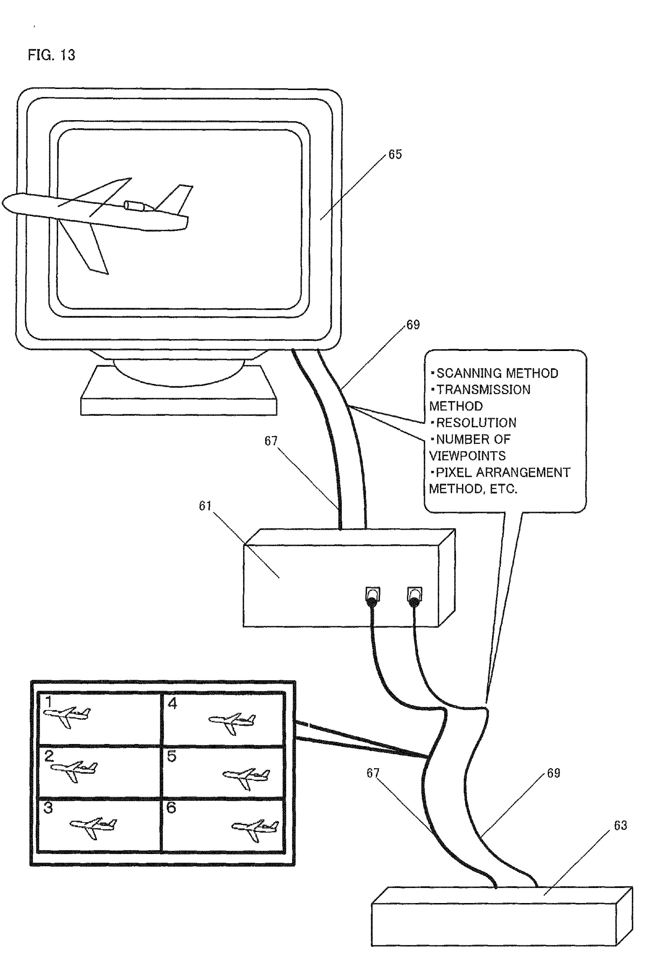

FIG. 13 is an external view showing an example of other embodiments of the stereoscopic image generation device 61 of the invention.

As shown in FIG. 13, the stereoscopic image generation device 61 may receive control signals by further electrically connecting with either or each one of the image output device 63 and the stereoscopic image display device 65 via a control cable 69. The control signal refers to a signal that provides control information other than images, such as a scanning method, resolution, viewpoint number, and pixel arrangement method, to the stereoscopic image generation device 61.

Here, for the control cable 69, specifically, those that are conventionally available of standards, such as i.LINK, serial, can be used as a control cable 69 that electrically connects the image output device 63 and the stereoscopic image display device 65.

However, while the video cable 67 and the control cable 69 are described as individual cables for convenience of explanation in FIG. 13, these cables may be bundled into one cable.

It should be noted those that are conventionally available as wireless communication means of standards, such as wireless LAN, Bluetooth (registered trademark), UWB (Ultra Wide Band), may also be used, instead of the above described cables, to transmit intermediate images (image signals) and transmit control signals.

It should be noted that existing image output technologies are most preferably utilized as is for the image output device 63 in light of the effect of the present invention. That is, the image output device 63 is preferably an existing reproducing device (including the one having a recording function), such as a set-top box that obtains motion pictures by streaming or downloading through terrestrial waves, satellite broadcasts, and the Internet, or stand-alone DVD player, Blu-ray (registered trademark) player, and the like.

Also, an existing stereoscopic image display device is most preferably utilized as is for the stereoscopic image display device 65 (a display) without adding any modification in light of the effect of the present invention. That is, the stereoscopic image display device 65 is preferably an autostereoscopic image display device, such as a liquid crystal display, plasma display, and organic EL (electroluminescence) display, employing an existing parallax barrier method, lenticular method, or the like, or the one that alternatively displays two viewpoint images at high speed and seen through shutter glasses, provided, however, it will be appreciated that the stereoscopic image generation device 61 of the invention may also be used in addition to the above-described stereoscopic image display device.

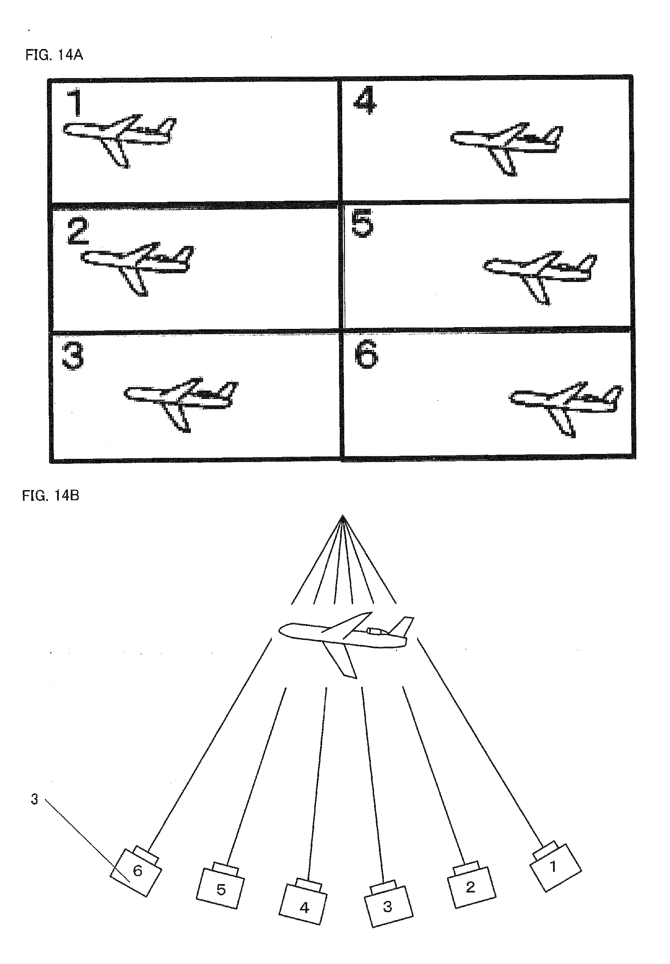

FIGS. 14A and 14B are diagrams showing an embodiment of images of a plurality of viewpoints that the stereoscopic image generation device 61 of the invention receives as image signals. The embodiment is a standard tile format for images of a plurality of viewpoints recommended in the invention and only pixels retrieved from the images of a plurality of viewpoints are arranged for converting into a pixel arrangement for stereoscopic image display. Generally, a predetermined compressed file is generated after being arranged in a tile format. Arbitrary resolution is used and compression standard MPG2, that is an irreversible compression, is often used. While it is not drawn in FIGS. 14A and 14B, intermediate images may be generated in a tile format for arbitrary viewpoint number based on the invention and used as the images of a plurality of viewpoints. Particularly, it is preferable to create intermediate images of respective viewpoints by a pixel arrangement method that arranges three subpixels constituting R, G, B of one pixel diagonally over three rows and three columns so that an image of an arbitrary resolution is set 960 pixels in a horizontal direction and 360 pixels in a vertical direction in 16:9 aspect ratio to convert the image to a pixel arrangement for stereoscopic image display. In this way, the resolution of tiled images of six viewpoints becomes 1920 × 1080, and the tiled images are received as high definition images that can be converted into a stereoscopic image with minimum image loss.

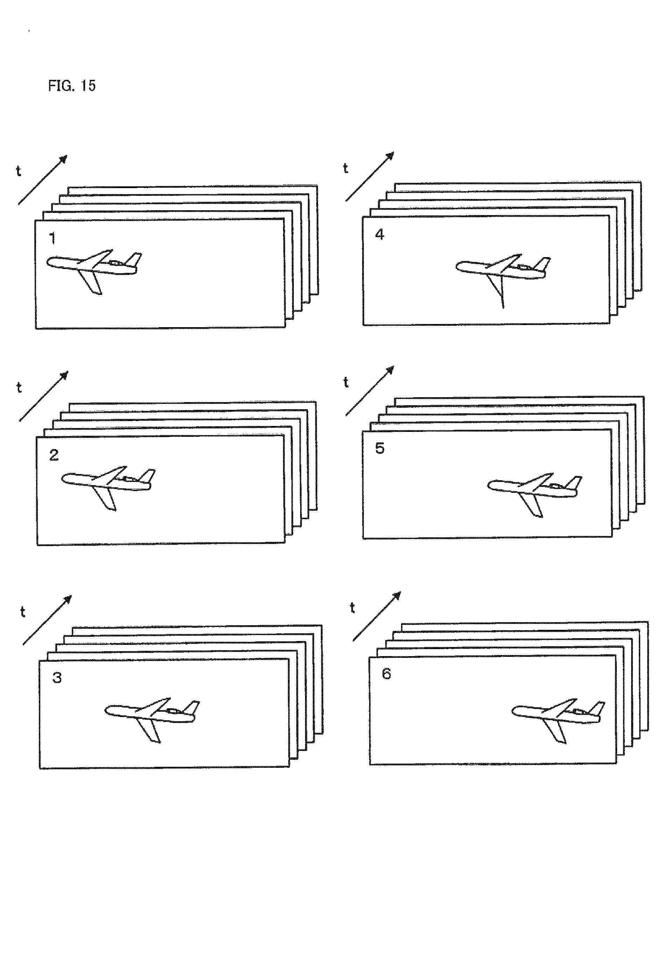

FIG. 15 is a diagram showing an example of motion pictures of a plurality of viewpoints that are received as motion picture signals by the stereoscopic image generation device 61 of the invention. Such motion pictures are widely known and can be created by multi-streaming of compression standard MPG4. A plurality of motion pictures synchronized with one file can be recorded. The received intermediate images from the first viewpoint to the Nth viewpoint are stored in a predetermined arrangement in storage means and converted to a pixel arrangement for stereoscopic image display.

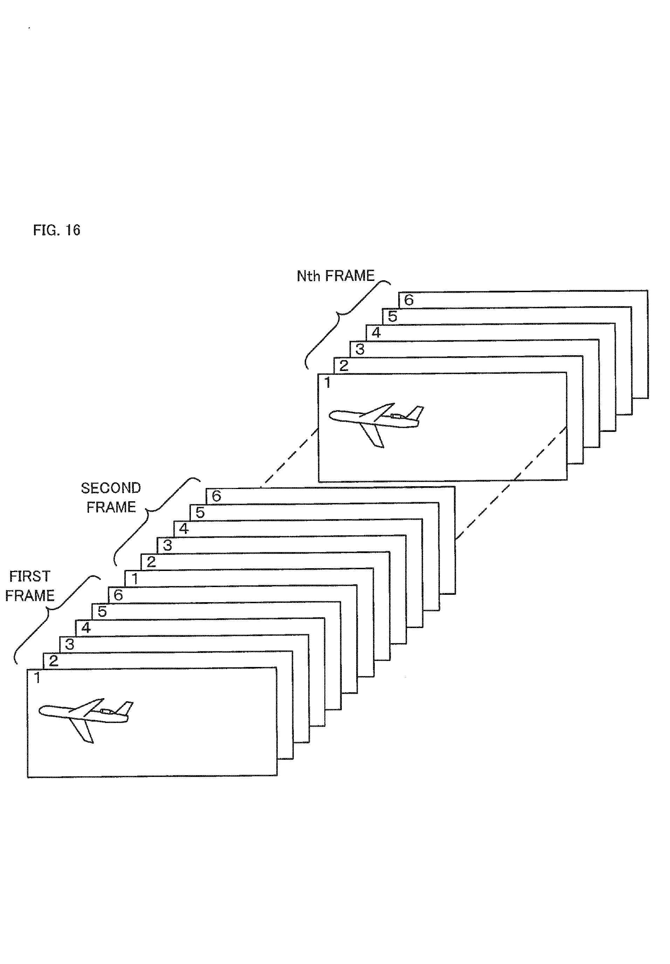

FIG. 16 is a diagram showing an example of motion pictures of a plurality of viewpoints that are received as motion picture signals by the stereoscopic image generation device 61 of the invention. The motion pictures of a plurality of viewpoints are formed by repeatedly allocating the motion pictures of respective viewpoints to respective continuous frames in a time direction. The received first viewpoint to Nth viewpoint intermediate images are sequentially stored in the storage means, and converted to a pixel arrangement for stereoscopic image display.

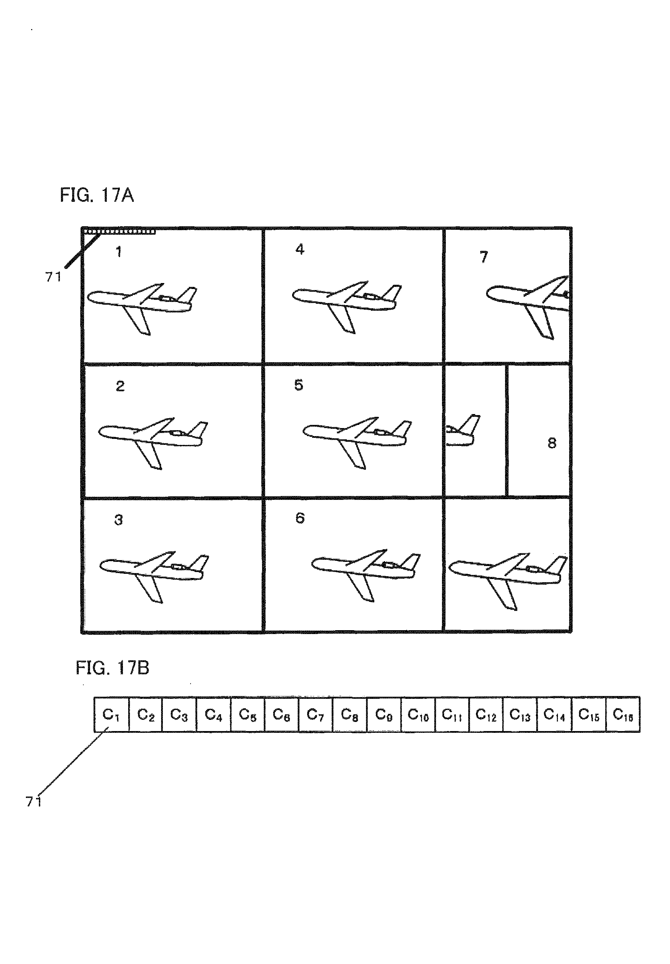

FIGS. 17A and 17B are diagrams showing the first embodiment of intermediate images of a plurality of viewpoints in which pixel information 71 that is received as image signals by the stereoscopic image generation device 61 of the invention is embedded. The pixel information refers to a predetermined code that defines information, such as distinction of two-dimensional images, a resolution, and a viewpoint number. The pixel information is embedded to inform whether the image is a stereoscopic image or a normal image to the stereoscopic image generation device or a converter (a stereoscopic image generation device).

FIG. 17A is a diagram showing a position where pixel information 71 in embedded on the image. According to FIG. 17A, the pixel information 71 is embedded in the upper left end of the image. However, while the position where pixel information 71 is embedded is based on the predefined arrangement pattern and does not necessarily be the upper left end, the position is hidden from users as the end of the image overlaps the monitor frame of the image output device 63 that is connected with the stereoscopic image generation device 61, providing a merit that does not affect displaying of stereoscopic images to users even through the image information 71 is embedded.

FIG. 17B is an enlarged view of the embedded pixel information 71. According to FIG. 71B, the pixel information 71 is tightly embedded in a row, provided, however, the pixel information may be embedded with a predetermined interval, while not shown in the drawings.

FIGA. 18A to 18C are diagrams showing the second embodiment of intermediate images of a plurality of viewpoints in which pixel information 71 is embedded and that are received as image signals by the stereoscopic image generation device 61 of the invention.

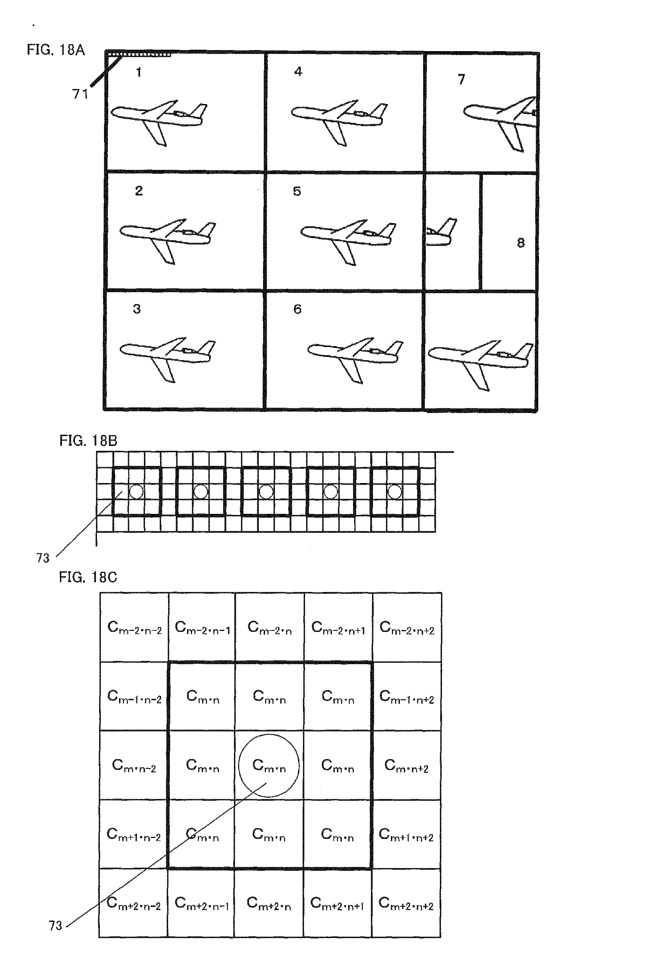

FIG. 18A is a diagram showing a position where pixel information 71 is embedded on the image.

FIG. 18B is an enlarged view of a part where pixel information 71 is embedded. In the second example, pixel matrices 73 in which a plurality pieces of pixel information 71 that are defined as identical image information are continuously arranged in X and Y directions are embedded.

FIG. 18C is an enlarged view showing one of the pixel matrices 73 of FIG. 18B. The $3 \times 3$ matrices in the middle enclosed by bold frames are the pixel matrices 73, and nine pieces of pixel information Cm●n that define the same image information are arranged. The stereoscopic image generation device 61 of the invention analyzes image information from pixel information 71 at the center of the pixel matrix 73 indicated by a circle. It should be noted that the position of the pixel information 71 at the center of the pixel matrix 73 is appropriately specified by specifying X and Y coordinates of pixel information 71 based on the predefined arrangement pattern. However, the image information may be calculated from the average value of a plurality pieces of pixel information 71 in the pixel matrix 73.

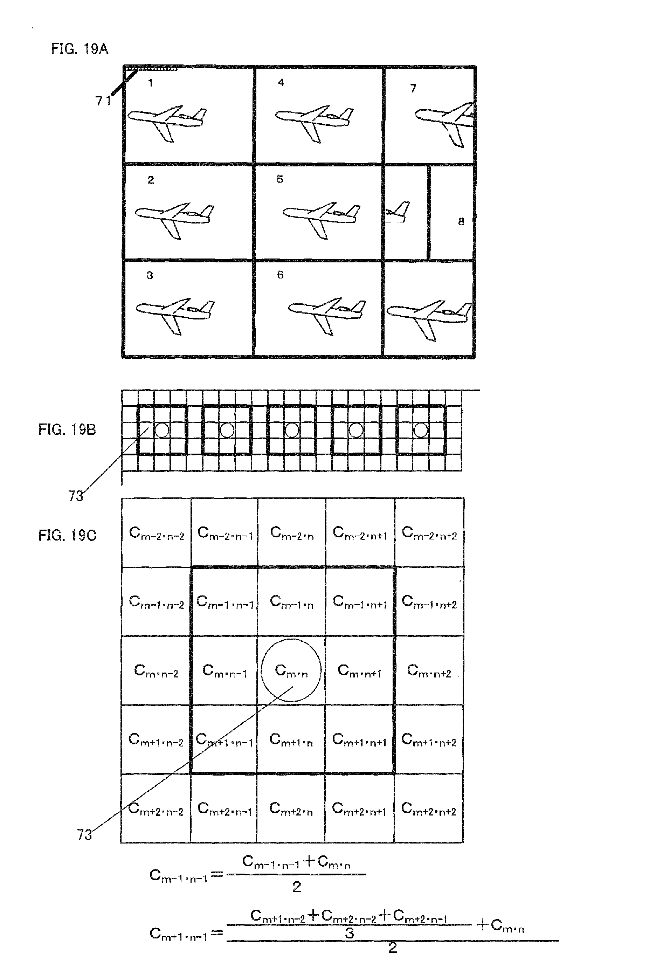

FIGS. 19A to 19C are diagrams showing the third example of intermediate images of a plurality of viewpoints in which pixel information 71 is embedded and that are received as image signals by the stereoscopic image generation device 61 of the invention.

FIG. 19A is a diagram showing a position where pixel information 71 is embedded on the image.

FIG. 19B is an enlarged view of a part where pixel information 71 is embedded.

FIG. 19C is an enlarged view showing one of the pixel matrices of FIG. 19B. In the third example, the pixel information 71 that is defined as image information is arranged at the center of the pixel matrix 73, and an intermediate value between the pixel neighbouring the pixel matrix 73 and pixel information 71 is embedded as pixel information 71 at the peripheral part of the pixel matrix 73.

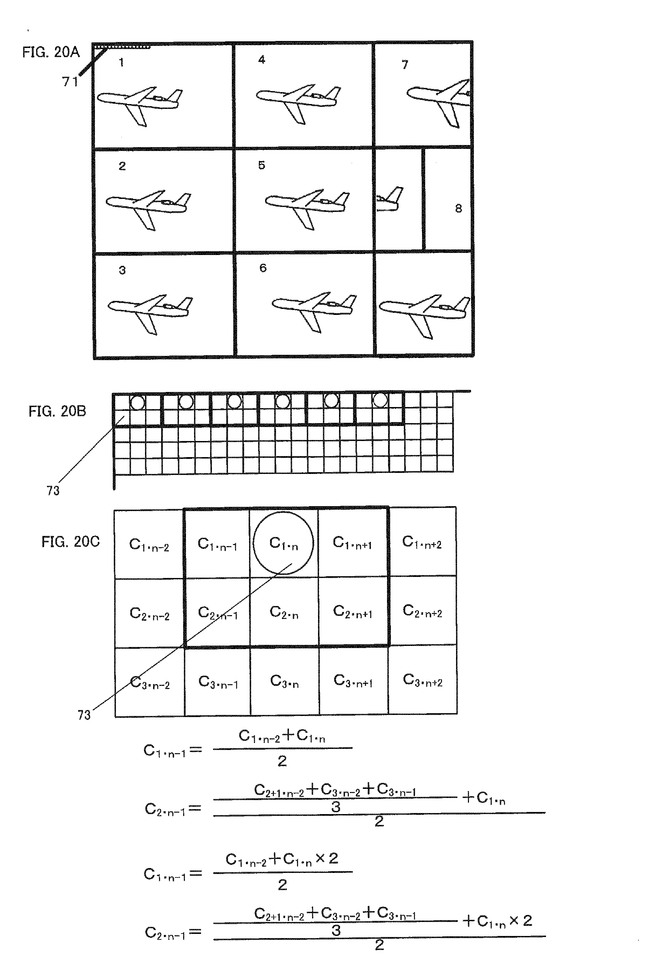

FIGS. 20A to 20C are diagrams showing the fourth example of intermediate images of a plurality of viewpoints in which pixel information 71 is embedded and that are received as image signals by the stereoscopic image generation device 61 of the invention.

FIG. 20A is a diagram showing a position where pixel information 71 is embedded on the image.

FIG. 20B is an enlarged view of a part where pixel information 71 is embedded. In the fourth example, the matrix 73 is $2 \times 3$. When compared with the pixel matrix 73 of the third example, the first row of pixel information 71 is eliminated and the matrix is arranged at the upper end of the image. Such an example is preferred, as the smaller the area occupied by the pixel matrix 73 becomes, the smaller the influence to the image becomes.

FIG. 20C is an enlarged view showing one of the pixel matrices 73 of FIG. 20B. The pixel information 71 that defines image information is arranged at the center part of the first row of the pixel matrix 73, and a pixel of an intermediate value between a pixel neighbouring the pixel matrix 73 and pixel information 71 or a pixel obtained by interpolating by adding a predetermined weight on both pixels is arranged at the peripheral part of the pixel matrix 73.

Here, weighting refers to multiplying predetermined times the value of pixel information 71 when calculating the intermediate value in order to accurately analyze the image information that is defined by the pixel information 71. While, according to FIG. 20C, the value of pixel information 71 is weighted by twice as much, weighting may be three times or four times as necessary. It should be added that weighting is possible in the third example.

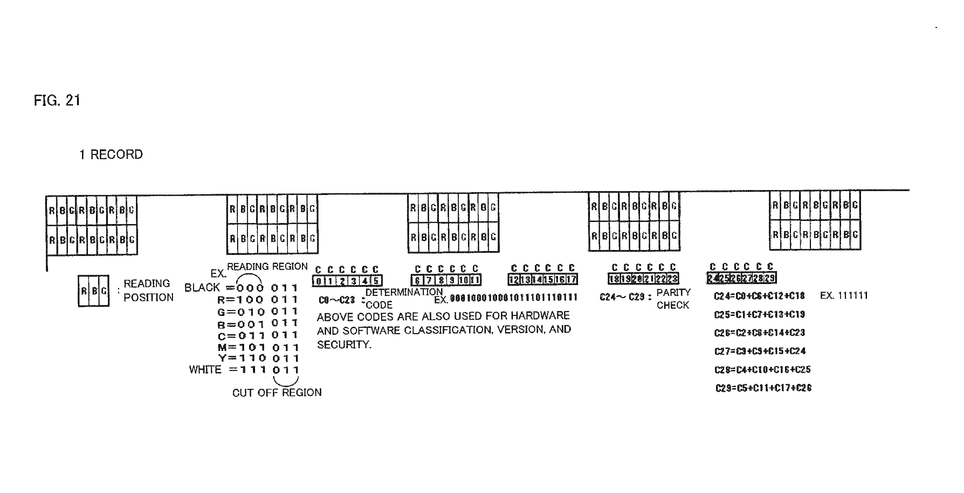

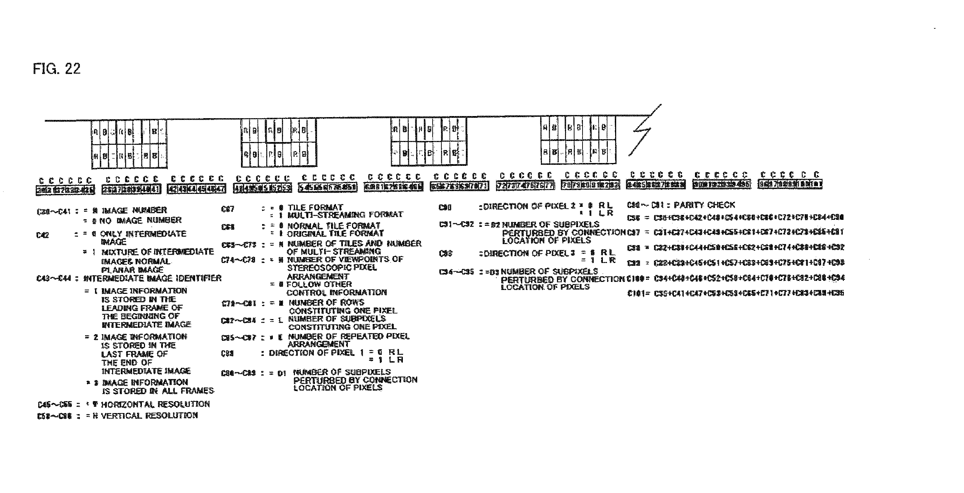

FIGS. 21 and 22 are diagrams illustrating what the image information actually means in the above examples. According to FIG. 21, codes $C_0$ to $C_{23}$ are used as determination codes (a header). The combination of R, G, B values of such determination codes is a combination that cannot be realized in a natural world so that the central processing unit 33 can recognize that the pixel information is embedded for defining image information.

Codes $C_{24}$ to $C_{29}$ are used for parity check as shown in FIG. 21. Codes $C_{30}$ to $C_{89}$ refers to control information as specifically shown in FIG. 22. Codes $C_{90}$ to $C_{95}$ are used for parity check as shown in FIG. 22.

Using pixel information 71 as described above, whether an image received as a video signal is a normal planar image or a plurality of intermediate images can be determined. This is because, if the image input to the stereoscopic image generation device 61 is a normal planar image, the image is required to be output as is to the stereoscopic image display device 65 without processing conversion of the arrangement of the pixels. It should be noted that, as R, G, B values of pixel information 71 change by irreversible compression as described above, the image information is preferably analyzed by referring to only upper bits of a predetermined digit number. The central processing unit 33 specifies the position where pixel information 71 is embedded based on a predetermined arrangement pattern, determines whether or not there is a header for verifying image information, and analyzes image information if there is a header.

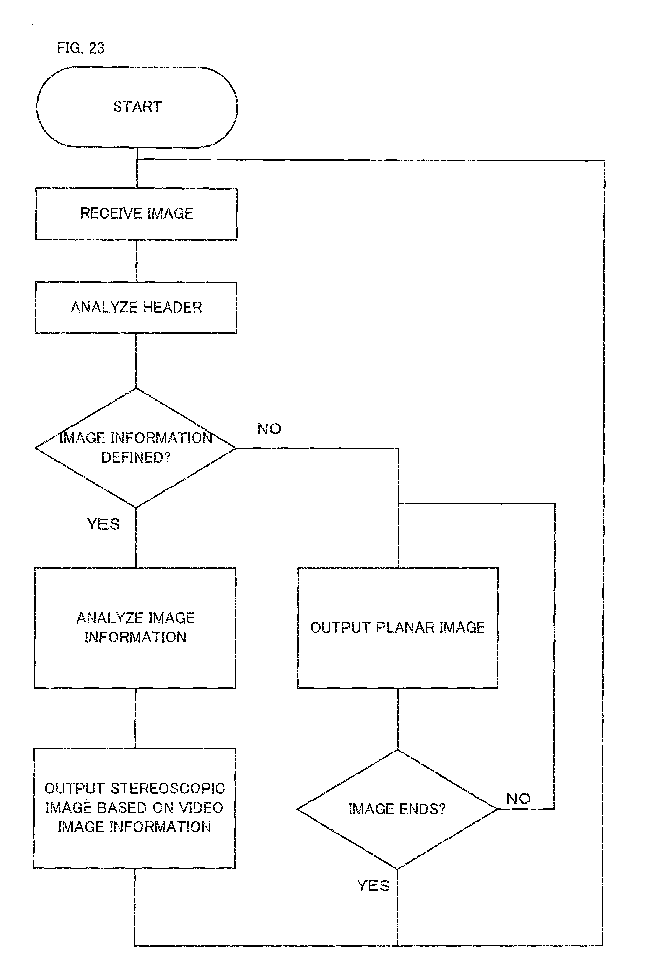

FIG. 23 is a flowchart showing a method of determining whether a normal planar image or intermediate images of a plurality of viewpoints by always embedding pixel information 71 that is defined as image information in the intermediate images of a plurality of viewpoints.

However, to prevent influence from a time direction due to irreversible compression, pixel information 71 that is defined as the same image information may be embedded in the frames before and after the frame at the moment when the intermediate images of the plurality of viewpoints starts and the frames before and after the frame at the moment when the intermediate images of the plurality of viewpoints ends.

According to FIG. 23, when the central processing unit 33 receives an image, the central processing unit 33 analyzes whether there is a header at a predetermined position, frame by frame, based on the predefined pixel arrangement pattern. (i) If there is a header, the frame is a frame of intermediate images of a plurality of viewpoints, and, as the frame defines image information, the central processing unit 33 analyzes the image information. (ii) If there is no header, the frame is a frame of a normal planar image, and, as the frame does not define image information, the central processing unit 33 does not analyze image information. When the above analysis ends, the central processing unit 33 moves on to analyze the next frame.

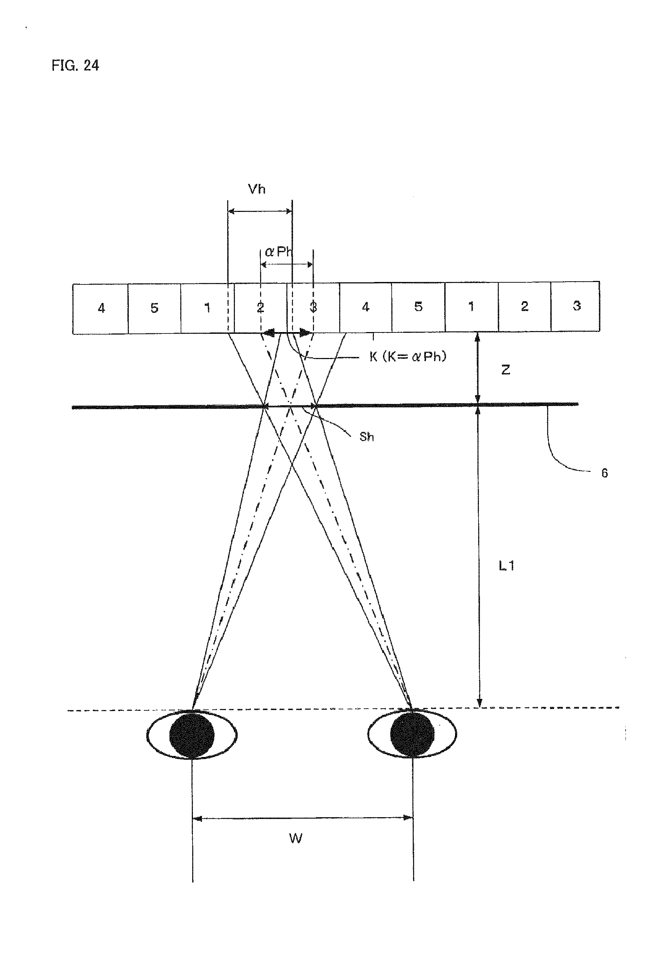

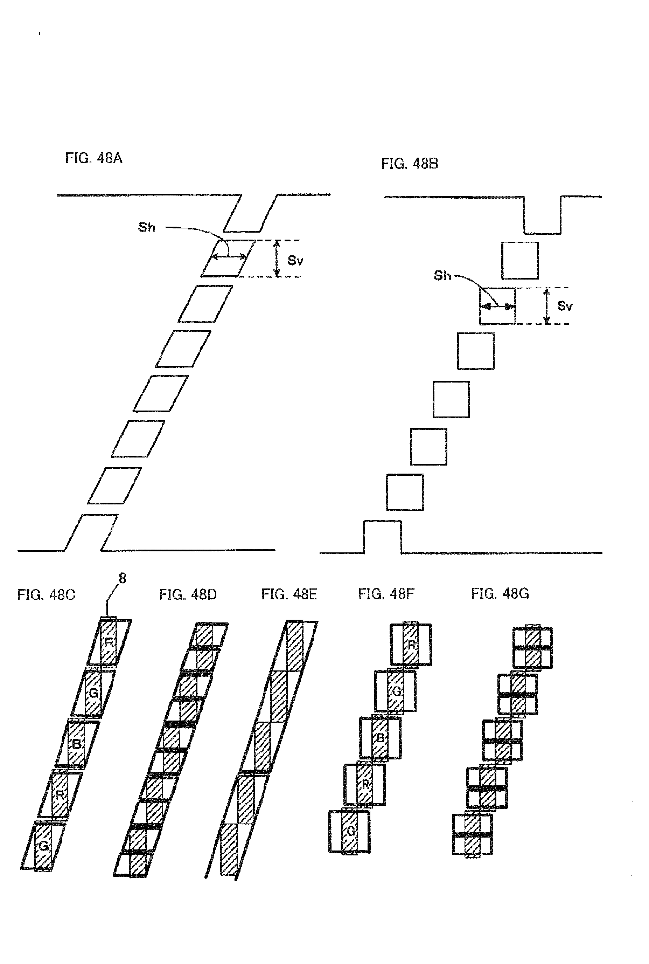

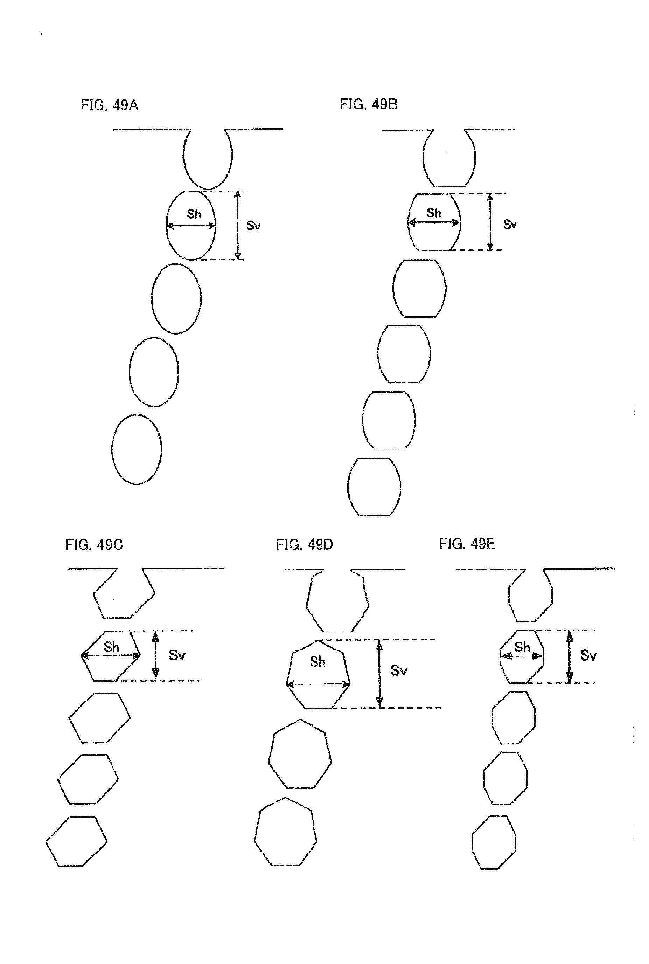

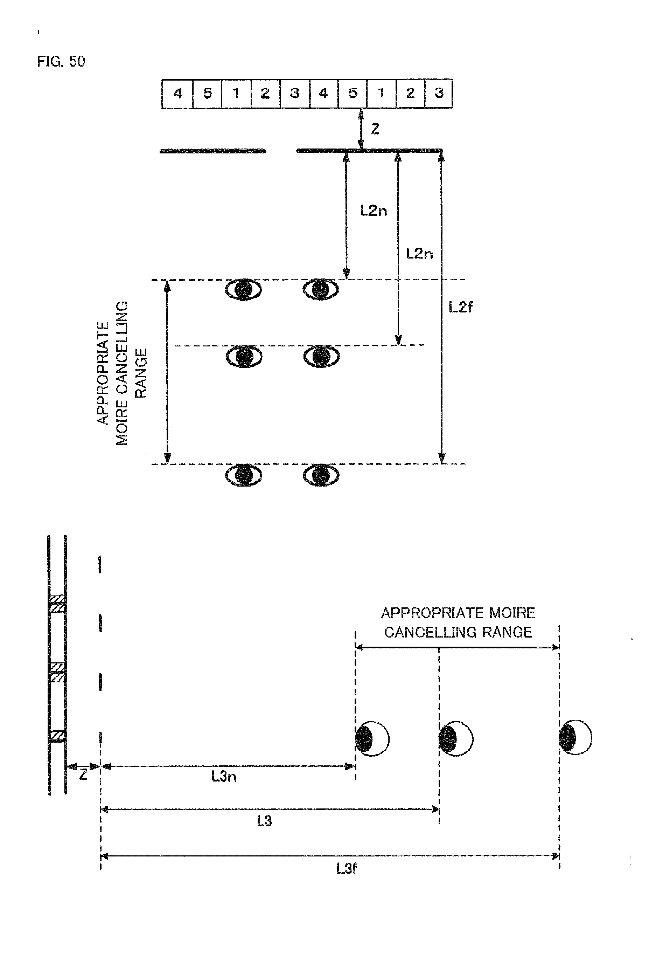

Next, with reference to FIGS. 24 to 50, the following describes the autostereoscopic image display device having a parallax barrier that outputs a stereoscopic image that is generated by the stereoscopic image generation method of the invention.

There is a problem in the autostereoscopic display device employing a conventional parallax barrier method, in which image quality of the displayed image is degraded. As the viewable ranges that subject persons of image presentation can see through the visible light transmitting sections are different, differences are generated in strength of the light that passes through respective visible light transmitting sections and proceeds to the subject persons of image presentation, and the light interferes one another, making interference patterns (moiré) seen by the subject persons of image presentation.

However, according to the configuration of the stereoscopic image display device of the embodiment, a predetermined most appropriate stereoscopically viewable position and a predetermined diagonal moiré canceling position are set at a position where people are most likely to make a crowd, and the distance from the screen display surface of the display to the parallax barrier and the interval of one or a plurality of horizontally abutting visible light transmitting sections can be determined by calculating back from these values. In this way, a subject person of image presentation at a predetermined diagonal moiré canceling position can always see a predetermined position of pixels that display an image of a predetermined viewpoint through the visible light transmitting sections of the parallax barrier, and moiré is completely cancelled at the predetermined moiré canceling position.

Here, the "visible light transmitting sections" are sections that transmit visible light and are provided on a surface that configures a parallax barrier and does not transmit visible light. That is, in the "visible light transmitting sections" of the invention, the shape of the edge of the slit may be linear, staircase pattern, zigzag, or a shape in which certain shape of arcs or elliptic arcs are repeated (skewered dumpling like shape). Moreover, arrangement of the slit may be a sine arc. Further, the visible light transmitting sections may be holes independently arranged on the parallax barrier.

It should be noted that not to transmit visible light means any one of the optical characteristics among (i) absorbing visible light, (ii) diffusely reflecting visible light, and (iii) specularly reflecting visible light.

Also, the "most appropriate stereoscopically viewable position" is a position from which a subject person of image presentation can particularly effectively obtain stereoscopic effects. That is, at the most appropriate stereoscopically viewable position, both eyes of the subject person of image presentation see centers of the pixels for stereoscopic display for viewpoints that should be seen through the visible light transmitting sections of the parallax barrier.

Also, the "moiré canceling position" refers to a position where a subject person of image presentation can effectively see stereoscopic images with completely diminished moiré. At a predetermined moiré canceling position, the subject person of image presentation can see predetermined positions of pixels for stereoscopic display that always display images for a predetermined viewpoint by either left or right eye through the visible light transmitting sections of the parallax barrier. At the moiré canceling position, the moiré canceling effect does not change even if the subject person of image presentation moves leftward, rightward, upward, or downward parallel to the autostereoscopic display. It should be noted that the concept of the moiré canceling position includes a diagonal moiré canceling position and a horizontal moiré canceling position that will be described later.

However, a position where a stereoscopic image can be particularly effectively seen (a most appropriate stereoscopically viewable position), a position where a diagonal moiré is cancelled (a diagonal moiré canceling position), and a position where a horizontal moiré is cancelled (a horizontal moiré canceling position) are different concepts, and the distances from these positions to the parallax barrier are not necessarily the same.

However, if these predetermined moiré canceling positions and the most appropriate stereoscopically viewable position are the same distance, stereoscopic images can be most effectively seen on the whole surface of the display.

Therefore, it can be considered that, if the moiré canceling position and the most appropriate stereoscopically viewable position are set as different distances, that is, for example, the moiré canceling position is set farther than the most appropriate stereoscopically viewable position from the parallax barrier, a stereoscopic image with which moire is especially cancelled for a subject person of image presentation at far place, can be seen by another subject person of image presentation without a stress caused by moire. In this way, attention of the subject person of image presentation can be attracted, which leads the subject person of image presentation to the most appropriate stereoscopically viewable position, to show particularly effective stereoscopic images.

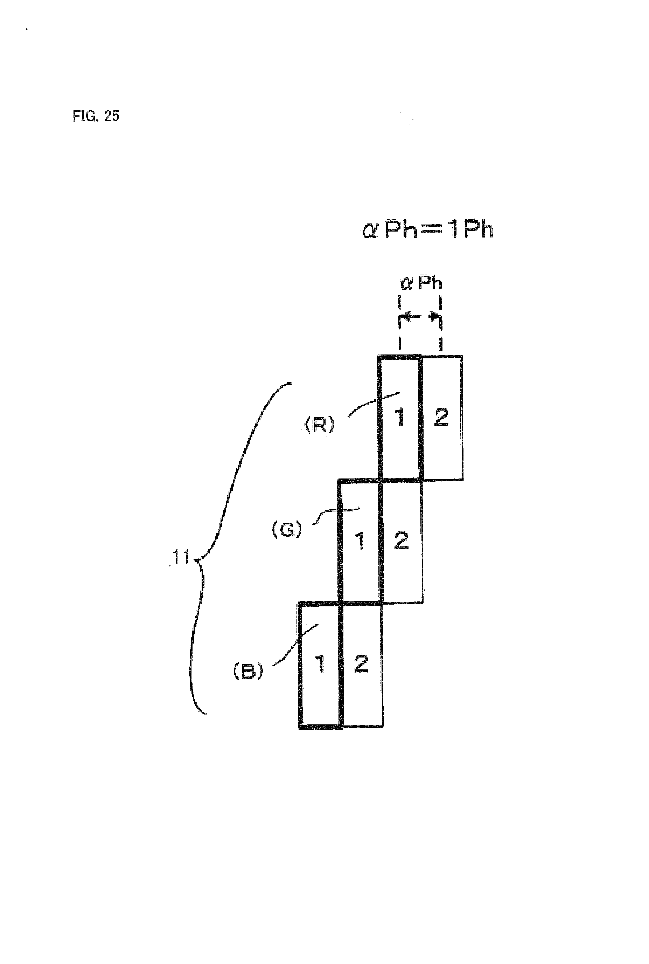

First, with reference to FIGS. 24 and 25, an appropriate value of the width Sh of the visible light transmitting section will be described.

Vh indicates the width of an effective viewable area that can be seen by one eye through a visible light transmitting section of width Sh; $\alpha$Ph indicates a distance between the centers of pixels for stereoscopic display that display images for neighbouring viewpoints; Z indicates a distance from the image display surface of the display to the parallax barrier; L1 indicates a distance from a subject person of image presentation at the most appropriate stereoscopically viewable position to the parallax barrier; W indicates a distance between the pupils of left and right eyes of the subject person of image presentation; and K indicates a distance between the focal points of both eyes of the subject person of image presentation. Also, the alternate long and short dash line that extends from one eye of the subject person of image presentation to the display indicates the line of fixation of the subject person of image presentation.

For example, the most appropriate stereoscopically viewable position may be defined at a position where the subject person of image presentation can see an autostereoscopic image particularly effectively in consideration of the purpose and the installation location of the autostereoscopic image display device and the like. That is, the distance L1 from the most appropriate stereoscopically viewable position to the parallax barrier may be an arbitrary value.

Also, the distance W between the pupils of the left and right eyes of the subject person of image presentation may be set, for calculation, 60-65 mm if the main audience of the stereoscopic image is European, 65-70 mm for Asian, and 50-60 mm for child.

Also, for the distance $\alpha$Ph between the centers of the pixels for stereoscopic display that display images of neighbouring viewpoints, for example, when three subpixels constitute a pixel for stereoscopic display and the subpixels are concatenated and arranged in a diagonal direction as illustrated in FIG. 25, the value of $\alpha$Ph becomes 1Ph.

Next, the value of the width Vh of the effective viewable area that one eye of the subject person of image presentation can see through the visible light transmitting sections of the parallax barrier is determined.

The effective viewable area refers to an area on an image display surface that the subject person of image presentation at the most appropriate stereoscopically viewable position can see through the visible light transmitting sections of the parallax barrier. That is, the range of the display intended to be seen by the subject person of image presentation at the most appropriate stereoscopically viewable position.

The width Vh of the effective viewable area is a horizontal width of an image display surface seen by one eye, that is required to generate appropriate view mix by seeing part of left and right pixels for stereoscopic display centering on pixels for stereoscopic display that display images for neighbouring viewpoints that are supposed to be seen by both eyes in order to decrease jump points at which the position of an object is inverted back and forth and that occur when a person moves and when images are mixed by transition of visual contacts to images of other viewpoints and the left and right eyes see images of inverted viewpoints.

Therefore, while, if Vh is large, transition of viewpoints and jump points decrease, the stereoscopic effect decreases as the person sees pixels for stereoscopic display that are different from pixels for stereoscopic display that display images of neighbouring viewpoints that are supposed to be seen by both eyes (particularly, both eyes see the overlapping same images). On the other hand, while, if Vh value is small, the stereoscopic effect of the image is enhanced and the stereoscopic image is displayed clearly, the jump points increase. However, the above effects will largely depend on the shape and arrangement of the slits or visible light transmitting sections.

In this way, a more effective stereoscopic image can be provided by increasing/decreasing the size of the width of the effective viewable area depending on the purpose of the stereoscopic image or the like as necessary to cater to the need and situation of the subject person of image presentation.

It should be noted that, as seen from FIG. 24, at the most appropriate stereoscopically viewable position, as the lines of fixation (alternate long and short lines in FIG. 24) of the subject person of image presentation see the centers of respective pixels for stereoscopic display, the distance K between the focal points of the left and right eyes becomes the same value as $\alpha$Ph.

Next, based on the value of the width Vh of the determined effective viewable area, the value of a distance Z from the image display surface of the display to the parallax barrier will be calculated by the following formula.

It should be noted that Z is a distance from the display surface to the parallax barrier even after processing non-glare treatment to the display surface of the stereoscopic image display device or attaching a transparent sheet as a non-glare protector to the display surface.

As seen from FIG. 24, there is a relationship between Z : L1 and $\alpha$Ph : W as expressed by the following formula:

$$\frac{Z}{\alpha P h} = \frac{L1}{W} \quad \dots \dots \dots \langle 1 \rangle$$

Therefore, the distance Z is expressed by the following formula:
$$Z = \frac{\alpha P h \times L1}{W}$$

Next, based on the value of the determined distance Z, the value of the width Sh of the visible light transmitting section is calculated:

From the above formula <1>, L1 is expressed by the following formula:
$$L1 = \frac{Z \times W}{\alpha P h} \quad \dots \dots \dots \langle 2 \rangle$$

Also, as seen from FIG. 24, there is a relationship between S : Vh and L1 : (L1 + Z) as expressed by the following formula:
$$\frac{Sh}{L1} = \frac{Vh}{L1 + Z}$$

Therefore, the height Sh of the visible light transmitting section is expressed by the following formula:
$$Sh = \frac{L1 \times Vh}{L1 + Z} \quad \dots \dots \dots \langle 3 \rangle$$

Then, if the formula <2> is assigned to <3>, Sh is expressed by the following formula:
$$Sh = \frac{Z \times W / \alpha P h \times Vh}{Z \times W / \alpha P h + Z} = \frac{Z \times W \times Vh}{(Z \times W) + (Z \times \alpha h P)}$$

$$Sh = \frac{W \times Vh}{W + \alpha h P}$$

In this way, the value of Sh can be calculated using the values of W, αPh, and Vh.

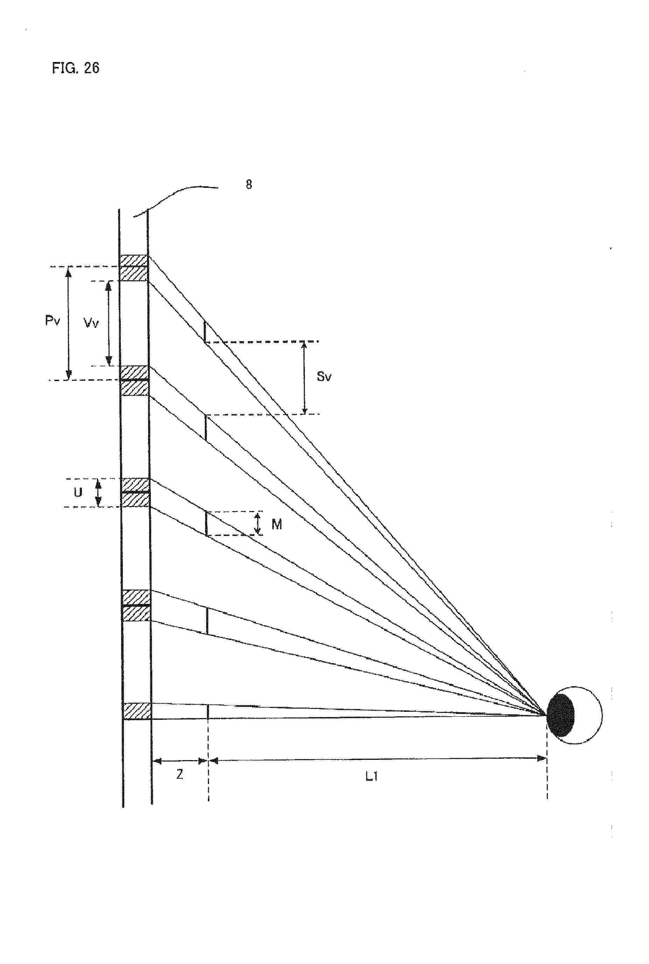

Next, with respect to the case in which the shape of the edges of the slits as the visible light transmitting sections constituting the parallax barrier is a staircase pattern or the shape of repeated circular arcs, elliptic arcs, or polygons, or the shape of the visible light transmitting sections constituting the parallax barrier is a plurality of independently formed holes, the height Sv of the visible light transmitting sections of the repeated shape or the plurality of holes will be calculated with reference to FIG. 26.

Here, the height Vv of the effective viewable area of the parallax barrier is a range of the display seen through the visible light transmitting section of height Sv from the most appropriate stereoscopically viewable position, and the value can be a predetermined value depending on the conditions, such as the location where the autospectroscopic display is installed.

For example, in order to suppress the aperture ratio of the parallax barrier to lower the illuminance of the display, the value of the effective viewable area may be set small.

Also, as another method to adjust the aperture ratio of the parallax barrier, one unit of the edge of a plurality of repeated slits or a visible light transmitting section may be used for each subpixel, or a visible light transmitting section of the repeated shape or a visible light transmitting section of the plurality of holes may be used for two or more subpixels.

In this way, even when the ratio of the number of visible light transmitting sections for one subpixel is not 1 : 1, the height Vv of the effective viewable area still refers to the range of the display seen through the height of the visible light transmitting section.

As seen from FIG. 26, there is a relationship between Sv : Vv and L1 : (L1 + Z) as expressed by the following formula:

$$\frac{S v}{L 1} = \frac{V v}{L + Z}$$

Therefore, the height Sv of the visible light transmitting section can be expressed by the following formula:

$$S v = \frac{L 1 \times V v}{L + Z}$$

In this way, the value of the height Sv of the visible light transmitting section can be calculated back by determining the value of the height Vv of the effective viewable area.

Also, the height Sv of the visible light transmitting section can be calculated by the following formula based on the interval Hv of the visible light transmitting sections.

$$S v = \lambda \times H v$$

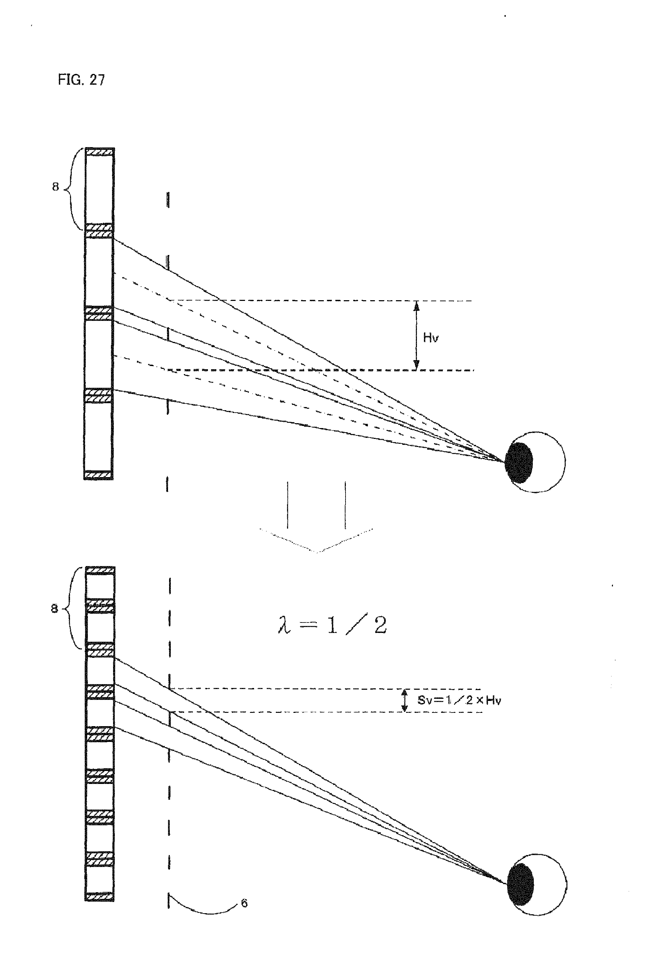

That is, as shown in FIG. 27, after first calculating the interval Hv of the visible light transmitting sections based on the above formula, the value of $\lambda$ is determined (1/2 in FIG. 27) and assigned to the above formula, whereby the height of the visible light transmitting section can be calculated.

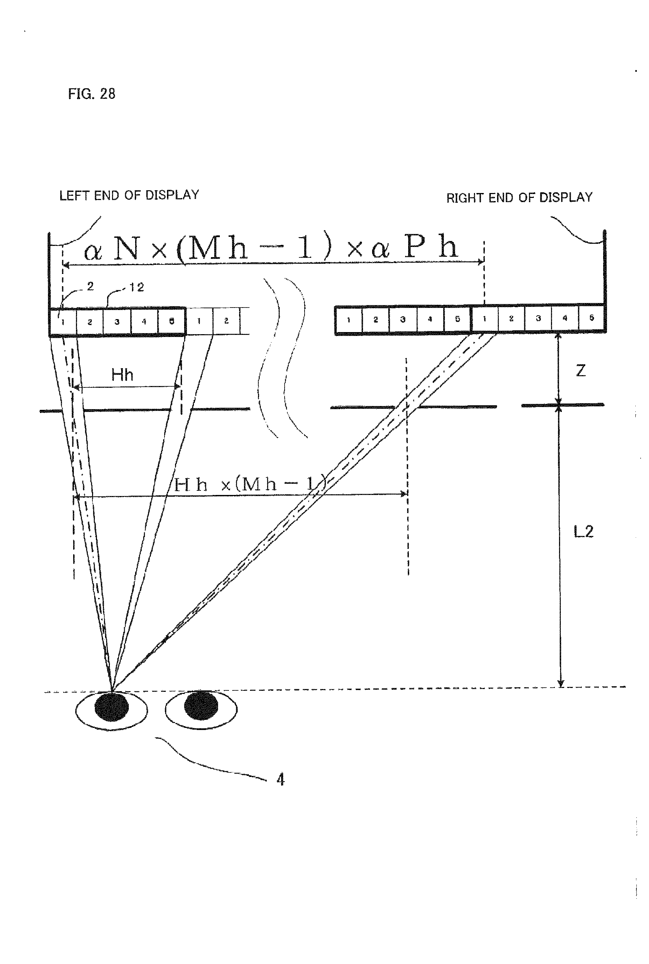

Next, with reference to FIG. 28, based on a distance L2 from a predetermined diagonal moiré canceling position to the parallax barrier, the interval Hh of the plurality of horizontally abutting visible light transmitting sections that constitute the parallax barrier is calculated.

In FIG. 28, a subject person of image presentation at the predetermined diagonal moiré canceling position sees a pixel for stereoscopic display constituting a staircase patterned RGB pixel block 13 at the lift end of the display and a pixel for stereoscopic display constituting a staircase patterned RGB pixel block 13 at the right end of the display by one eye (the left eye) through visible light transmitting sections of the parallax barrier. The pixels for stereoscopic display that the subject person of image presentation sees display images for the same viewpoint.

In this way, as long as the subpixels seen through the visible light transmitting sections of the parallax barrier always display images of the same viewpoint, the subject person of image presentation will not see moiré on the screen.

Here, first, at a predetermined diagonal moiré canceling position, the number Mh of visible light transmitting sections in a horizontal direction between the visible light transmitting section of the parallax barrier corresponding to the staircase patterned RGB pixel block 13 at the lift end of the display and the visible light transmitting section of the parallax barrier corresponding to the staircase patterned RGB pixel block 13 at the right end of the display can be expressed by the following formula using the number of viewpoints N and horizontal resolution Ir for displaying a stereoscopic image.

$$M h = \text{int}\left(\frac{3\,I\,r - 1}{N}\right) + 1$$

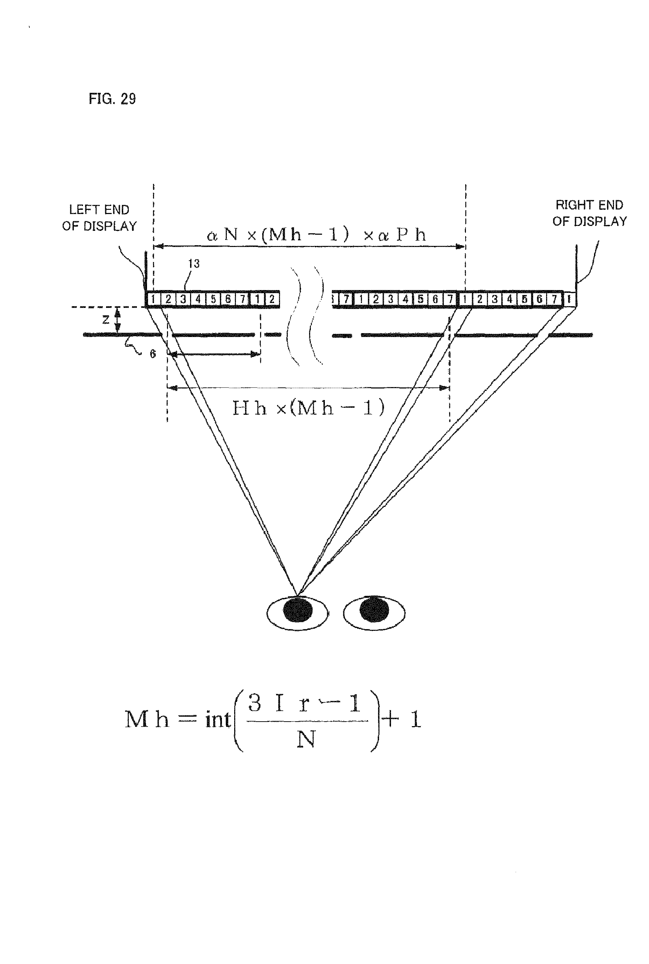

That is, 3Ir obtained by multiplying the horizontal resolution Ir by 3 (R, G, B) is the number of subpixels in a horizontal direction. Subtracting 1 therefrom is because, as illustrated in FIG. 29, for example, if the number of viewpoints is seven, a subpixel at the right end of the display sometimes does not display an image for the seventh viewpoint which is the last viewpoint in the viewpoints and, instead, displays the first viewpoint. In such a case, the calculation should be done after subtracting the number of subpixel that displays the image for the superfluous first viewpoint. Also, adding 1 at the end is to compensate the lacking one to the actual Mh value as one is subtracted from the total number of the subpixels and rounded to the whole number even when a subpixel for displaying an image for the superfluous first viewpoint does not exist at the right end of the display.

Also, a distance from the center of the visible light transmitting section for a pixel for stereoscopic display constituting a staircase patterned RGB pixel block 13 at the left end of the display to the center of the visible light transmitting section for a pixel for stereoscopic display, that display an image of the same viewpoint, constituting a staircase patterned RGB pixel block 13 at the right end of the display, becomes a value obtained by multiplying Hh (the interval of visible light transmitting sections in a horizontal direction) by (Mh - 1).

$$H h \times (M h - 1)$$

Further, a distance in a horizontal direction from the center of the pixel for stereoscopic display constituting a staircase patterned RGB pixel block 13 at the left end of the display to the center of the pixel for stereoscopic display, that display an image of the same viewpoint, constituting a staircase patterned RGB pixel block 13 at the right end of the display seen by a subject person of image presentation through the visible light transmitting sections of the parallax barrier, can be expressed by the following formula using the number of viewpoints of images for generating an autospectroscopic image and a distance αPh between the centers of pixels for stereoscopic display that display an image for a neighbouring viewpoint.

$$N \times (M h - 1) \times \alpha P h$$

As seen from FIG. 28, there is a relationship between [Hh × (Mh - 1)] : [N × (Mh - 1) × αPh] and L2 : (Z + L2) as expressed by the following formula:

$$\frac{H h \times (M h - 1)}{L 2} = \frac{N \times (M h - 1) \times \alpha P h}{Z + L 2}$$

Therefore, the value of Hh can be calculated by the following formula:

$$H h = \frac{N \times \alpha P h \times L 2}{Z + L 2}$$

In this way, based on the distance L2 from a predetermined diagonal moire canceling position to the parallax barrier, the value of the interval Hh of the plurality of horizontally abutting visible light transmitting sections that constitute the parallax barrier can be determined.

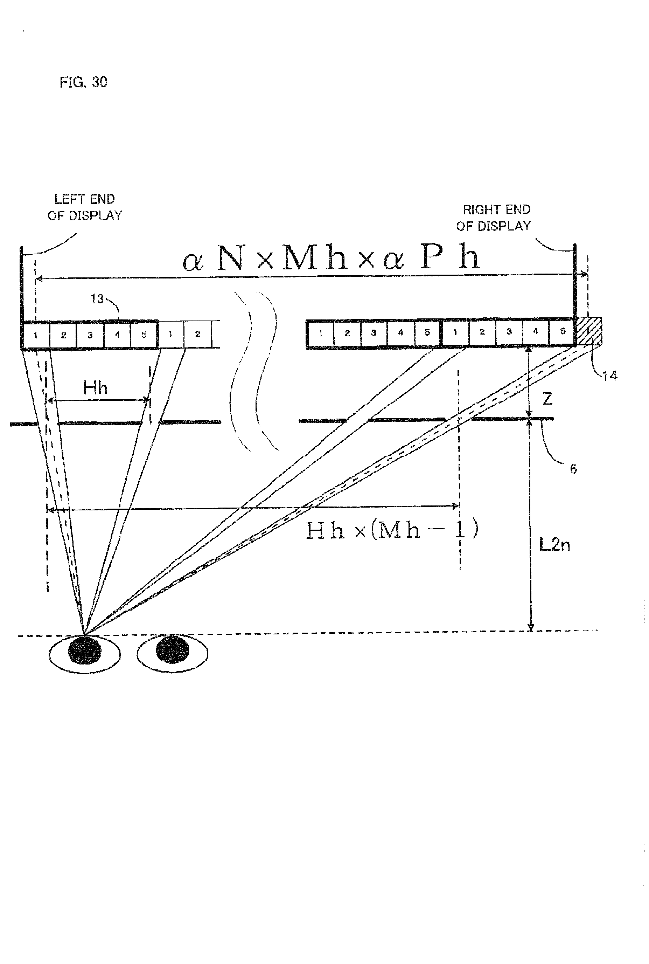

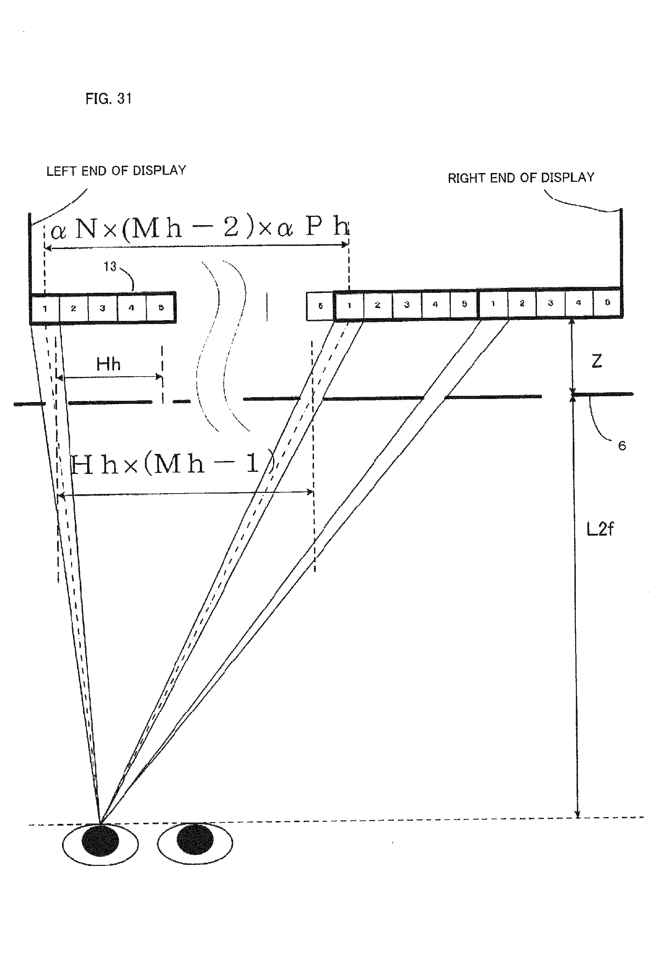

Next, with reference to FIGS. 30 and 31, the interval Hh of a plurality of horizontally abutting visible light transmitting sections constituting the parallax is calculated based on a distance from the parallax barrier to the position where one line of diagonal moire is generated.

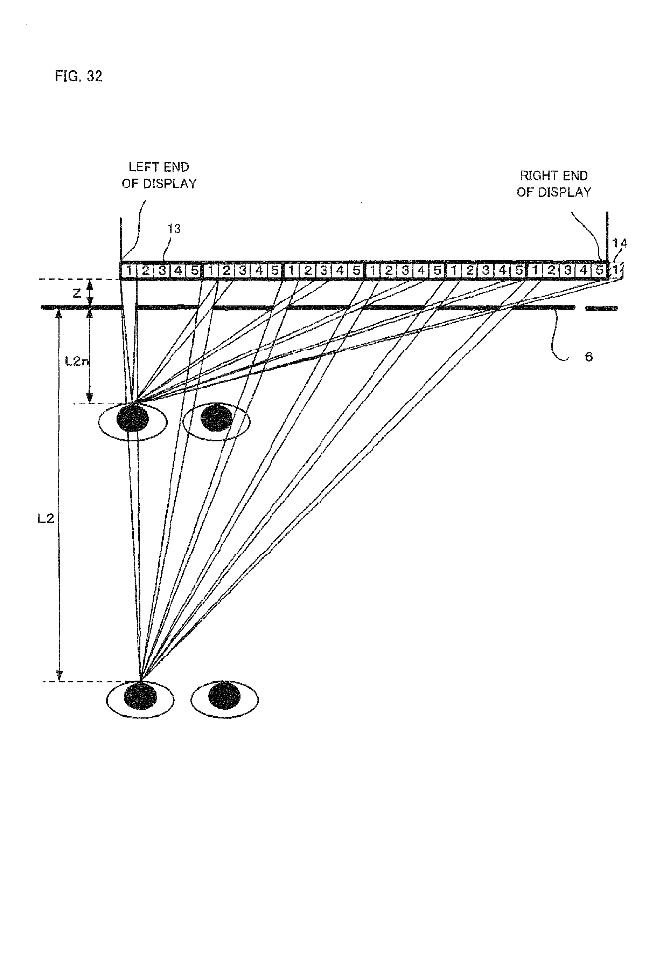

As illustrated in FIG. 30, in a predetermined distance from a position where one line of diagonal moiré is generated to the parallax barrier 6, while there are two kinds of such positions, away from and close to the parallax barrier, L2n is defined as a distance from the position that is closer to the parallax barrier 6 to the parallax barrier 6. At L2n, as illustrated in FIG. 32, similarly to the case of a predetermined diagonal moiré canceling position (L2), a subject person of image presentation sees a pixel that displays an image for the first viewpoint among pixels for stereoscopic display that constitute a staircase patterned PGB pixel block 13 at the left end of the display through the visible light transmitting section of the parallax barrier. However, while the viewpoint moves to the right direction, the subject person of image presentation sees pixels for stereoscopic display for other viewpoints instead of the pixels for stereoscopic display for the first viewpoint through the visible light transmitting sections. Then, if a virtual pixel 14 is assumed at right of the right end of the display through the visible light transmitting section that transmits visible light when the subject person of image presentation at position L2 sees pixels for stereoscopic display for the first viewpoint among the staircase patterned RGB pixel block 13 at the right end of the display, the subject person of image presentation eventually sees the (virtual) pixel for stereoscopic display for the first viewpoint again. As such a cycle occurs once, it is considered that moiré is generated once at L2n.

When the value of L2n is defined as a predetermined value, based on this value, the interval Hh of the plurality of horizontally abutting visible light transmitting sections that constitute the parallax barrier is calculated.

That is, as seen from FIG. 30, there is a relationship between [Hh $\times$ (M - 1)] : [N $\times$ M $\times$ $\alpha$Ph] and L2 : (Z + L2n) as expressed by the following formula:

$$\frac{Hh \times (Mh - 1)}{L2n} = \frac{N \times Mh \times \alpha Ph}{Z + L2n}$$

Therefore, Hh can be calculated by the following formula:

$$Hh = \frac{N \times Mh \times \alpha Ph \times L2n}{(Z + L2n) \times (Mh - 1)}$$

Also, similarly to calculating the value of Hh based on L2n, the value of Hh can be calculated based on a predetermined distance L2f from the position where one line of diagonal moiré is generated to the parallax barrier, in which L2f is defined as a distance from the position away from the parallax barrier among the two kinds of such positions, away from and close to the parallax barrier, to the parallax barrier.

Similarly to the diagonal moiré canceling position (L2), while, at the position of L2f illustrated in FIG. 31, the subject person of image presentation sees a pixel that display an image for the first viewpoint among pixels for stereoscopic display constituting a staircase patterned RGB pixel block 13 at the left end of the display, through the visible light transmitting section of the parallax barrier, when the viewpoint shifts to the right direction, the subject person of image presentation sees pixels for stereoscopic display for viewpoints other than the pixels for stereoscopic display for the first viewpoint through the visible light transmitting section. Then, the subject person of image presentation eventually sees the pixel 2 for stereoscopic display for the first viewpoint in a staircase patterned RGB pixel block 13 at left of the staircase patterned RGB pixel block 13 at the right end of the display through the visible light transmitting section that transmits visible light when the subject person of image presentation at position L2 sees pixels for stereoscopic display for the first viewpoint among the staircase patterned RGB pixel block 13 at the right end of the display. As such a cycle occurs once, it is considered that moiré is generated once at L2f.

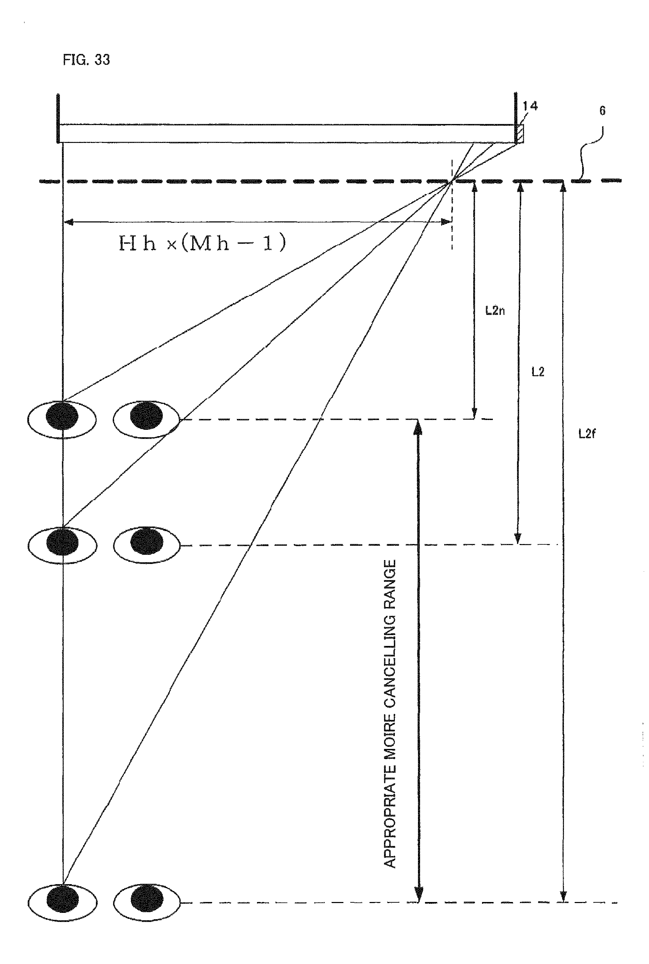

It should be noted that FIG. 33 illustrates a relative relationship among L2, L2n and L2f.

When the value of L2f is defined as a predetermined value, based on this value, the interval Hh between the plurality of horizontally abutting visible light transmitting sections constituting the parallax barrier is calculated.

That is, as seen from FIG. 31, there is a relationship between [Hh x (M - 1)] : [N × (M - 2) × αPh] and Z : (Z + L2) as expressed by the following formula:

$$\frac{Hh \times (Mh - 1)}{L2n} = \frac{N \times (Mh - 2) \times \alpha Ph}{Z + L2n}$$

Thus, the value of Hh can be calculated by the following formula:

$$Hh = \frac{N \times (Mh - 2) \times \alpha Ph \times L2f}{(Z + L2f) \times (Mh - 1)}$$

In this way, as the interval Hh of the plurality of horizontally abutting visible light transmitting sections constituting the parallax barrier can be calculated based on the values of positions (L2n, L2f) where one line of moiré is generated, for example, a position at which stereoscopic images can be particularly effectively seen can be clearly indicated to the subject person of image presentation by defining the range from the position L2n to the position L2f as an appropriate moiré canceling range. Further, by setting the moiré canceling area to the range where people are tend to make a crowd, attention of the subject persons of image presentation can be attracted.

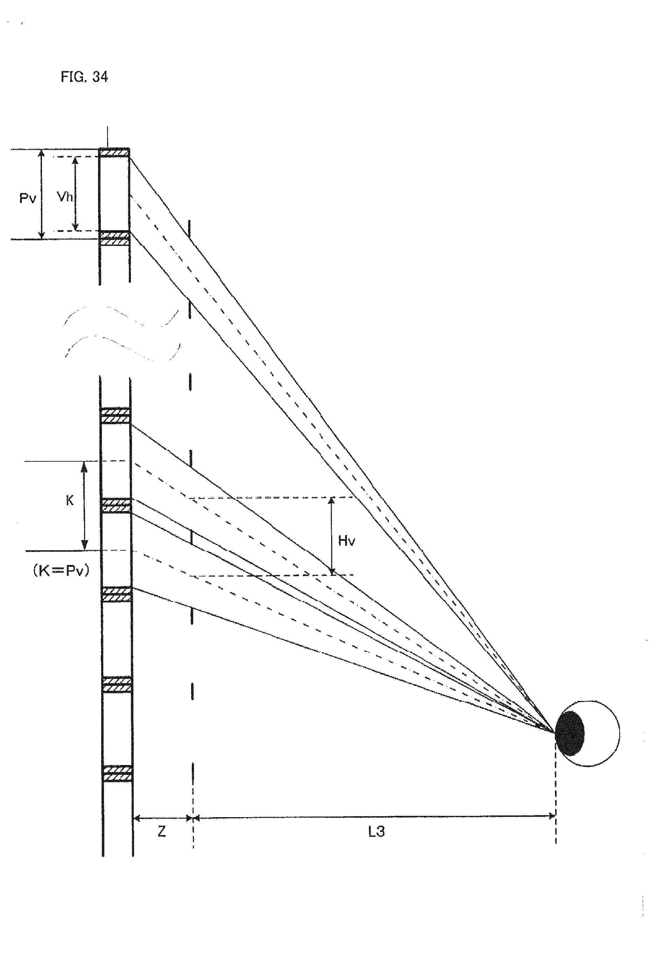

Next, with reference to FIG. 34, when the shape of the edge of the slits as the visible light transmitting sections constituting the parallax barrier is a staircase pattern, or the shape of repeated circular arcs, elliptic arcs, or polygons, or the shape of the visible light transmitting sections constituting the parallax barrier is a plurality of independently formed holes, the following describes a method for calculating the value of the interval Hv of visible light transmitting sections of the repeated shape or a plurality of hole shaped visible light transmitting sections that abut one another in a vertical direction of the parallax barrier, based on the value of the distance L3 from the a predetermined horizontal moiré canceling position to the parallax barrier.

Here, the alternate long and short dash line in FIG. 34 indicates the line of fixation of the subject person of image presentation, and K indicates the distance between the upper and lower focal points of the subject person of image presentation.

The value of the distance L3 from the parallax barrier to the predetermined horizontal moiré canceling position is determined by at which distance from the display the stereoscopic image is desired to be presented to a subject person of image presentation in a condition where moiré is cancelled.

Also, as the subject person of image presentation at the horizontal moiré canceling position always focuses on the centers of subpixels through the visible light transmitting sections of the parallax barrier, the distance K between the focal points of the subject person of image presentation becomes equal to the height Pv of the subpixels.

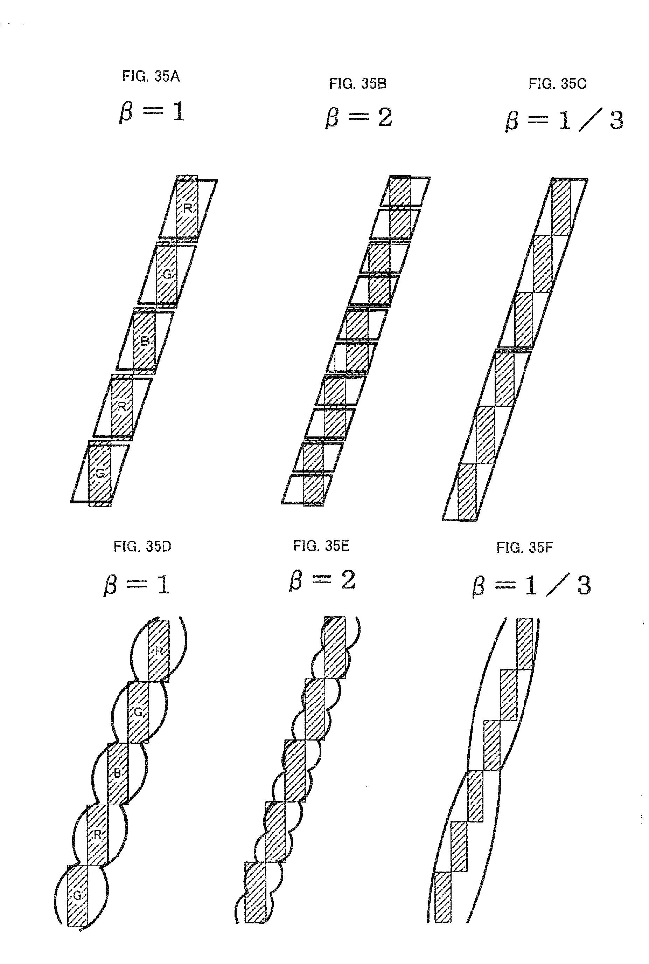

Also, β represents the number of visible light transmitting sections in a vertical direction corresponding to one subpixel. For example, as shown in FIGS. 35A and 35D, if one visible light transmitting section is formed for one subpixel, β is 1. Similarly, as shown in FIGS. 35B and 35E, if two visible light transmitting sections are formed for one subpixel, β is 2. Further, as shown in FIGS. 35C and 35F, if one visible light transmitting section is formed for three subpixels, β is 1/3.

That is, β is the number of units of the visible light transmitted sections of the repeated shape or the plurality of hole shaped visible light transmitting sections in a vertical direction corresponding to one subpixel.

It should be noted that a plurality of visible light transmitting sections provided for each subpixel are preferably integer number. Also, when providing one visible light transmitting section for a plurality of subpixels, integer number of visible light transmitting sections are preferably provided for one pixel for stereoscopic display.

Here, the value of the interval Hv of units of the repeated shapes or the visible light transmitting sections is calculated.

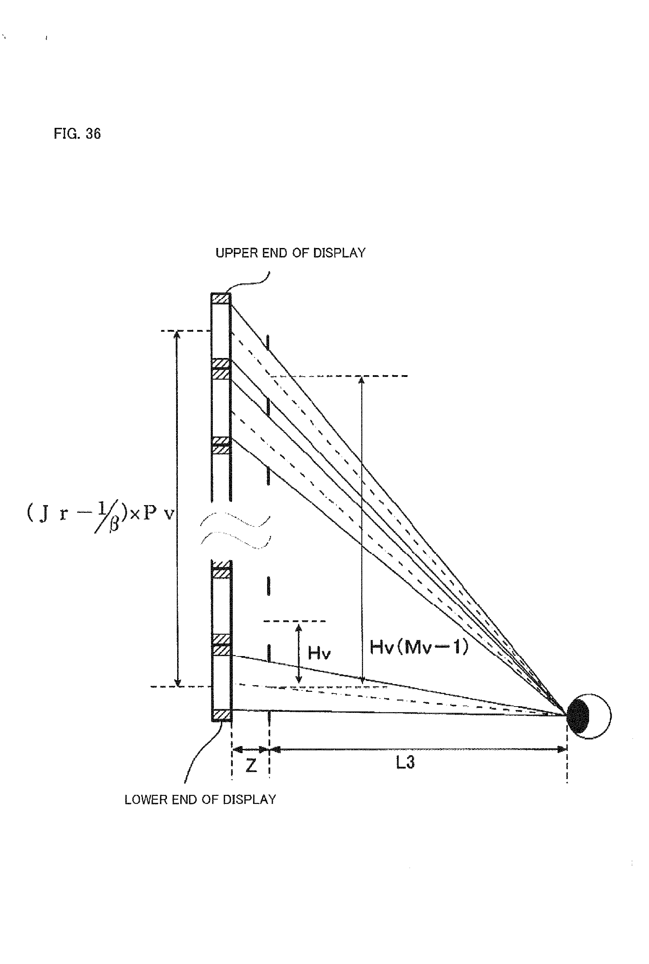

As seen from FIG. 36, the relationship between the distance between the focal points in a vertical direction K (= Pv) and L3 : (L3 + Z) at Hv × β : L3 can be expressed by the following formula:

$$\frac{Hv \times \beta}{L3} = \frac{Pv}{Z + L3}$$

Therefore, Hv is expressed by the following formula:
$$Hv = \frac{Pv \times L3}{(Z + L3) \times \beta}$$

In this way, at a predetermined horizontal moiré canceling position, the value of Hv with which moiré is particularly cancelled can be determined by calculating back from the value of L3.

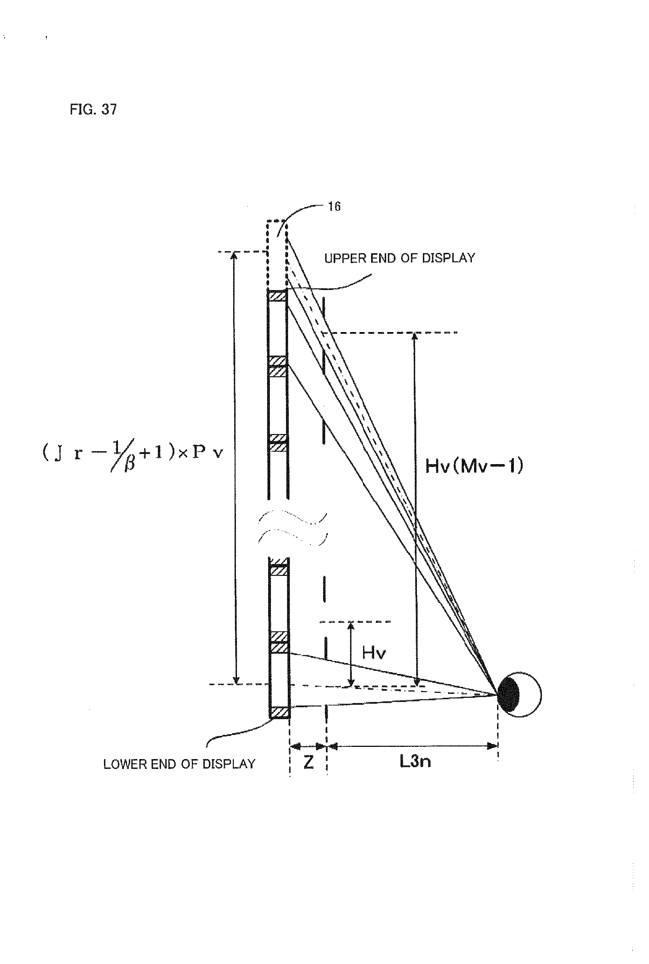

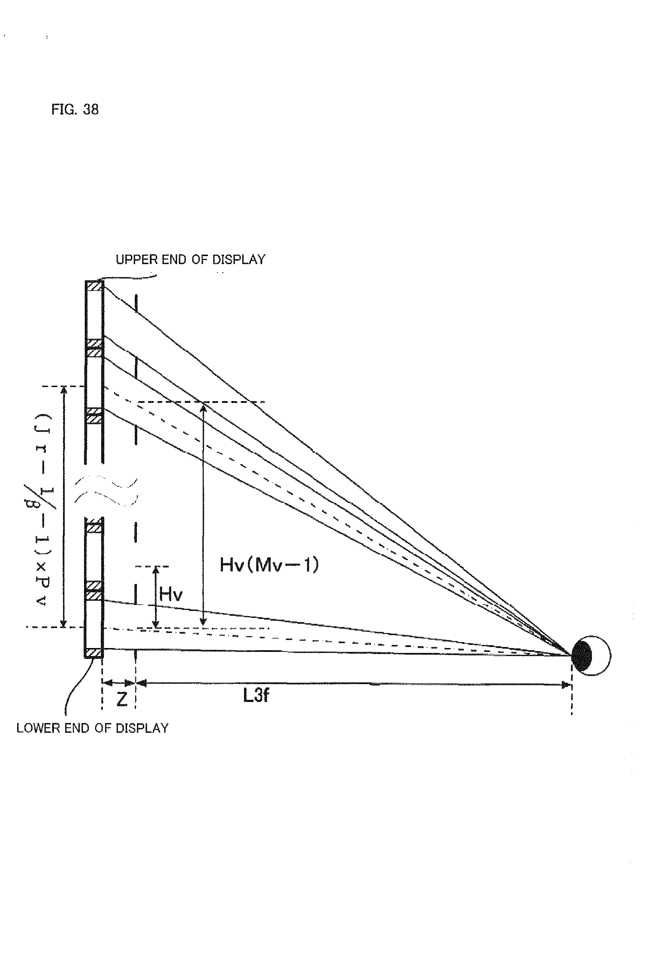

With reference to FIGS. 37 and 38, when the shape of the edge of the slits as the visible light transmitting sections constituting the parallax barrier is a staircase pattern, or the shape of repeated circular arcs, elliptic arcs, or polygons, or the shape of the visible light transmitting sections constituting the parallax barrier is a plurality of independently formed holes, the following describes a method for calculating the value of an interval Hv of visible light transmitting sections of the repeated shapes or visible light transmitting sections of a plurality of holes that abut one another in a vertical direction of the parallax barrier, based on the value of the distance L3n as a predetermined distance from the position close to the parallax barrier among the two kinds of such positions where one line of horizontal moiré is seen, away and close to the parallax barrier, to the parallax barrier.

Similarly to the predetermined horizontal moiré canceling position (L3), at L3n, as illustrated in FIG. 37, the subject person of image presentation sees subpixels at the lower end of the display through the visible light transmitting sections of the parallax barrier, when the viewpoint shifts to the upward direction, the subject person of image presentation sees, instead of the subpixels that are supposed to be seen from L3, subpixels thereabove through the visible light transmitting sections. Then, when virtual subpixels 16 are assumed above the upper end of the display seen through the visible light transmitting section that transmits visible light when seeing subpixels at the upper end of the display from L3, the subject person of image presentation eventually sees the virtual subpixels 16. As such a cycle occurs once, it is considered that moiré is generated once at L3n.

First, the following describes the number Mv of units of the visible light transmitting sections of the repeated shapes or the visible light transmitting sections of a plurality of holes in a vertical direction between the visible light transmitting section of the above described shape for the subpixels at the upper end of the display and the visible light transmitting section of the above described shape for the subpixels at the lower end of the display.

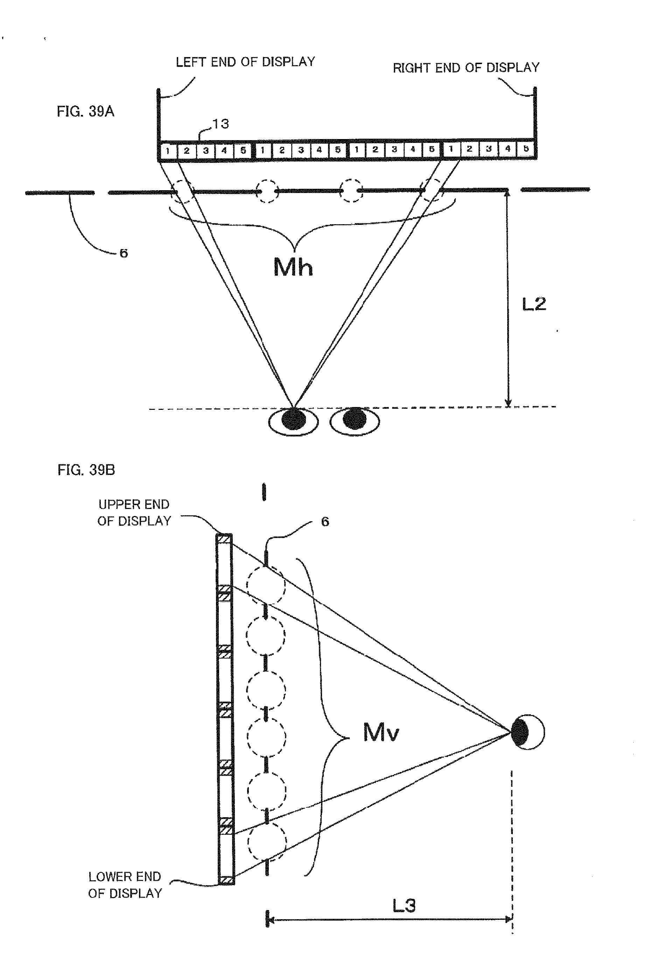

It should be noted that, as shown in FIG. 39B, Mv is the number of visible light transmitting sections of a parallax barrier that is required to attain a stereoscopic effect of a stereoscopic image when the subject person of image presentation at one of the predetermined horizontal moire canceling position (L3) sees all pixels for stereoscopic display that display images of the same viewpoint on the display.

The "number of units of visible light transmitting sections of the repeated shape" herein means, for example, if the shape of the slits as visible light transmitting sections of the parallax barrier is elliptic arcs, the number of how many elliptic arcs are formed along each slit corresponding to the arrangement of the pixels for stereoscopic display that display images for the same viewpoint. Also, the "number of visible light transmitting sections of a plurality of holes" means the number of how many visible light transmitting sections of holes are formed corresponding to the arrangement of pixels for stereoscopic display that display images for the same viewpoint. Also, Jr indicates a vertical resolution of the display.

Therefore, Mv can be expressed by a formula: $Jr \times \beta$.
$$Mv = Jr \times \beta$$

When the value of L3n is a predetermined value, based on this value, the interval Hv of a plurality of vertically abutting visible light transmitting sections that constitute a parallax barrier is calculated.

That is, as seen from FIG. 37, there is a relationship between [Hv (Mv - 1)] : [(Jr - 1/$\beta$+ 1) $\times$ Pv] and Z : (Z + L3n) as expressed by the following formula:
$$\frac{H v \times (M v - 1)}{L\,3\,n} = \frac{(J\,r - \tfrac{1}{\beta} + 1) \times P\,v}{Z + L\,3\,n}$$

Therefore, Hv can be calculated by the following formula:
$$H v = \frac{(J\,r - \tfrac{1}{\beta} + 1) \times P\,v \times L\,3\,n}{(Z + L\,3\,n) \times (M v - 1)}$$

Next, when the shape of the edge of the slits as the visible light transmitting sections constituting the parallax barrier is a staircase pattern, or the shape of repeated circular arcs, elliptic arcs, or polygons, or the shape of the visible light transmitting section constituting the parallax barrier is a plurality of independently formed holes, the following describes a method for calculating the value of an interval Hv of visible light transmitting sections of the repeated shapes or visible light transmitting sections of a plurality of holes that abut one another in a vertical direction of the parallax barrier, based on the value of a distance L3f as a predetermined distance from the position away from the parallax barrier among the two kinds of such positions where one line of horizontal moiré is seen, away and close to the parallax barrier, to the parallax barrier.

Similarly to the predetermined horizontal moiré canceling position (L3), while, at L3f, as illustrated in FIG. 38, the subject person of image presentation sees subpixels at the lower end of the display through the visible light transmitting sections of the parallax barrier, when the viewpoint shifts to the upward direction, the subject person of image presentation sees, instead of the subpixels that are supposed to be seen from L3, subpixels therebelow through the visible light transmitting sections. Then, through the visible light transmitting section that transmits visible light when seeing subpixels at the upper end of the display from L3, the subject person of image presentation eventually sees the subpixels below the upper end of the display. As such a cycle occurs once, it is considered that moire is generated once at L3n.

When the value of L3f is defined as a predetermined value, based on this value, the interval Hv of a plurality of vertically abutting visible light transmitting sections that constitute a parallax barrier is calculated.

That is, as seen from FIG. 38, there is a relationship between [Hv $\times$ (Mv - 1)] : [(Jr - 1/$\beta$ - 1) $\times$ Pv] and Z : (Z + L3f) as expressed by the following formula:

$$\frac{H v \times (M v - 1)}{L\,3\,f} = \frac{(J\,r - \tfrac{1}{\beta} - 1) \times P\,v}{Z + L\,3\,f}$$

Therefore, Hv can be expressed by the following formula:
$$H v = \frac{(J\,r - \tfrac{1}{\beta} - 1) \times P\,v \times L\,3\,f}{(Z + L\,3\,f) \times (M v - 1)}$$

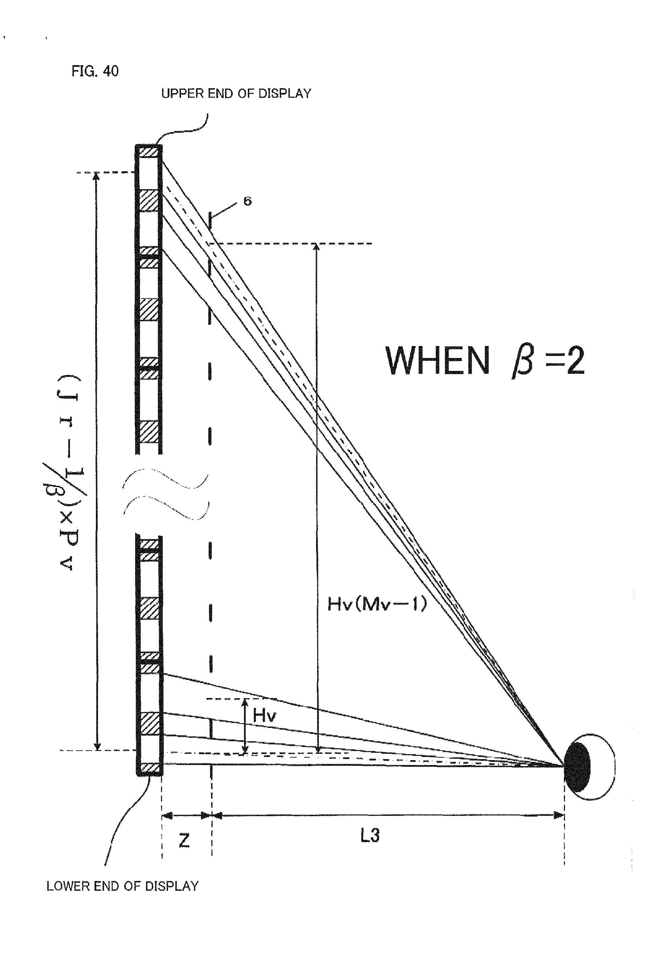

It should be noted that, if $\beta$ = 2, the relationship between [Hv $\times$ (Mv - 1)] and [(Jr - 1/$\beta$) $\times$ Pv] becomes a relationship as shown in FIG. 40.

It is preferable that, if the interval of vertically abutting subpixels is defined as Hpv, the value of Hv is a value that satisfies the relationship of an equation: Hv = Hpv/$\beta$ ($\beta$ is a natural number).

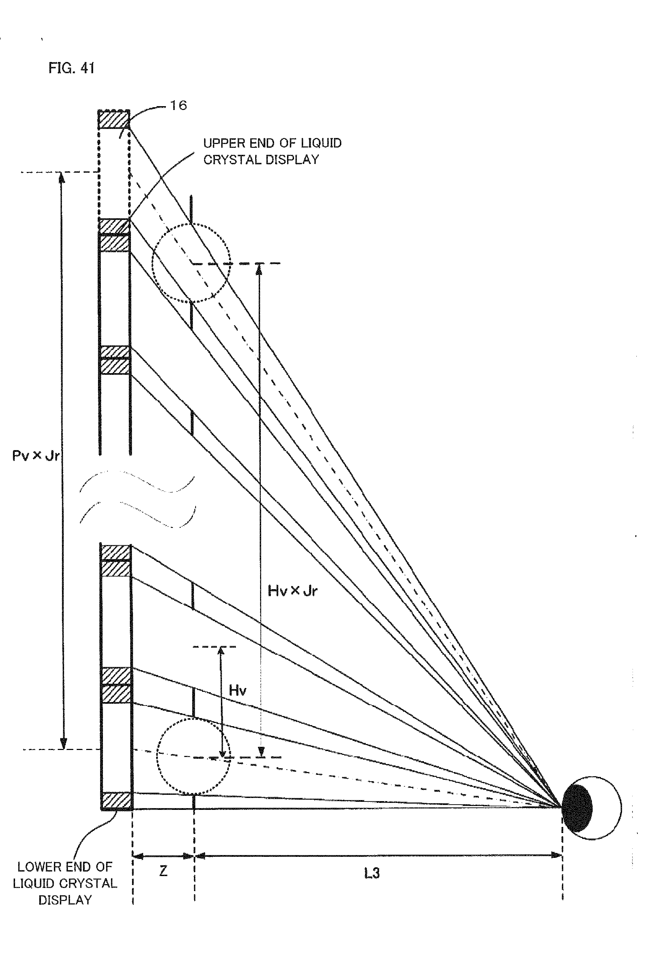

The values of L3n and L3f can also be determined based on the value of L3, which will be described with reference to FIGS. 41 to 43.

In FIG. 41, if a vertical resolution Jr is multiplied by the height Pv of each subpixel, a distance from the lower end of the display to the upper end of the display can be obtained. Thus, a distance from the center of the subpixel at the lower end of the display to the center of a virtual subpixel 16 above the upper end of the display can also be expressed by (Pv × Jr).

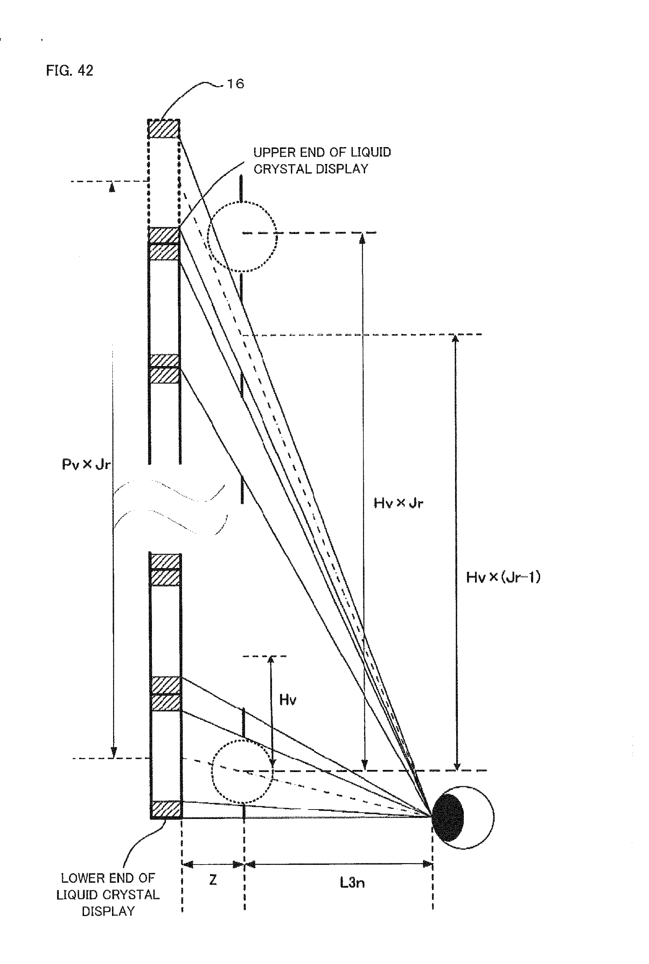

Also, if Jr is multiplied by the interval Hv of the vertically abutting visible light transmitting sections, a distance from the center of the visible light transmitting section corresponding to a subpixel at the lower end of the display to the center of the visible light transmitting section corresponding to a virtual subpixel 16 above the upper end of the display when seen from a moiré canceling position can be obtained: (Hv × Jr). Next, with reference to FIG. 42, L3n is calculated.

As one line of vertical moiré is recognized by a subject person of image presentation at L3n, while the number of visible light transmitting sections of a parallax barrier through which the subject person of image presentation sees a stereoscopic image is smaller than the number of subpixels of a vertical direction by one, the subject person of image presentation sees all subpixels through the visible light transmitting sections.

Therefore, L3n is a point where a cycle of vertical moiré generation occurs once.

Thus, the distance from the center of the visible light transmitting section of a parallax barrier corresponding to the subpixel at lower end of the display to the visible light transmitting section of the parallax barrier corresponding to the virtual subpixel 16 above the upper end of the display when seen from L3n can be expressed as Hv × (Jr - 1).

Here, by assigning Hv of the above formula (4) into this formula, the following formula can be expressed:

$$\left(\frac{L3 \times Pv}{L3 + Z}\right) \times (Jr - 1)$$

Also, as seen from FIG. 42, there is a relationship between L3n : (L3n + Z) and

$$\left(\frac{L3 \times Pv}{L3 + Z}\right) \times (Jr - 1) \; : \; (Pv \times Jr)$$

as expressed by the following formula:

$$\frac{L3n}{\left(\frac{L3 \times Pv}{L3 + Z}\right) \times (Jr - 1)} = \frac{L3n + Z}{Pv \times Jr}$$

$$\therefore \frac{L3n \times (L3 + Z)}{(L3 \times Pv) \times (Jr - 1)} = \frac{L3n + Z}{Pv \times Jr}$$

EP 2 544 455 A1

$$\therefore L3n \times (L3+Z) \times (Pv \times Jr)$$
$$= (L3n+Z) \times (Jr-1) \times (L3 \times Pv)$$

$$\therefore L3n \times (L3+Z) \times Jr$$
$$= (L3n+Z) \times (Jr-1) \times L2$$

$$\therefore L3n \times (L3+Z) \times Jr$$
$$= L3n \ (Jr-1) \ L3+Z \ (Jr-1) \ L3$$

$$\therefore L3n \ \{ (L3 \times Jr) + (Z \times Jr) - (Jr \times L3) + L3 \}$$
$$= Z \ (Jr-1) \ L3$$

Therefore, L3n can be expressed by the following formula:
$$\therefore L3n = \frac{Z \ (Jr-1) \ L3}{ZJr+L3}$$

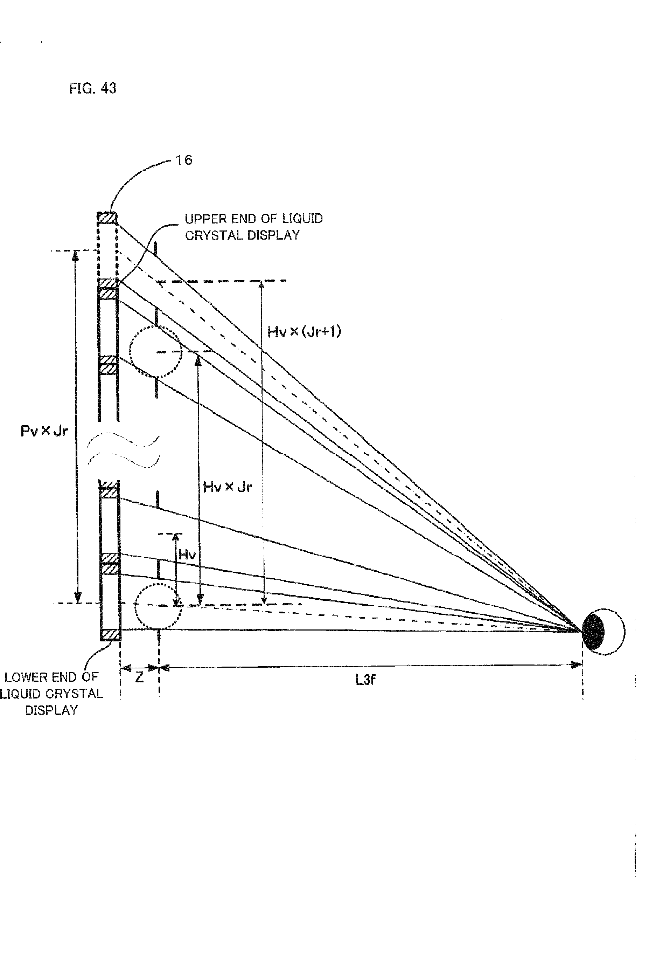

Next, with reference to FIG. 43, based on the value of L3, the value of L3f can be calculated.

As one line of vertical moiré is recognized by a subject person of image presentation from L3f, while the number of visible light transmitting sections of a parallax barrier through which the subject person of image presentation sees a stereoscopic image is greater than the number of subpixels of a vertical direction by one, the subject person of image presentation sees all subpixels through the visible light transmitting sections.

Thus, the distance from the center of a visible light transmitting section of a parallax barrier corresponding to the subpixel at the lower end of the display to a visible light transmitting section of the parallax barrier corresponding to the virtual subpixel 16 above the upper end of the display when seen from L3f can be expressed as Hv × (Jr + 1).

Therefore, similarly to the way of calculating L3n, L3f can be calculated by the following formula:
$$L3f = \frac{Z \ (Jr+1) \ L3}{ZJr-L3}$$

It should be noted that the range from L3n to L3f is the appropriate moiré canceling range in a vertical direction.

Here, the following describes an embodiment in which a 40-inch full high definition autostereoscopic display of is used. In such a case, the horizontal resolution Ir is defined as 1920 and the vertical resolution Jr is defined as 1080.

The width Ph of the subpixel is set as 0.15375 mm, a distance L1 from the parallax barrier to the most appropriate stereoscopically viewable position is set as 2500 mm, the number of viewpoints N is set as five viewpoints, a distance W between the pupils of the left and right eyes of a subject person of image presentation is set as 65 mm, a horizontal resolution Ir is set as 1920, and a vertical resolution Jr is set as 1080. Also, distances L2 and L3 from the parallax barrier to the diagonal and horizontal moire canceling positions are respectively 2500 mm. It should be noted that, while L1, L2, and L3 are the same values in this embodiment, L1, L2, and L3 do not necessarily be the same values.

Also, a distance αPh between the centers of pixels for stereoscopic display that display images for neighboring viewpoints is defined as 1Ph, and the width Vh of an effective viewable area seen by one eye of a subject person of image presentation through visible light transmitting sections of a parallax barrier is defined as 1.2Ph.

Therefore, the values of αPh and Vh become the following values:

$$\alpha Ph = 1 \times 0.15375$$
$$= 0.15375$$

$$Vh = 1.2 \times 0.15375$$
$$= 0.1845$$

Next, the value of the distance Z is calculated by the following formula:

$$Z = \frac{\alpha Ph \times L1}{W}$$

$$Z = \frac{0.15375 \times 2500}{65}$$
$$\fallingdotseq 5.9$$

Next, Sh is calculated based on the calculated values of Z and Vh.

$$Sh = \frac{65 \times 0.1845}{65 + 0.15375}$$

$$\fallingdotseq 0 \cdot 18406$$

It should be noted that how short Sh is in relation to Vh is obtained by the following formula:

$$\frac{Sh}{Vh} \times 100 = \frac{0.18406}{0.1845} \times 100$$

$$\fallingdotseq 99.76\%$$

Next, when the shape of the edge of the slits as visible light transmitting sections constituting the parallax barrier is a staircase pattern, or the shape of repeated circular arcs, elliptic arcs, or polygons, or the shape of the visible light transmitting sections constituting the parallax barrier is a plurality of independently formed holes, the value of the height Sv of the visible light transmitting section of the repeated shape or the visible light transmitting section of the plurality of holes is calculated.

The value of the height Vv of an effective viewable area of the parallax barrier is defined as $\varepsilon \times$ Pv. It should be noted that $\varepsilon$ is a range of subpixels that can be seen through Sv, that is, a coefficient indicating a ratio of the height Vv of an effective viewable area with the subpixel of height Pv. In other words, $\varepsilon$ is an aperture ratio of a parallax barrier in a vertical direction. In this embodiment, $\varepsilon$ is set as 0.9.

Also, under the premise that the autostereoscopic display uses R, G, and B three subpixels to constitute one pixel, and one pixel is a square, Pv is defined as 3Pv (= 0.46125).

Also, the number P of units of visible light transmitting sections of the repeated shape or visible light transmitting sections of a plurality of holes in a vertical direction corresponding to one subpixel is set as one.

Therefore, the value of Vv becomes the following value:

$$Vv = 0.9 \times 0.46125$$
$$= 0.415125$$

Also, the value of Sv becomes the following value:

$$Sv = \frac{L1 \times Vv}{L1 + Z}$$

$$Sv = \frac{2500 \times 0.415125}{2500 + 5.9}$$

$$\fallingdotseq 0.41414$$

It should be noted that how short Sv is in relation to the value of Vv is expressed by the following formula:

$$\frac{Vv}{Sv} \times 100 = \frac{0.41414176}{0.9 \times 3 \times 0.15375} \times 100$$

$$\fallingdotseq 99.76\%$$

Next, based on the value of the distance L2 from a predetermined diagonal moiré canceling position to the parallax barrier, an interval Hh of horizontally abutting plurality of slit regions constituting the parallax barrier can be calculated by the following formula:

$$H h = \frac{N \times \alpha P h \times L2}{Z + L2}$$

$$H h = \frac{5 \times 0.15375 \times 2500}{5.9 + 2500}$$

$$\fallingdotseq 0.76694$$

It should be noted that how short Hh is in relation to N × αPh is expressed by the following formula:
$$\frac{H h}{N \times \alpha P h} \times 100 = \frac{0.76694 0022}{5 \times 0.15375} \times 100$$

$$\fallingdotseq 99.76\%$$

Also, the value of the interval Hh of horizontally abutting plurality of slit regions constituting the parallax barrier can be calculated using either value among two kinds of such positions from which one line of diagonal moire is seen, away from and close to the parallax barrier to the parallax barrier,: a predetermined distance L2n from a position closer to the parallax barrier to the parallax barrier; or a value of a predetermined distance L2f from a position away from the parallax barrier to the parallax barrier.
As one example, the value of Hh is calculated by setting a predetermined value of L2n as 1000 mm and the value of L2f as 3000 mm.
First, the value of the number Mh of visible light transmitting sections in a horizontal direction between a visible light transmitting section of the parallax barrier corresponding to a staircase patterned RGB pixel unit at the left end of the display to a visible light transmitting section of the parallax barrier corresponding to a staircase patterned RGB pixel unit at the right end of the display when seen from a predetermined diagonal moiré canceling position can be calculated by the following formula:
$$M h = \text{int} \left( \frac{3 I r - 1}{N} \right) + 1$$

$$M h = \text{int} \left( \frac{3 \times 1920 - 1}{5} \right) + 1$$

$$= 1152$$

Therefore, based on the value of L2n (1000 mm), the value of Hh can be calculated by the following formula:
$$Hh = \frac{N \times Mh \times \alpha Ph \times L2n}{(Z + L2n) \times (Mh - 1)}$$

$$Hh = \frac{1 \times 5 \times 1152 \times 0.15375 \times 1000}{(5.9 + 1000) \times (1152 - 1)}$$

$$\fallingdotseq 0.76490$$

Also, based on the value of L2f (3000 mm), the value of Hh can be calculated by the following formula:
$$Hh = \frac{N \times (Mh - 2) \times \alpha Ph \times L2f}{(Z + L2n) \times (Mh - 1)}$$

$$Hh = \frac{1 \times 5 \times (1152 - 2) \times 0.15375 \times 3000}{(5.9 + 3000) \times (1152 - 1)}$$

$$\fallingdotseq 0.76657$$

It should be noted that the value of L2n can be determined based on the value of the diagonal moiré canceling position L2.
That is, when the value of L2 is set as 2500 mm, L2n becomes the following value:
$$\therefore L2n = \frac{(Z \times L2)(3Ir - N)}{3ZIr + NL2}$$

$$L2n = \frac{(5.9 \times 2500)(3 \times 1920 - 5)}{3 \times 5.9 \times 1920 + 5 \times 2500}$$

$$\fallingdotseq 1826$$

Also, the value of L2f can be determined based on the value of the diagonal moiré canceling position L2.
That is, when the value of L2 is 2500 mm, L2f becomes the following value:
$$L2f = \frac{(Z \times L2)(3Ir + N)}{3ZIr - NL2}$$

$$L2f = \frac{(5.9 \times 2500)(3 \times 1920 + 5)}{3 \times 5.9 \times 1920 - 5 \times 2500}$$

$$\fallingdotseq 3958$$

Next, when the shape of the edge of the slits as visible light transmitting sections constituting the parallax barrier is a staircase pattern, or the shape of repeated circular arcs, elliptic arcs, or polygons, or the shape of the visible light transmitting sections constituting the parallax barrier is a plurality of independently formed holes, the value of the interval Hv of the vertically abutting visible light transmitting sections of the repeated shape or visible light transmitting sections of the plurality of holes is calculated as follows.

It should be noted that, in this embodiment, one visible light transmitting section of the parallax barrier is provided for one subpixel, and the value of β is one.

Thus, the value of Hv can be calculated by the following formula:

$$Hv = \frac{Pv \times L3}{(Z + L3) \times \beta}$$

$$Hv = \frac{0.46125 \times 2500}{(5.9 + 2500) \times 1}$$

$$\fallingdotseq 0.46016$$

It should be noted that how short Hv is in relation to the value of Pv is expressed by the following formula:

$$\frac{Hv}{Pv} \times 100 = \frac{0.46016}{0.46125} \times 100$$

$$\fallingdotseq 99.98\%$$

Also, the value of the interval Hv of the visible light transmitting sections of the repeated shape or the visible light transmitting sections of a plurality of holes that abut one another in a vertical direction can be calculated based on either value among two kinds of such positions from which one line of horizontal moire is seen, away from and close to the parallax barrier, to the parallax barrier,: a predetermined distance L3n from the position closer to the parallax barrier to the parallax barrier or a predetermined distance L3f from the position away from the parallax barrier to the parallax barrier.

As an example, the value of Hv is calculated by setting a predetermined value of L3n as 1000 mm and the value of L3f as 3000 mm.

As the value of β is defined as one in this embodiment, when seen from a predetermined horizontal moiré canceling position, the value of the number Mv of units of the visible light transmitting sections of the repeated shape or the visible light transmitting sections of a plurality of holes that abut one another in a vertical direction between a visible light transmitting section of the shape corresponding to a subpixel at the upper end of the display and a visible light transmitting section of the shape corresponding to a subpixel at the lower end of the display becomes the following value:

$$Mv = Jr \times \beta$$

$$Mv = 1080 \times 1 = 1080$$

The value of Hv can be calculated by the following formula based on the value of L3n (1000 mm).

$$Hv = \frac{(Jr - 1/\beta + 1) \times Pv \times L3n}{(Z + L3n) \times (Mv - 1)}$$

$$Hv = \frac{(1080 - 1/1 + 1) \times 0.46125 \times 1000}{(5.9 + 1000) \times (1080 - 1)}$$

$$\fallingdotseq 0.45896$$

Also, the value of Hv can be calculated by the following formula based on the value of L3f (3000 mm).

$$Hv = \frac{(Jr - 1/\beta - 1) \times Pv \times L3f}{(Z + L3f) \times (Mv - 1)}$$

$$Hv = \frac{(1080 - 1/1 - 1) \times 0.46125 \times 3000}{(5.9 + 3000) \times (1080 - 1)}$$

$$\fallingdotseq 0.45991$$

It should be noted that the value of L3n can also be determined based on the value of the horizontal moiré canceling position L3.

That is, when the value of L3 is set as 2500 mm, L3 becomes the following value:

$$\therefore L3n = \frac{Z(Jr-1)L3}{ZJr+L3}$$

$$L3n = \frac{5.9 \times (1080-1) \times 2500}{5.9 \times 1080 + 2500}$$

$$\fallingdotseq 1793$$

It should be noted that the value of L3f can be determined based on the value of the horizontal moiré canceling position L3.
That is, when the value of L3 is set as 2500 mm, L3f becomes the following value:
$$L3f = \frac{Z(Jr+1)L3}{ZJr-L3}$$

$$L3f = \frac{5.9 \times (1080+1) \times 2500}{5.9 \times 1080 - 2500}$$

$$\fallingdotseq 4118$$

Next, an appropriate stereoscopically viewable area is calculated.
The shortest distance L1n in the appropriate stereoscopically viewable area becomes the following value:
$$L1n = \frac{Z \times W}{Vh}$$

$$L1n = \frac{5.9 \times 65}{0.1845}$$

$$\fallingdotseq 2078$$

The longest distance L1f in the appropriate stereoscopically viewable area becomes the following value:
$$L1f = \frac{2 \times Z \times W}{Vh}$$

$$L1f = \frac{2 \times 5.9 \times 65}{0.15375}$$

$$\fallingdotseq 4988$$

Therefore, an appropriate stereoscopically viewable area becomes a range from 2078 mm to 4988 mm.

It should be noted that, when calculation is performed by setting Vh as 1.2 Ph, L1n : L1 becomes a relationship approximately 0.8 : 1.

Here, the following describes the second embodiment of the invention in a case in which a 40-inch full high definition autostereoscopic display is used.

In the second embodiment, a case in which L1n (the shortest distance to the most appropriate stereoscopically viewable area), L2n (the shortest distance to the diagonal moiré canceling range), and L3n (the shortest distance to the horizontal moiré canceling range) are set as the same distances, will be described.

It should be noted that, as described above, as L1n, L2n, and L3n are based on different concepts, it is not limited to the case in which all these values are set as the same distances as in this embodiment.

In this case, similarly to the first embodiment, the horizontal resolution Ir is set as 1920, the vertical resolution Jr is set as 1080, the width Ph of the subpixel is set as 0.15375 mm, the height of the subpixel is set as 0.46125 mm, the number of viewpoints N is set as five viewpoints, the distance W between the pupils of the left and right eyes of a subject person of image presentation is set as 65 mm, the distance from the parallax barrier to the most appropriate stereoscopically viewable position is set as 2500 mm, the distance $\alpha$Ph between the centers of pixels for stereoscopic display that display images for neighboring viewpoints is set as 0.15375 mm, the width Vh of an effective viewable area seen by one eye of the subject person of image presentation through visible light transmitting sections of the parallax barrier is set as 0.1845 mm, and the height Vv of the effective viewable area seen by the subject person of image presentation through the visible light transmitting sections of the parallax barrier is set as 0.415125 mm.

Also, the value of the number Mh of visible light transmitting sections in a horizontal direction between the visible light transmitting section of the parallax barrier corresponding to a staircase patterned RGB pixel block at the left end of the display and the visible light transmitting section of the parallax barrier corresponding to a staircase patterned RGB pixel block at the right end of the display when seen from a predetermined diagonal moiré canceling position is set as 1152, the number $\gamma$ of visible light transmitting sections corresponding to one subpixel in a horizontal direction is set as one, and the number $\beta$ of units of visible light transmitting sections of the repeated shape or visible light transmitting sections of a plurality of holes in a vertical direction corresponding to one subpixel is set as one.

First, with regard to L1n, L1n can be calculated by the following formula using Z, W, and Vh.

$$L1n = \frac{Z \times W}{Vh}$$

Therefore, L1n becomes the following value:

$$L1n = \frac{5.\ 9 \times 6\ 5}{0.\ 1\ 8\ 4\ 5}$$

$$\fallingdotseq 2\ 0\ 7\ 8$$

It should be noted that, in such a case, L1f (the longest distance to the appropriate stereoscopic viewable area) becomes the following value:

$$L1f = \frac{2 \times Z \times W}{Vh}$$

$$L1f = \frac{2 \times 5.\ 9 \times 6\ 5}{0.\ 1\ 5\ 3\ 7\ 5}$$

$$\fallingdotseq 4\ 9\ 8\ 8$$

That is, the appropriate stereoscopically viewable area is a range from 2078 mm to 4988 mm.

Thus, L2n and L3n are also set as 2078 mm which is the same distance as L1n.

Next, a distance Z from the image display surface of the display to the parallax barrier is calculated.

The value of Z can be calculated based on the value of L1n:

$$Z = \frac{Vh \times L1n}{W}$$

Therefore, Z becomes the following value:

$$Z = \frac{0.\ 1\ 8\ 4\ 5 \times 2\ 0\ 7\ 8}{6\ 5}$$

$$\fallingdotseq 5.\ 9$$

Next, the interval Hh of the horizontally abutting visible light transmitting sections is calculated.

The value of Hh can be calculated based on the value of L2n:

$$Hh = \frac{N \times Mh \times \alpha Ph \times L2n}{(Z + L2n) \times (Mh - 1)}$$

Therefore, Hh becomes the following value:

36

$$H h = \frac{5 \times 1152 \times 0.15375 \times 2078}{(5.9 + 2078) \times (1152 - 1)}$$

$$\fallingdotseq 0.76723$$

Next, the interval Hv of the vertically abutting visible light transmitting sections is calculated.

The value of Hv can be calculated based on the value of L3n:

$$H v = \frac{(J r - \frac{1}{\beta} + 1) \times P v \times L 3 n}{(Z + L 3 n) \times (M v - 1)}$$

Therefore, Hv becomes the following value:

$$H v = \frac{(1080 - \frac{1}{1} + 1) \times 0.46125 \times 2087}{(5.9 + 2087) \times (1080 - 1)}$$

$$\fallingdotseq 0.46037$$

Next, the width Sh of the visible light transmitting section of the parallax barrier is calculated.

The value of Sh can be calculated based on the following formula:

$$S h = \frac{\frac{Z \times W}{\alpha P h} \times V h}{\frac{Z \times W}{\alpha P h} + Z} = \frac{Z \times W \times V h}{(Z \times W) + (Z \times \alpha h P)}$$

$$S h = \frac{W \times V h}{W + \alpha h P}$$

Therefore, Sh becomes the following value:

$$S h = \frac{65 \times 0.1845}{65 + 0.15375}$$

$$= 0.18406$$

Next, the height Sv of the visible light transmitting section of the parallax barrier is calculated.

The value of Sv can be calculated based on the following formula:
$$S_v = \frac{L1 \times Vv}{L1 + Z}$$

Therefore, Sv becomes the following value:
$$S_v = \frac{2500 \times 0.415125}{2500 + 5.9}$$

$$\fallingdotseq 0.41414$$

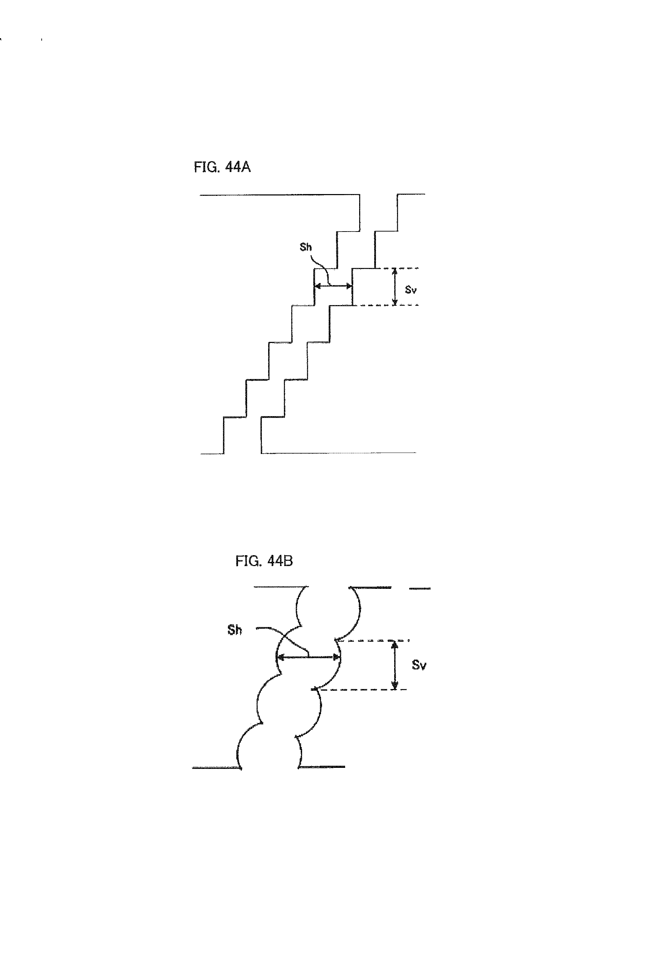

FIG. 44A to 49E are diagrams illustrating an example of the shape of a slit of a parallax barrier.

FIG. 44A and 44B are diagrams showing cases in which the shape of the edge of the slit is a staircase pattern. Here, the shape of the edge of the slit is a staircase pattern refers to a case as shown in FIG. 44A, and the shape of the edge of the slit is arcs refers to a case as shown in FIG. 44B.

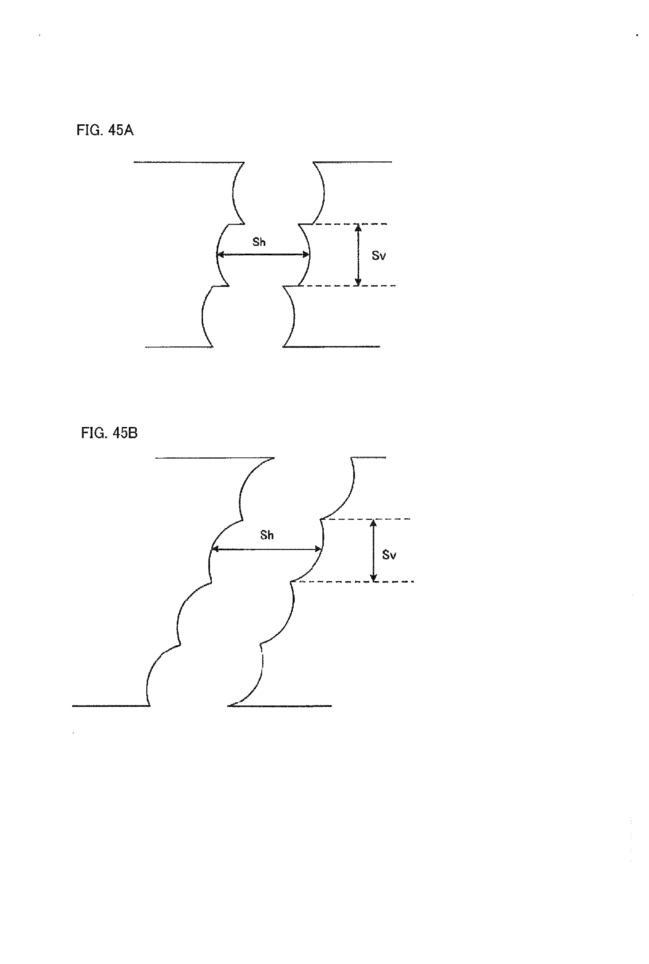

Also, the case in which the shape of the edge of the slit is elliptic arcs refers to a case as shown in an example of FIGS. 45A and 45B.

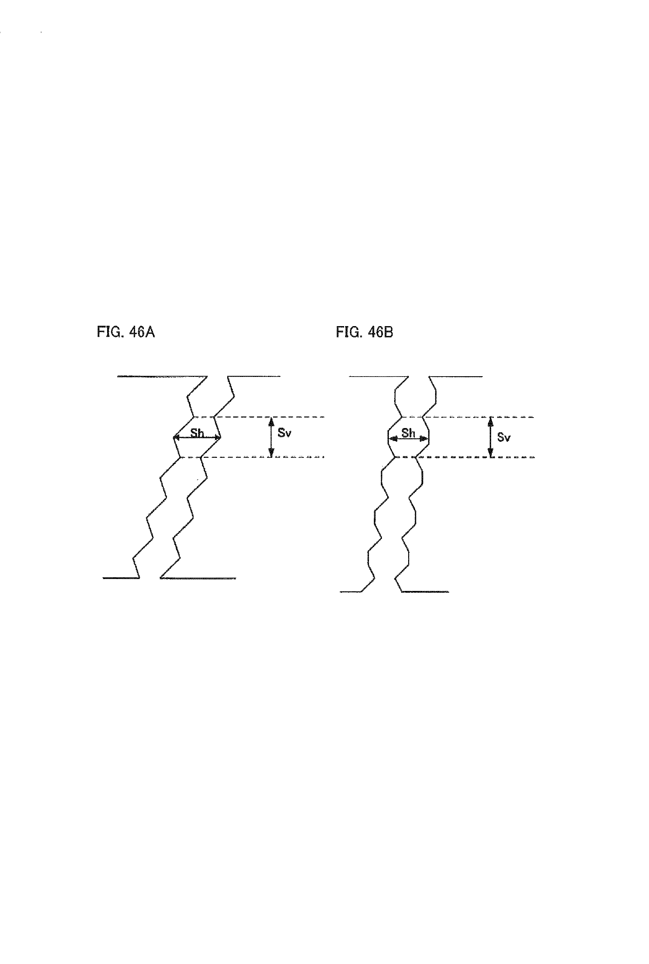

Also, the case in which the shape of the edge of the slit is a shape in which apertures of polygons are concatenated refers to a case as shown in an example of FIGS. 46A and 46B.

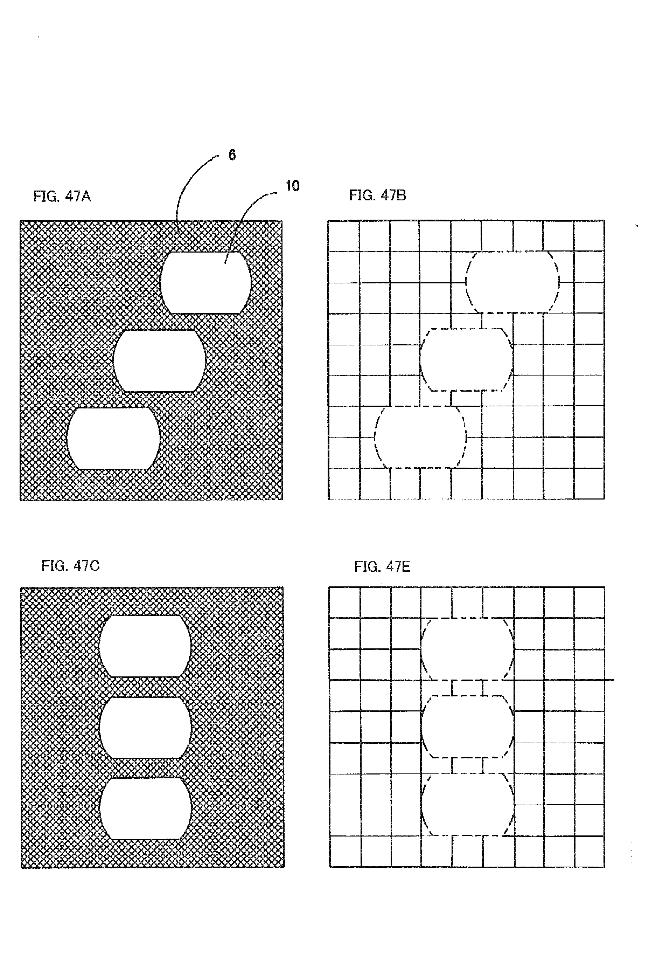

Also, the case in which the shape of the visible light transmitting sections is apertures of a plurality of independently formed holes refers to a case in which, as shown in an example of FIGS. 47A to 47E, 48A to 48G, and 49A to 49E, the holes are formed by surrounding the visible light transmitting sections with mask part of the parallax barrier.

It should be noted that the invention is not limited to the embodiments described above, and a variety of combinations are possible within a scope indicated in the appended claims. Embodiments that can be obtained by combining, as necessarily, technical means that are disclosed in respective different embodiments are also included in the technical scope of the invention.

Industrial Applicability

The invention can provide a highly practical stereoscopic image display system, that is most appropriate for development of stereoscopic technologies, with extremely low costs.

Description of Numerals and Signs

1    OBJECT

2    FOCAL POINT

3    CAMERA

5    VIEWPOINT IMAGE

6    PARALLAX BARRIER

7    STEREOSCOPIC IMAGE

9    PIXEL UNIT

11 STAIRCASE PATTERNED RGB PIXEL UNIT

12 STAIRCASE PATTERNED RGB PIXEL BLOCK

14 VIRTUAL IMAGE

15 INTERMEDIATE IMAGE

16 VIRTUAL SUBPIXEL

17 PARALLEL PATTERNED RGB PIXEL UNIT

19 IMAGE FRAME

21 INTERMEDIATE IMAGE GENERATION TABLE

23 STEREOSCOPIC IMAGE GENERATION TABLE

31 INTERMEDIATE IMAGE GENERATION DEVICE

33 CENTRAL PROCESSING UNIT

35 STORAGE DEVICE

41 FIRST INFORMATION PROCESSING DEVICE

43 COMPRESSION DEVICE

45 TRANSMITTING DEVICE

47 SECOND INFORMATION PROCESSING DEVICE

49 EXTRACTION DEVICE

51 RECEIVING DEVICE

61 STEREOSCOPIC IMAGE GENERATION DEVICE

63 IMAGE OUTPUT DEVICE

65 STEREOSCOPIC IMAGE DISPLAY DEVICE

67 VIDEO CABLE

69 CONTROL CABLE

71 PIXEL INFORMATION

73 PIXEL MATRIX

75 ORIGINAL IMAGE FILE

77 PIXEL EMBEDDED IMAGE FILE

**Claims**

**1.** An intermediate image generation method that generates a plurality of intermediate images that are used for generating a stereoscopic image that is converted from images of a plurality of viewpoints that are imaged and/or drawn from a plurality of viewpoints from a first to an Nth viewpoint,

in order to generate the stereoscopic image by repeatedly arranging staircase patterned RGB pixel blocks that are made by continuously arraying staircase patterned RGB pixel units from the first viewpoint to Nth viewpoint in a horizontal direction, the staircase patterned RGB pixel units being made by arraying subpixels in a diagonal direction over three rows in a manner in which the subpixels mutually contact at their corners,

the intermediate image generation method comprising the steps of:

calculating R values, G values, and B values of the subpixels constituting the staircase patterned RGB pixel units by interpolating from R, G, B values of subpixels constituting at least one pixel unit arranged, in the images of the plurality of viewpoints, around a location corresponding to a location where the subpixels constituting the staircase patterned RGB pixel units are arranged; and

generating the intermediate images for respective plurality of viewpoints by arranging parallel patterned RGB pixel units that are made by arranging the subpixels constituting the staircase patterned RGB pixel units in a horizontal direction in an order from R, G, to B in accordance with an arrangement rule that integrates and arranges the parallel patterned RGB pixel units for each of the plurality of viewpoints,

thereby, equalizing a total number of the staircase patterned RGB pixel units of the stereoscopic image to a total number of the parallel patterned RGB pixel units of the plurality of intermediate images, or equalizing a total number of subpixels constituting the staircase patterned RGB pixel units to a total number of subpixels constituting the parallel patterned RGB pixel units.

2.  The intermediate image generation method according to Claim 1, wherein
    the staircase patterned RGB pixel units each has one subpixel column per row and comprises three of the subpixels having R value, G value, and B value; and
    the parallel patterned RGB pixel units each comprises the three subpixels by arraying three subpixel columns in a row in an order from R, G to B.

3.  The intermediate image generation method according to Claim 1, wherein
    the staircase patterned RGB pixel units each has two subpixel columns per row and each of the two columns comprises three of the subpixels having R value, G value, and B value; and
    in the parallel patterned RGB pixel units, three subpixels arrayed over three rows in a first column of the staircase patterned RGB pixel units are arrayed over three columns in an order from R, G, to B, and, by horizontally abutting the array, three subpixels arrayed over three rows in a second column of the staircase patterned RGB pixel units are arrayed over three columns in an order from R, G, to B.

4.  The intermediate image generation method according to Claim 1, wherein
    the staircase patterned RGB pixel units each has three subpixel columns per row and each column of the three columns comprises three of the subpixels having R value, G value, and B value; and
    in the parallel patterned RGB pixel units, three subpixels arrayed over three rows in a first column of the staircase patterned RGB pixel units are arrayed in one row in an order from R, G, to B, three subpixels arrayed over three rows in a second column of the staircase patterned RGB pixel units are arrayed in an order from R, G, to B by horizontally abutting said array, and, by further abutting the array, three subpixels in a third column of the staircase patterned RGB pixel units are arrayed in an order from R, G, to B.

5.  The intermediate image generation method according to Claim 1, wherein
    by arranging the plurality of intermediate images in a manner in which the intermediate images are vertically equally divided at least in three into first to third rows and arranged in a pattern of a plurality of tiles as an image frame,
    the subpixels constituting the staircase patterned RGB pixel units and the subpixels constituting the parallel patterned RGB pixel units become the same number in both horizontal and vertical directions in the stereoscopic image and in the image frame where the plurality of intermediate images are arranged.

6.  The intermediate image generation method according to Claim 5, wherein
    in a case in which the plurality of viewpoints are two viewpoints, two-third of the intermediate image of a first viewpoint are arranged in a tile of the first row, one-third of the intermediate image of the first viewpoint are arranged in a first tile of the second row, one-third of the intermediate image of a second viewpoint are arranged in a second tile of the second row abutting the one-third of the intermediate image of the first viewpoint, and two-third of the intermediate image of the second viewpoint are arranged in a tile of the third row;

in a case in which the plurality of viewpoints are three viewpoints, the intermediate image of each viewpoint is arranged in a tile of each row;

in a case in which the plurality of viewpoints are four to six viewpoints, the intermediate images of first to third viewpoints are arranged in first tiles of respective rows, and the intermediate images of a rest of the viewpoints are arranged in tiles of first to third rows abutting the intermediate images of the first to third viewpoints;

in a case in which the plurality of viewpoints are seven to nine viewpoints, the intermediate images of first to third viewpoints are arranged in first tiles of respective rows, the intermediate images of fourth to sixth viewpoints are arranged in tiles of the first to third rows abutting the intermediate images of the first to third viewpoints, and the intermediate images of a rest of the viewpoints are arranged in tiles of the first to third rows abutting the intermediate images of the fourth to sixth viewpoints; and

even in a case in which the plurality of viewpoints are ten viewpoints or more, part of or whole intermediate images are sequentially arranged from a first viewpoint in tiles of respective rows in a similar way.

7. The intermediate image generation method according to Claim 1, wherein
the parallel patterned RGB pixel units are generated by arraying subpixels constituting the staircase patterned RGB pixel units by, instead of the arrangement rule, referring to an intermediate image generation table that is created in advance and associates positions of the subpixels constituting the staircase patterned RGB pixel units of the stereoscopic image with positions of subpixels constituting the parallel patterned RGB pixel units of the intermediate image for each of the plurality of viewpoints.

8. The intermediate image generation method according to Claim 1, wherein
in a case in which each of the images of the plurality of viewpoints and the stereoscopic image have the same aspect ratio,
among the staircase patterned RGB pixel units from the first to Nth viewpoints constituting the staircase patterned RGB pixel blocks,
R values, G values, and B values of the subpixels constituting the staircase patterned RGB pixel units of a predefined reference viewpoint are calculated by interpolating from R, G, B values of subpixels constituting a pixel unit arranged, in a viewpoint image of the reference viewpoint, around a location corresponding to a location where the subpixels constituting the staircase patterned RGB pixel units are arranged, and
R values, G values, and B values of the subpixels constituting the staircase patterned RGB pixel units of other than the reference viewpoint are calculated by interpolating from R, G, B values of subpixels constituting at least one pixel unit arranged, in viewpoint images of viewpoints other than the reference viewpoint, around a location corresponding to a location where the subpixels constituting the staircase patterned RGB pixel units of the reference viewpoint are arranged.

9. An intermediate image generation device for generating a plurality of intermediate images by the method according to Claim 1,
the intermediate image generation device comprising at least:

a central processing unit; and
a storage device,

wherein, in order to generate the stereoscopic image by repeatedly arranging staircase patterned RGB pixel blocks that are created by continuously arraying staircase patterned RGB pixel units from the first viewpoint to Nth viewpoint in a horizontal direction, the staircase patterned RGB pixel units being made by arraying subpixels in a diagonal direction over three rows in a manner in which the subpixels mutually contact at their corners,
the central processing unit

calculates R values, G values, and B values of the subpixels constituting the staircase patterned RGB pixel units by interpolating from R, G, B values of subpixels constituting at least one pixel unit arranged, in the images of the plurality of viewpoints stored in the storage device, around a location corresponding to a location where the subpixels constituting the staircase patterned RGB pixel units are arranged;
arranges the parallel patterned RGB pixel units, in which subpixels constituting the staircase patterned RGB pixel units are arrayed in a horizontal direction in an order from R, G, to B, in accordance with an arrangement rule for integrating and arranging the parallel patterned RGB pixel units for each of the plurality of viewpoints; and
generates intermediate images of the plurality of viewpoints that are constituted by the parallel patterned RGB pixel units, a total number of which is the same as the staircase patterned RGB pixel units of the stereoscopic image, or a total number of subpixels constituting each of which is the same as the one of the staircase patterned RGB pixel units.

10. A stereoscopic image generation method that is a method for generating a stereoscopic image from a plurality of intermediate images generated by the method of Claim 1, wherein

the stereoscopic image is generated from the intermediate images of the plurality of viewpoints by arranging subpixels constituting the parallel patterned RGB pixel units as the staircase patterned RGB pixel units according to a reverse order of the arrangement rule.

11. A stereoscopic image generation method according to the stereoscopic image generation method of Claim 10, wherein

subpixels constituting the parallel patterned RGB pixel units are arrayed in the staircase patterned RGB pixel units by, instead of the arrangement rule, referring to a stereoscopic image generation table that is created in advance and associates positions of the subpixels constituting the parallel patterned RGB pixel units of the intermediate images of the respective plurality of viewpoints with positions of the subpixels constituting the staircase patterned RGB pixel units of the stereoscopic image.

12. A stereoscopic image generation device for generating a stereoscopic image from a plurality of intermediate images according to the method of Claim 10,
the stereoscopic image generation device comprising at least:

a central processing unit; and
a storage device,

wherein the central processing unit stores the intermediate images of the respective plurality of viewpoints in the storage device, and
generates the stereoscopic image from the intermediate images of the respective plurality of viewpoints by arranging subpixels constituting the parallel patterned RGB pixel units as the staircase patterned RGB pixel units in accordance with a reverse order of the arrangement rule.

13. A stereoscopic image generation system comprising:

a first information processing device that comprises at least a central processing unit, a storage device, a compression device, and a transmitting device, and generates a plurality of intermediate images that are used for generating a stereoscopic image that is converted from images of a plurality of viewpoints that are imaged and/or drawn from a plurality of viewpoints from a first viewpoint to an Nth viewpoint; and
a second information processing device that comprises at least a central processing unit, a storage device, an extraction device, and a receiving device, and generates a stereoscopic image from the plurality of intermediate images, wherein,

in order to generate the stereoscopic image by repeatedly arranging staircase patterned RGB pixel blocks that are created by continuously arraying staircase patterned RGB pixel units from the first viewpoint to Nth viewpoint in a horizontal direction, the staircase patterned RGB pixel units being made by arraying subpixels in a diagonal direction over three rows in a manner in which the subpixels mutually contact at their corners,
the central processing unit of the first information processing device:

calculates R values, G values, and B values of the subpixels constituting the staircase patterned RGB pixel units by interpolating from R, G, B values of subpixels constituting at least one pixel unit arranged, in the images of the plurality of viewpoints stored in the storage device of the first information processing device, around a location corresponding to a location where the subpixels constituting the staircase patterned RGB pixel units are arranged;
arranges the subpixels constituting the staircase patterned RGB pixel units in a horizontal direction in an order from R, G, to B in accordance with an arrangement rule that integrates and arranges the parallel patterned RGB pixel units for each of the plurality of viewpoints;
generates intermediate images of the plurality of viewpoints that are constituted by the parallel patterned RGB pixel units, a total number of which are the same as the staircase patterned RGB pixel units of the stereoscopic image, or a total number of subpixels constituting each of which are the same as the one of the staircase patterned RGB pixel units;
compresses the intermediate images of the plurality of viewpoints by the compression device; and

transmits to the second information processing device through the transmitting device, and

the central processing unit of the second information processing device:

receives the intermediate images of the plurality of viewpoints transmitted from the first information processing device by the receiving device;
extracts the intermediate images of the plurality of viewpoints by the extraction device; and
generates the stereoscopic image from the intermediate images of the plurality of viewpoints extracted by the extraction device by arranging subpixels constituting the parallel patterned RGB pixel units as the staircase patterned RGB pixel units in accordance with a reverse order of the arrangement rule.

FIG. 1A

31 INTERMEDIATE IMAGE GENERATION DEVICE

33 CENTRAL PROCESSING UNIT

35 STORAGE DEVICE

FIG. 1B

61 STEREOSCOPIC IMAGE GENERATION DEVICE

33 CENTRAL PROCESSING UNIT

35 STORAGE DEVICE

FIG. 1C

41 FIRST INFORMATION PROCESSING DEVICE

33 CENTRAL PROCESSING UNIT

45 TRANSMITTING DEVICE

35 STORAGE DEVICE

43 COMPRESSION DEVICE

47 SECOND INFORMATION PROCESSING DEVICE

33 CENTRAL PROCESSING UNIT

51 RECEIVING DEVICE

35 STORAGE DEVICE

49 EXTRACTION DEVICE

65 STEREOSCOPIC IMAGE DISPLAY DEVICE

EP 2 544 455 A1

## FIG. 2A

INFORMATION PROCESSING

STORE IMAGES OF A PLURALITY OF VIEWPOINTS — S201

CONTROL INFORMATION INPUT? — S202 → NO

YES — S203

GENERATE STEREOSCOPIC IMAGE

GENERATE INTERMEDIATE IMAGE — S204

STORE INTERMEDIATE IMAGE — S205

END

## FIG. 2B

INFORMATION PROCESSING

STORE IMAGES OF A PLURALITY OF VIEWPOINTS — S201

CONTROL INFORMATION INPUT? — S202 → NO

YES — S203

ASSUME STEREOSCOPIC IMAGE

GENERATE INTERMEDIATE IMAGE — S204

STORE INTERMEDIATE IMAGE — S205

END

## FIG. 2C

INFORMATION PROCESSING

STORE IMAGES OF A PLURALITY OF VIEWPOINTS — S201

CONTROL INFORMATION INPUT? — S202 → NO

YES — S203

GENERATE STEREOSCOPIC IMAGE

GENERATE INTERMEDIATE IMAGE — S204

COMPRESS INTERMEDIATE IMAGE — S205

STORE INTERMEDIATE IMAGE — S206

TRANSMIT INTERMEDIATE IMAGE — S207

RECEIVE INTERMEDIATE IMAGE — S208

EXTRACT INTERMEDIATE IMAGE — S209

GENERATE STEREOSCOPIC IMAGE — S210

END

FIG. 3

EP 2 544 455 A1

FIG. 4

EP 2 544 455 A1

FIG. 5A

U    SUBPIXEL COORDINATE SYSTEM

(U,V)

H

W

FIG. 5B

x    PIXEL COORDINATE SYSTEM

(x,y)

y

y=n

y=n+1

x=n    x=n+1    x=n+2

FIG. 5C

$P_1(x_1,y_1)$    $P_2(x_2,y_2)$

$\gamma$    $P(x,y)$

$\alpha$    $\beta$

$\delta$

$P_3(x_3,y_3)$    $P_4(x_4,y_4)$

FIG. 6

## FIG. 7A

## FIG. 7B

FIG. 8

1ST COLUMN

2ND COLUMN

19

1ST
ROW

2ND
ROW

3RD
ROW

15

EP 2 544 455 A1

EP 2 544 455 A1

FIG. 9A

FIG. 9B

52

FIG. 10

FIG. 11A

FIG. 11B

FIG. 11C

FIG. 12

FIG. 13

- SCANNING METHOD
- TRANSMISSION METHOD
- RESOLUTION
- NUMBER OF VIEWPOINTS
- PIXEL ARRANGEMENT METHOD, ETC.

FIG. 14A

FIG. 14B

FIG. 15

FIG. 16

Nth FRAME

6
5
4
3
2
1

SECOND
FRAME

6
5
4
3
2
1

FIRST
FRAME

6
5
4
3
2
1

FIG. 17A

71

FIG. 17B

| C₁ | C₂ | C₃ | C₄ | C₅ | C₆ | C₇ | C₈ | C₉ | C₁₀ | C₁₁ | C₁₂ | C₁₃ | C₁₄ | C₁₅ | C₁₆ |

71

FIG. 18A

71

FIG. 18B

73

FIG. 18C

| $C_{m-2 \cdot n-2}$ | $C_{m-2 \cdot n-1}$ | $C_{m-2 \cdot n}$ | $C_{m-2 \cdot n+1}$ | $C_{m-2 \cdot n+2}$ |
|---|---|---|---|---|
| $C_{m-1 \cdot n-2}$ | $C_{m \cdot n}$ | $C_{m \cdot n}$ | $C_{m \cdot n}$ | $C_{m-1 \cdot n+2}$ |
| $C_{m \cdot n-2}$ | $C_{m \cdot n}$ | $C_{m \cdot n}$ | $C_{m \cdot n}$ | $C_{m \cdot n+2}$ |
| $C_{m+1 \cdot n-2}$ | $C_{m \cdot n}$ | $C_{m \cdot n}$ | $C_{m \cdot n}$ | $C_{m+1 \cdot n+2}$ |
| $C_{m+2 \cdot n-2}$ | $C_{m+2 \cdot n-1}$ | $C_{m+2 \cdot n}$ | $C_{m+2 \cdot n+1}$ | $C_{m+2 \cdot n+2}$ |

73

FIG. 19A

71

FIG. 19B

73

FIG. 19C

| $C_{m-2 \cdot n-2}$ | $C_{m-2 \cdot n-1}$ | $C_{m-2 \cdot n}$ | $C_{m-2 \cdot n+1}$ | $C_{m-2 \cdot n+2}$ |
|---|---|---|---|---|
| $C_{m-1 \cdot n-2}$ | $C_{m-1 \cdot n-1}$ | $C_{m-1 \cdot n}$ | $C_{m-1 \cdot n+1}$ | $C_{m-1 \cdot n+2}$ |
| $C_{m \cdot n-2}$ | $C_{m \cdot n-1}$ | $C_{m \cdot n}$ | $C_{m \cdot n+1}$ | $C_{m \cdot n+2}$ |
| $C_{m+1 \cdot n-2}$ | $C_{m+1 \cdot n-1}$ | $C_{m+1 \cdot n}$ | $C_{m+1 \cdot n+1}$ | $C_{m+1 \cdot n+2}$ |
| $C_{m+2 \cdot n-2}$ | $C_{m+2 \cdot n-1}$ | $C_{m+2 \cdot n}$ | $C_{m+2 \cdot n+1}$ | $C_{m+2 \cdot n+2}$ |

73

$$C_{m-1 \cdot n-1} = \frac{C_{m-1 \cdot n-1} + C_{m \cdot n}}{2}$$

$$C_{m+1 \cdot n-1} = \frac{\frac{C_{m+1 \cdot n-2} + C_{m+2 \cdot n-2} + C_{m+2 \cdot n-1}}{3} + C_{m \cdot n}}{2}$$

FIG. 20A

71

FIG. 20B

73

FIG. 20C

73

$$C_{1 \cdot n-1} = \frac{C_{1 \cdot n-2} + C_{1 \cdot n}}{2}$$

$$C_{2 \cdot n-1} = \frac{\dfrac{C_{2+1 \cdot n-2} + C_{3 \cdot n-2} + C_{3 \cdot n-1}}{3} + C_{1 \cdot n}}{2}$$

$$C_{1 \cdot n-1} = \frac{C_{1 \cdot n-2} + C_{1 \cdot n} \times 2}{2}$$

$$C_{2 \cdot n-1} = \frac{\dfrac{C_{2+1 \cdot n-2} + C_{3 \cdot n-2} + C_{3 \cdot n-1}}{3} + C_{1 \cdot n} \times 2}{2}$$

FIG. 21

1 RECORD

| R | B | G | : READING POSITION |

READING REGION

EX.
BLACK = 000 011
R = 100 011
G = 010 011
B = 001 011
C = 011 011
M = 101 011
Y = 110 011
WHITE = 111 011

CUT OFF REGION

C0~C23 : DETERMINATION CODE   EX. 000100010001011101110111

ABOVE CODES ARE ALSO USED FOR HARDWARE AND SOFTWARE CLASSIFICATION, VERSION, AND SECURITY.

C 0 1 2 3 4 5
C 6 7 8 9 10 11
C 12 13 14 15 16 17
C 18 19 20 21 22 23
C 24 25 26 27 28 29

C24~ C29 : PARITY CHECK

C24=C0+C6+C12+C18    EX. 111111
C25=C1+C7+C13+C19
C26=C2+C8+C14+C23
C27=C3+C9+C15+C24
C28=C4+C10+C16+C25
C29=C5+C11+C17+C26

FIG. 22

EP 2 544 455 A1

C30~C41 : = N IMAGE NUMBER
= 0 NO IMAGE NUMBER

C42 : = 0 ONLY INTERMEDIATE IMAGE
= 1 MIXTURE OF INTERMEDIATE IMAGE& NORMAL PLANAR IMAGE

C43~C44 : INTERMEDIATE IMAGE IDENTIFIER
= 1 IMAGE INFORMATION IS STORED IN THE LEADING FRAME OF THE BEGINNING OF INTERMEDIATE IMAGE
= 2 IMAGE INFORMATION IS STORED IN THE LAST FRAME OF THE END OF INTERMEDIATE IMAGE
= 3 IMAGE INFORMATION IS STORED IN ALL FRAMES

C45~C55 : = W HORIZONTAL RESOLUTION
C56~C66 : = H VERTICAL RESOLUTION

C67 : = 0 TILE FORMAT
: = 1 MULTI-STREAMING FORMAT

C68 : = 0 NORMAL TILE FORMAT
: = 1 ORIGINAL TILE FORMAT

C69~C73 : = N NUMBER OF TILES AND NUMBER OF MULTI-STREAMING

C74~C78 : = M NUMBER OF VIEWPOINTS OF STEREOSCOPIC PIXEL ARRANGEMENT
= 0 FOLLOW OTHER CONTROL INFORMATION

C79~C81 : = N NUMBER OF ROWS CONSTITUTING ONE PIXEL

C82~C84 : = L NUMBER OF SUBPIXELS CONSTITUTING ONE PIXEL

C85~C87 : = K NUMBER OF REPEATED PIXEL ARRANGEMENT

C88 : DIRECTION OF PIXEL 1 = 0 R L
= 1 L R

C88~C89 : = D1 NUMBER OF SUBPIXELS PERTURBED BY CONNECTION LOCATION OF PIXELS

C90 : DIRECTION OF PIXEL 2 = 0 R L
= 1 L R

C91~C92 : = D2 NUMBER OF SUBPIXELS PERTURBED BY CONNECTION LOCATION OF PIXELS

C93 : DIRECTION OF PIXEL 3 = 0 R L
= 1 L R

C94~C95 : = D3 NUMBER OF SUBPIXELS PERTURBED BY CONNECTION LOCATION OF PIXELS

C96~C101 : PARITY CHECK

C96 = C36+C36+C42+C48+C54+C60+C66+C72+C78+C84+C90
C97 = C31+C37+C43+C49+C55+C61+C67+C73+C79+C85+C91
C98 = C32+C33+C44+C50+C56+C62+C68+C74+C80+C86+C92
C99 = C22+C23+C45+C51+C57+C63+C69+C75+C81+C87+C93
C100 = C34+C40+C46+C52+C58+C64+C70+C76+C82+C88+C94
C101 = C35+C41+C47+C53+C59+C65+C71+C77+C83+C89+C95

FIG. 23

```
                    ┌─────────────────┐
                    (      START       )
                    └─────────────────┘
                             │
                             │
                    ┌─────────────────┐
                    │  RECEIVE IMAGE   │
                    └─────────────────┘
                             │
                    ┌─────────────────┐
                    │ ANALYZE HEADER   │
                    └─────────────────┘
                             │
                       ╱─────────╲          NO
                     ╱ IMAGE       ╲──────────────┐
                    ╱ INFORMATION   ╲             │
                     ╲  DEFINED?    ╱             │
                       ╲─────────╱               │
                          YES                     │
                           │                      │
              ┌─────────────────┐    ┌─────────────────┐
              │ ANALYZE IMAGE   │    │ OUTPUT PLANAR   │
              │  INFORMATION    │    │     IMAGE       │
              └─────────────────┘    └─────────────────┘
                       │                      │
              ┌─────────────────┐        ╱────────╲        NO
              │ OUTPUT          │       ╱  IMAGE    ╲──────────┐
              │ STEREOSCOPIC    │       ╲  ENDS?    ╱          │
              │ IMAGE BASED ON  │        ╲────────╱
              │ VIDEO IMAGE     │           YES
              │ INFORMATION     │
              └─────────────────┘
```

FIG. 24

FIG. 25

$$\alpha \, Ph = 1 Ph$$

FIG. 26

FIG. 27

$$\lambda = 1 \diagup 2$$

FIG. 28

LEFT END OF DISPLAY       RIGHT END OF DISPLAY

$$\alpha N \times (Mh - 1) \times \alpha Ph$$

$Hh$

$Hh \times (Mh - 1)$

$Z$

$L2$

4

71

FIG. 29

LEFT END
OF DISPLAY

RIGHT END
OF DISPLAY

$$\alpha N \times (M h - 1) \times \alpha P h$$

13

$$z$$

6

$$H h \times (M h - 1)$$

$$M h = \operatorname{int}\left(\frac{3 \, I \, r - 1}{N}\right) + 1$$

FIG. 31

LEFT END OF DISPLAY

RIGHT END OF DISPLAY

$$\alpha N \times (Mh - 2) \times \alpha Ph$$

13

$$Hh$$

$$Hh \times (Mh - 1)$$

$$Z$$

6

$$L2f$$

FIG. 32

LEFT END OF DISPLAY

RIGHT END OF DISPLAY

FIG. 33

$$H h \times (M h - 1)$$

L2n

L2

L2f

APPROPRIATE MOIRE CANCELLING RANGE

14

6

FIG. 34

FIG. 35A

$$\beta = 1$$

FIG. 35B

$$\beta = 2$$

FIG. 35C

$$\beta = 1 / 3$$

FIG. 35D

$$\beta = 1$$

FIG. 35E

$$\beta = 2$$

FIG. 35F

$$\beta = 1 / 3$$

FIG. 36

UPPER END OF DISPLAY

$$\left( J\,r - \tfrac{1}{\beta} \right) \times P\,v$$

$Hv$

$Hv(Mv-1)$

$Z$

$L3$

LOWER END OF DISPLAY

EP 2 544 455 A1

FIG. 37

16

UPPER END OF DISPLAY

$( \mathrm{J} \; \mathrm{r} - \dfrac{1}{\beta} + 1 ) \times \mathrm{P} \, \mathrm{v}$

Hv(Mv−1)

Hv

LOWER END OF DISPLAY

Z

L3n

80

FIG. 38

UPPER END OF DISPLAY

$(J_r - 1) \times \frac{g}{1_r} - 1)$

$Hv(Mv-1)$

$Hv$

$Z$

$L3f$

LOWER END OF DISPLAY

FIG. 39A

LEFT END OF DISPLAY

RIGHT END OF DISPLAY

13

| 1 | 2 | 3 | 4 | 5 | 1 | 2 | 3 | 4 | 5 | 1 | 2 | 3 | 4 | 5 | 1 | 2 | 3 | 4 | 5 |

6

Mh

L2

FIG. 39B

UPPER END
OF DISPLAY

6

Mv

LOWER END
OF DISPLAY

L3

FIG. 40

UPPER END OF DISPLAY

6

WHEN $\beta = 2$

$(Jr - \frac{1}{\beta}) \times Pv$

$Hv(Mv-1)$

$Hv$

$Z$

$L3$

LOWER END OF DISPLAY

FIG. 41

UPPER END OF LIQUID
CRYSTAL DISPLAY

16

$Pv \times Jr$

$Hv \times Jr$

$Hv$

$Z$

$L3$

LOWER END OF
LIQUID CRYSTAL
DISPLAY

FIG. 42

16

UPPER END OF LIQUID CRYSTAL DISPLAY

$Pv \times Jr$

$Hv \times Jr$

$Hv \times (Jr-1)$

$Hv$

$Z$

$L3n$

LOWER END OF LIQUID CRYSTAL DISPLAY

FIG. 43

UPPER END OF LIQUID
CRYSTAL DISPLAY

16

$Hv \times (Jr+1)$

$Pv \times Jr$

$Hv \times Jr$

Hv

LOWER END OF
LIQUID CRYSTAL
DISPLAY

Z

L3f

FIG. 44A

FIG. 44B

FIG. 45A

FIG. 45B

EP 2 544 455 A1

FIG. 46A                          FIG. 46B

89

FIG. 47A

FIG. 47B

FIG. 47C

FIG. 47E

FIG. 48A

FIG. 48B

Sh

Sv

Sh

Sv

FIG. 48C

8

FIG. 48D

FIG. 48E

FIG. 48F

FIG. 48G

R

G

B

R

G

R

G

B

R

G

FIG. 49A

FIG. 49B

FIG. 49C

FIG. 49D

FIG. 49E

FIG. 50

| 4 | 5 | 1 | 2 | 3 | 4 | 5 | 1 | 2 | 3 |

Z

L2n

L2n

L2f

APPROPRIATE
MOIRE CANCELLING
RANGE

APPROPRIATE MOIRE
CANCELLING RANGE

Z

L3n

L3

L3f

FIG. 51

| INTERNATIONAL SEARCH REPORT | International application No. |
| --- | --- |
| | PCT/JP2011/055278 |

**A. CLASSIFICATION OF SUBJECT MATTER**
*H04N13/00*(2006.01)i

According to International Patent Classification (IPC) or to both national classification and IPC

**B. FIELDS SEARCHED**

Minimum documentation searched (classification system followed by classification symbols)
H04N13/00-15/00

Documentation searched other than minimum documentation to the extent that such documents are included in the fields searched
Jitsuyo Shinan Koho    1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2010/007787 A1 (Kenji YOSHIDA), 21 January 2010 (21.01.2010), paragraphs [0288] to [0406], [0887] to [0893]; fig. 15 to 25, 99 & EP 2312375 A1 | 1-13 |
| A | JP 2004-179806 A (Matsushita Electric Industrial Co., Ltd.), 24 June 2004 (24.06.2004), abstract; paragraphs [0002] to [0007], [0038] to [0055]; fig. 1 to 8 (Family: none) | 1-13 |
| A | JP 2004-191570 A (Toshiba Corp.), 08 July 2004 (08.07.2004), paragraphs [0018] to [0047]; fig. 1 to 9 (Family: none) | 1-13 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11 May, 2011 (11.05.11) | 24 May, 2011 (24.05.11) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2011/055278

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-086506 A (Sanyo Electric Co., Ltd.), 31 March 2005 (31.03.2005), abstract; paragraphs [0006] to [0017]; fig. 1 to 7 & EP 1515178 A1 & US 2005/0052529 A1 & CN 1595226 A | 1-13 |

Form PCT/ISA/210 (continuation of second sheet) (July 2009)

**EP 2 544 455 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004191570 A
- JP 2004179806 A